(19) Europäisches Patentamt
European Patent Office
Office européen des brevets

(11) **EP 1 995 333 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(21) Anmeldenummer: 07747823.8

(22) Anmeldetag: **21.02.2007**

(51) Int Cl.:
*C21D 1/52* *(2006.01)*  *C21D 1/08* *(2006.01)*
*F23L 15/02* *(2006.01)*  *F27B 9/36* *(2006.01)*
*F27D 17/00* *(2006.01)*  *F27D 19/00* *(2006.01)*
*C21D 9/56* *(2006.01)*  *F23C 1/08* *(2006.01)*

(86) Internationale Anmeldenummer:
**PCT/RU2007/000083**

(87) Internationale Veröffentlichungsnummer:
**WO 2007/097663 (30.08.2007 Gazette 2007/35)**

(54) **METALLWÄRMEBEHANDLUNGSVERFAHREN UND -VORRICHTUNGEN**

METAL HEAT TREATING METHODS AND DEVICES

PROCÉDÉS ET DISPOSITIFS DESTINÉS AU TRAITEMENT THERMIQUE DE MÉTAUX

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.02.2006 RU 2006105992**

(43) Veröffentlichungstag der Anmeldung:
**26.11.2008 Patentblatt 2008/48**

(73) Patentinhaber:
• **Distergeft, Igor Mikhaylovich**
  **Ekaterinburg 620130 (RU)**
• **Distergeft, Ilia Igorevich**
  **Ekaterinburg 620014 (RU)**

(72) Erfinder:
• **Distergeft, Igor Mikhaylovich**
  **Ekaterinburg 620130 (RU)**
• **Distergeft, Ilia Igorevich**
  **Ekaterinburg 620014 (RU)**

(74) Vertreter: **Jeck, Anton**
**Jeck Fleck Herrmann**
**Patentanwälte**
**Postfach 14 69**
**71657 Vaihingen/Enz (DE)**

(56) Entgegenhaltungen:
WO-A1-02/21061          WO-A1-2004/029511
DE-A1- 2 041 127        DE-A1- 3 406 956
KR-A- 20040 021 243     RU-C1- 2 082 915
RU-C1- 2 094 721        RU-C1- 2 134 391
RU-C1- 2 139 944        SU-A1- 1 474 137
UA-A- 52 557            US-A- 5 957 684
US-B1- 6 880 619

• DISTERGEFT I.M. ET AL.: 'Opyt VNIIMTa v razrabotke regenerativnykh sistem otoplenya dlya metallurgicheskikh agregatov' STAL no. 7, 2000, pages 84 - 90
• KUSENKOV M.A.: 'Nagrevatelnye ustroistva kuznechnogo proizvodstva' M., MASHGIZ pages 296 - 297
• DISTERGEFT I.M. ET AL.: 'Osnovnye napravlenya rekonstruktsii kolytsevoi pechi dlya nagreva zagotovok' STAL no. 3, 2005, pages 65 - 67

EP 1 995 333 B1

## Beschreibung

Die Erfindung bezieht sich auf Verfahren zur thermischen Behandlung von Metallen und auf Vorrichtungen zur Durchführung der Verfahren.

Die Erfindung ist in der Metallurgie und dem Maschinenbau einsetzbar. Sie kann zur thermischen Behandlung von Metallen (Schmelzen, Erwärmung zur Verformung, Wärmebehandlung) in mit gasförmigem und flüssigem Brennstoff mit direkt (unmittelbar) und indirekt beheizten Flammöfen angewendet werden. In den direkt beheizten Öfen kommen die Brennstoffverbrennungsprodukte in Kontakt mit dem erwärmten Material (Werkstück), das heißt, mit Ofengicht. In den indirekt beheizten Flammöfen wird die Wärme von der Flamme und den Verbrennungsprodukten über die Wände der metallenen Strahlungsrohre bzw. Tiegel an das erwärmte Material oder Werkstück (Ofengicht) übertragen. Die Erfindung kann auch beim Ausglühen, Trocknen und bei anderer thermischer Behandlung von NichtMetallerzeugnissen, zum Beispiel Keramik, verwendet werden.

Es ist ein Verfahren zur Erwärmung (thermischen Behandlung) von Stahl in direkt beheizten Anwärme-Flammöfen (Öfen mit offener Flamme) bekannt. Dieses Verfahren beruht auf der Verbrennung von gasförmigem Treibstoffgemisch und Luft im geheizten Raum, welcher gleichzeitig Wärmeraum des Ofens ist. Dabei wird der Treibstoff für seine volle Nutzung (Verbrennung) mit einer Luftüberschusszahl nahe 1 ($\alpha \cong 1{,}0$), das heißt bei normalem stöchiometrischem Verhältnis zwischen Brennstoff und Luft, verbrannt [V.F. Kopytov, Stahlerwärmung in Öfen, Metallurgizdat, M., 1955, S. 152-153]. Dagegen wird bei $\alpha$ = 1,05 - 1,15 um das 2,25-fache mehr Luft als Treibstoff (vol.) dem Brenner zugeführt, wenn als Treibstoff z. B. ein Gemisch von Hochofen- und Erdgas (Brennwert 2000 kkal/m$^3$) verwendet wird. Wenn als Treibstoff jedoch nur Erdgas eingesetzt wird, so wird der Luftverbrauch bei gleichem $\alpha$ ungefähr um das Zehnfache (vol.) höher als der Erdgasverbrauch sein.

Der Mangel des Verfahrens besteht in erheblichen Verlusten des behandelten Metalls im Wärmeraum des Ofens wegen Abbrand. Diese Verluste entstehen infolge der oxidierenden Atmosphäre der Verbrennungsprodukte, welche auf das zu behandelnde Metall einwirken, weil der Wärmeraum mit dem sich darin befindlichen Metall gleichzeitig der beheizbare Raum des Ofens ist [s. oben, V.F. Kopytov, S. 5-6, 162-163].

Wenn der Stahl in Schmiede-, Walzwerk- und thermischen Öfen durch direkte Heizung erwärmt wird, kann der Metallabbrand 2 bis 5 % erreichen. Umgerechnet auf die Ausmaße der Stahlproduktion in Russland ergibt dies einen Verlust von mehr als 2 Mio. Tonnen Stahl pro Jahr. Dabei entstehen auch zusätzliche Kosten im Zusammenhang mit der mechanischen Behandlung und der Entzunderung der Erzeugnisse unter Einsatz von verschiedenen Verfahren, z. B. Entzunderung durch Abspritzung, Beizen, Sandstrahlanlagen, Bürsten usw.

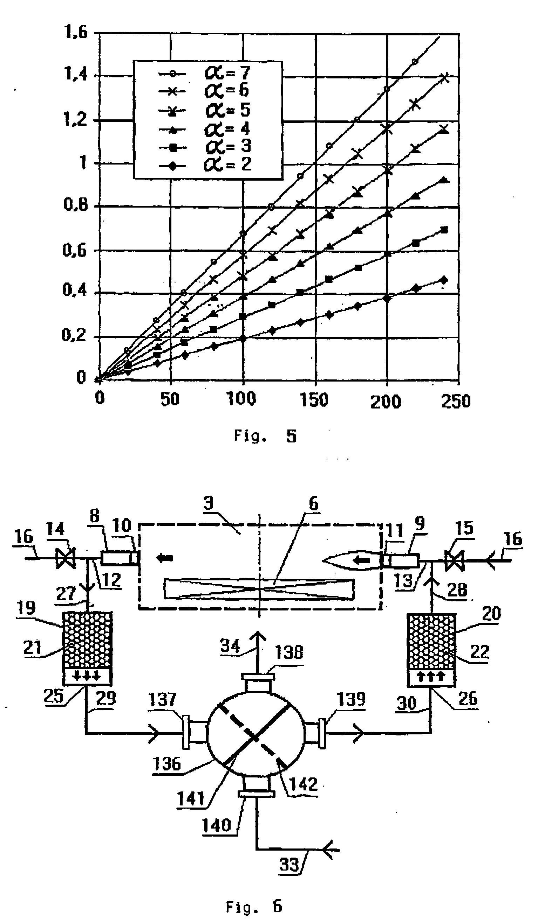

Außer dem Metallabbrand wird bei der Wärmebehandlung (thermischen Behandlung) der Metalle mit direkter Heizung mittels Verbrennung von Treibstoff mit einer Luftüberschusszahl im Bereich von 0,9 : 1,2 im Arbeitsraum des Ofens der Maximalkohlenstoffentzug aus den Oberflächenschichten der Stahlknüppel erhöht. [K.M.Pakhaluev, V.I.Medvedeva, Untersuchung der Oxidation und des Kohlenstoffentzugs der Stahle in den Erdgasverbrennungsprodukten, Sammelwerk Metallerwärmung und Funktion der Anwärmeöfen, gesammelte Werke Nr. 6, Metallurgizdat, Sverdlovsker Abteilung, 1960, S. 87, Abb. 6]. Je nach Stahlsorte und Erwärmungstemperatur kann der Kohlenstoffentzug bis zu 3,0 mm tief gehen. Der Kohlenstoffentzug aus den Oberflächenschichten der Stahlerzeugnisse verursacht eine Härteabnahme, eine Verringerung des Widerstands gegen zyklischen Belastungen und eine Verschlechterung der Schneideleistung des Werkzeugs. Die Entfernung der entkohlten Schicht in den bereits fertigen Erzeugnissen durch durchgehendes Nachputzen und Schleifen verursacht physikalische Metallverluste und eine Erhöhung der Produktionsselbstkosten.

Ein weiterer Mangel besteht darin, dass z.B. bei einer Erwärmung von Titanlegierungen nach dem genannten Verfahren nicht nur ein wesentlicher Metallabbrand, sondern auch eine ziemlich hohe Wasserstoffanreicherung der Erzeugnisse zustande kommt. So wird der Wasserstoffgehalt in einem Probestück mit einem Durchmesser von 30 mm, gefertigt aus einer Legierung Ti-5Al-1,7V, bei der Erwärmung über eine Dauer von 10 Stunden im erdgasgeheizten Elektroofen und Verbrennungsofen mit einer Luftüberschusszahl $\alpha$ = 1,25 von 0,007 % bis 0,025 %, das heißt um das 3,6-fache erhöht [S.N.Khomov, M.A.Grigoriev, S.M.Schulkin, Wasserstoffanreicherung der Titanlegierungen bei Erwärmung in Verbrennungsöfen, Verfahrenstechnik der Leichtlegierungen, Nr. 2, 1980, S. 57 : 62].

Der Wunsch, Verbrennungsöfen mit direkter und indirekter Heizung anstatt von Elektroöfen zu benutzen, ergibt sich durch die geringeren Selbstkosten der thermischen Behandlung in den Verbrennungsöfen. Die Herstellung der halbfertigen Titanknetlegierungen unter Einsatz der bekannten Verbrennungsöfen mit direkter Heizung erfordert jedoch eine wesentliche Vergrößerung der Zugaben für die mechanische Behandlung. Damit werden auch die Kosten für die Überwachung des Wasserstoffgehalts an der Oberfläche und im Querschnitt des thermisch behandelten Erzeugnisses erhöht. Die Überschreitung der Konzentration des Wasserstoffs gegenüber den höchstzulässigen und sicheren Werten verursacht einen Schlagzähigkeitsabbau und die Erhöhung der Anfälligkeit des Metalls gegenüber stationärem Fließen. Um die Wasserstoffüberschüsse aus dem Metall zu entfernen, wird ein andauerndes Vakuumtempern eingesetzt. Dies führt jedoch zu einer bedeutenden Verteuerung der Fertigware.

Um den Metallabbrand zu reduzieren und den Kohlenstoffentzug aus dem Stahl zu mindern, wurde ein Verfahren der thermischen Behandlung (Erwärmung) von Stahl in Verbrennungsöfen mit direkter Heizung vorgeschlagen und eingesetzt. Dieses Verfahren beruht auf der Verbrennung eines gasförmigen Treibstoffgemisches und Luft. Dabei wird der Treibstoff mit der Luftüberschusszahl < 1 verbrannt (die so genannte oxidationsfreie oder oxidationsarme Erwärmung) [K.M.Pakhaluev, V.I.Medvedeva, Untersuchung der Oxidation und des Kohlenstoffentzugs der Stahle in den Erdgasverbrennungsprodukten, Sammelwerk Metallerwärmung und Funktion der Anwärmeöfen, gesammelte Werke Nr. 6, Metallurgizdat, Sverdlovsker Abteilung, 1960, S. 91, und auch s. oben, V.F. Kopytov, S. 185].

Der Nachteil einer oxydationsarmen Erwärmung ist die Erhöhung des Kohlenmonoxidgehalts (CO) in den Verbrennungsprodukten infolge der unvollkommenen Verbrennung des Treibstoffs. Deswegen wird die Abdichtung der gesamten Konstruktion des Verbrennungsofens nötig. Die Gasdichtheit der Ausfütterung der Wände, der Ofendecke und der Ableitungskanäle sowie die Entwicklung der Vorrichtungen zur Nachverbrennung der Verbrennungsprodukte ist erforderlich. Dies hat beachtliche Investitionskosten und einen höheren Treibstoffverbrauch zur Folge.

Laut den veröffentlichten Forschungsergebnissen der Metalloxidationsvorgänge bei Flammenerwärmung nimmt die Menge des oxidierten Metalls bei Temperaturen von über 800 °C zu und stabilisiert sich mit der Erhöhung der Luftüberschusszahl $\alpha$ im Bereich von 0,8 bis 1,6 [K.M.Pakhaluev, V.I.Medvedeva, Untersuchung der Oxidation und des Kohlenstoffentzugs der Stahle in den Erdgasverbrennungsprodukten, Sammelwerk Metallerwärmung und Funktion der Anwärmeöfen, gesammelte Werke Nr. 6, Metallurgizdat, Sverdlovsker Abteilung, 1960, S. 80 : 91]. Früher wurden ähnliche Untersuchungen im Bereich der $\alpha$-Zahlwerte von 0,88 bis 1,32 vorgenommen [M.A. Glinkov, Walzwerk- und Schmiedeöfen, Der vereinigte wissenschaftlich-technische Verlag Sverdlovsk-Moskva, 1936, S. 44]. Laut diesen Publikationen kommt die höchste Stabilisierung der Abbrandgröße dann zustande, wenn die Luftüberschusszahl 1,2 bis 1,6 erreicht. Dabei nimmt der Metallabbrand ebenfalls mit der Erhöhung der Erwärmungstemperatur zu. Daraus ergab sich [s. oben, V.F. Kopytov, S. 182, und auch M. A. Kassenkov, Heizeinrichtungen im Schmiedebetrieb, Maschgiz, 1962, S. 159 - 160], dass die Verbrennung von Treibstoff mit einer Luftüberschusszahl höher als 1,1 bis 1,2 keine Änderung des Abbrandausmaßes bedingt. Das wird dadurch erklärt, dass "die Geschwindigkeit der Verzunderung von der Luftüberschusszahl unabhängig ist. Der Oxidationsvorgang ist nicht mehr durch die Intensität der Annäherung der Moleküle der Oxidationsgase an die Oberfläche der Erzeugnisse, sondern durch die Sauerstoffdiffusion durch die Oberflächenschicht des Zünders zum Metall hin gesteuert" [s. oben, V. F. Kopytov, S. 182]. Eine weitere Erklärung besteht darin, dass "die Zunderschicht mit Sauerstoff allmählich gesättigt wird, da die Erhöhung des Sauerstoffgehalts in den Ofengasen keinen bemerkenswerten Einfluss auf die Oxidationsgeschwindigkeit hat" [s. oben, M.A.Kassenkov, S. 159 -160].

Außerdem ist bekannt, dass beim Mischen des Treibstoffs mit Kühlluft (Raumtemperatur) die Luftüberschusszahl Grenzwerte in Bezug auf Entzündungsbedingungen ($\alpha_{Gr}$) aufweist [Gainullin F. G. und andere, Erdgas als Motorenkraftstoff für Verkehrwesen, M.: Nedra, 1986, S. 34]. Der $\alpha_{Gr}$-Wert beträgt 2,0 für Methan, 1,7 für Propan, 1,8 bis 2,0 für Erdgas, 1,65 bis 1,75 für Benzin. Folglich (wie es in der Beschreibung zum Patent der RF Nr. 2098717 steht) werden bei solchen Luftüberschusszahlen Lokalbereiche entstehen, in denen das Luft-Kraftstoff-Gemisch nicht verbrennt. Das vermindert die Wirtschaftlichkeit der Energieanlagen. Deswegen wird das Verfahren zur Verbrennung der Treibstoffe mit den genannten Kühlluftüberschusszahlen in der Praxis wenig eingesetzt.

Die Anwendung des Flammenerwärmungsvorgangs bei erhöhten Luftüberschusszahlen und bei fehlender Vorwärmung ist dabei durch den Abfall der Temperatur der Verbrennungsprodukte (und dementsprechend der Ofenbetriebstemperatur) erschwert. Der Temperaturabfall entsteht infolge der Zuführung von großen Mengen von "Kaltluft" zum Brenner und In die Brennkammer. Die Temperatur der "Kaltluft" (20 bis 30 °C) ist um ein Mehrfaches niedriger als die Temperatur der Verbrennungsprodukte.

Es ist ein Verfahren zur Heizung des Ofens mit Vorwärmungs-, Enderwärmungs- und Metallhaltekammem bekannt [Patent der RF Nr. RU 2139944], welches ein Verfahren zur thermischen Stahlbehandlung in Verbrennungsöfen mit direkter Heizung und mit Vorwärmung der Sekundärluft darstellt. Das Verfahren beruht auf der Verbrennung eines gasförmigen Treibstoffgemisches und Luft. Es umfasst:

1 die Zuführung des Treibstoffs mit nachfolgender unvollkommener Verbrennung mit Primärluftverbrauchszahlen (Primärluftüberschusszahlen) ($\alpha_1$ = 0,30 bis 0,40) über dem Zwischenherd der Enderwärmungskammer;

2 die Zuführung von Sekundärluft zur vollständigen Nachverbrennung der gesamten Menge der Produkte der unvollkommenen Verbrennung,

3 die Aufwärmung der Primärluft unter dem sehr gut wärmeleitenden Zwischenherd :

a) die Aufrechterhaltung der Temperatur der Produkte der vollkommenen Verbrennung im Arbeitsbereich der Vorwärmkammer von max. 500 - 550 °C,
b) die unvollkommene Verbrennung der 10 - 100 % des gesamten Treibstoffverbrauchs in der Enderwärmungskammer über dem Zwischenherd,
c) die vollkommene Verbrennung des übrig gebliebenen Treibstoffs unter dem Zwischenherd,

d) die Nachverbrennung der Produkte der unvollkommenen Verbrennung mittels Sekundärluft (die Produkte der unvollkommenen Verbrennung kommen aus dem Überherdbereich),

e) die Gesamtproportionierung der Treibstoff- und Luftverbrauchswerte, welche sich den stöchiometrischen Werten nähern ($\alpha_2$ beträgt 1,05 bis 1,10).

Wenn der Treibstoff über dem Zwischenherd im Unterherdraum der Enderwärmungskammer und der Haltekammer im Erwärmungsbereich unvollkommen (60 bis 100 %) verbrannt wird, dann wird nur in einigen Brennern Sekundärluft zugeführt. In den übrigen Brennern wird der Treibstoff mit $\alpha$ gleich 1,05 bis 1,10 verbrannt. Im Haltebereich werden die Brenner völlig abgeschaltet. Bei einer unvollkommenen Verbrennung (10 bis 60 %) des Treibstoffs über dem Zwischenherd im Unterherdraum der Haltezone wird eine vollkommene Treibstoffverbrennung mit Luftverbrauchszahlen (Luftüberschusszahlen) vorgenommen, welche sich den stöchiometrischen Werten nähern. In der Erwärmungszone erfolgt die Verbrennung bei sehr hohen Luftüberschüssen ($\alpha$ = 1,10 bis 2,00). Dabei wird die Überschussluft als Sekundärluft für die Nachverbrennung der Produkte der unvollkommenen Verbrennung genutzt.

Das heißt, beim Verfahren der thermischen Metallbehandlung nach dem Patent der RF Nr. RU 2139944 wird die Verbrennung des Kraftstoff-Luft-Gemisches bei einer Sekundärluftüberschusszahl bis zu 2,0 vorgenommen. In der Beschreibung zu diesem Patent wird der Luftüberschuss, welcher dem $\alpha$-Wert von 1,10 bis 2,00 entspricht, als wesentlicher Luftüberschuss bezeichnet. Außerdem, so die Beschreibung, "ist die Kraftstoffabschaltung bei einigen Brennern des Unterherdraums der Enderwärmungskammer dadurch bedingt, dass die Sekundärluft mit Verbrauchskennwerten von über 2,0 in die Brenner des Unterherdraums zugeführt wird. Nur dadurch ist die vollständige Treibstoffverbrennung und die Nachverbrennung der Produkte der unvollkommenen Verbrennung sichergestellt. Das ist jedoch mit einer wesentlichen Abmagerung des Gasluftgemisches (unter 5 % des Treibstoffs) und eventuellem Erlöschen der Brenner verbunden". Dies entspricht auch der konventionellen Überzeugung, dass es nicht notwendig und sogar unmöglich sei, bei der Erwärmung der Metalle hohe Sekundärluftüberschusszahlen zu benutzen.

Es ist ein Verfahren zur Verbrennung von Erdgas in Hochtemperaturindustrieöfen mit direkter Heizung bekannt. Es handelt sich vorwiegend um Tunnelöfen, welche zur Abröstung, insbesondere von zirkonhaltigen Erzeugnissen [Patent der RF Nr. 2099661], eingesetzt werden. Dieses Verfahren gilt als thermische Metallbehandlung im Verbrennungsofen. Es umfasst die Zuführung des Druckluftstrahls (das primäre Kraftstoff-Luft-Gemisch) innerhalb des Kraftstoffstrahls in die Brennkammer (geheizter Raum). Die Beimischung der heißen, das heißt der vorgewärmten Sekundärluft, zum primären Kraftstoff-Luft-Gemisch erfolgt in der genannten Brennkammer. Dies stellt eine bestimmte Luftüberschusszahl sicher.

Laut der Beschreibung zum Patent der RF Nr.RU 2099661 besteht das Ergebnis des Einsatzes dieses Verfahrens in der Bildung des Oxidationsmediums für die Verbrennungsprodukte im Arbeitskanal (Arbeitsbereich) des Ofens mit den zu behandelnden Erzeugnissen. Der Arbeitskanal (Arbeitsbereich) ist die Erweiterung der Brennkammer. Dabei wird die Emission des Kohlenmonoxides (CO) in die Außenluft minimiert. (Wie oben erwähnt, ist eine solche Emission auch bei oxidationsarmer Erwärmung mit Luftüberschusszahlen < 1 vorhanden). Das heißt, es wird die oben erwähnte Voreingenommenheit über den nicht vorhandenen Abbau der Oxidationsfähigkeit der Verbrennungsprodukte bei erhöhten Luftüberschusszahlen bestätigt.

Es ist auch ein Verfahren zur Treibstoffverbrennung in einem Tunnelofen [Patent der RF Nr. RU 2166161] bekannt, welches ein Heizverfahren des Tunnelflammenofens mit direkter Heizung verwendet. Das Verfahren umfasst die Verbrennung, des Treibstoff- und Luftgemisches im geheizten Raum (Brennkammer) und die Übertragung der Verbrennungsprodukte in den Arbeitsbereich des Ofens. Dieses Verfahren wird beim Glühen von Keramik-Erzeugnissen eingesetzt und kann zur Heizung des Verbrennungsofens bei einer thermischen Metallbehandlung angewendet werden. Das Verfahren schließt die Zuführung des Kraftstoff-Luft-Gemisches und der Sekundärluft in die Brennkammer ein sowie ihre Verbrennung bei Luftüberschusszahlen im Bereich von 0,75 bis 1,5. Dabei wird dem Kraftstoff-Luft-Gemisch, welches 0,1 bis 0,2 m$^3$ der vorgewärmten oder nicht vorgewärmten Primärluft pro 1 MJoule der Treibstoffenergie enthält, die Sekundärluft bei einer Temperatur von 700 : 1400 °C in der Menge von 0,1 bis 0,2 m$^3$ pro 1 MJoule der Energie beigemischt.

Das betrachtete Verfahren stellt bei $\alpha$ gleich 0,75 bis 1,0 die Bildung eines oxidationsarmen Mediums in den Verbrennungsprodukten und bei $\alpha$ gleich 1,0 bis 1,5 die Bildung eines Oxidationsmediums sicher. Die Wahl der Art des Ofenmediums wird durch seine Notwendigkeit zur Behandlung des entsprechenden Produkts bestimmt.

Die Mängel des genannten Verfahrens bei seiner Anwendung zur thermischen Metallbehandlung sind durch die Zusammensetzung der Verbrennungsprodukte (bei Benutzung des Oxidationsmediums, d. h. bei $\alpha$ gleich 1,0 bis 1,5) bedingt und umfassen;

1 das höchste Metallabbrandniveau, besonders bei erhöhten Temperaturen,

2 die Wasserstoffanreicherung (bei Benutzung des oxidationsarme Mediums), z.B. von Titan und seiner Legierungen,

3 den erhöhten Kohlenmonoxidgehalt infolge der unvollkommenen Verbrennung des Treibstoffs. Dies setzt die Notwendigkeit der Abdichtung der Konstruktion des Verbrennungsofens voraus und erfordert einen wesentlichen Investitionsaufwand und einen Mehrverbrauch an Treibstoff.

Laut der Beschreibung des betrachteten Verfahrens nach dem Patent der RF Nr.RU 2166161 ist der Bereich der $\alpha$-Werte von 0,75 bis 1,5 ausreichend für die praktische gewerbliche Anwendung. Das entspricht ebenfalls der oben erwähnten konventionellen Überzeugung, dass höhere $\alpha$-Werte bei der thermischen Behandlung der Metalle nicht erforderlich sind, sowie der Tatsache, dass es keine Angaben in der technischen Literatur über die Metallerwärmung in Verbrennungsöfen bei Luftüberschusszahlen höher als 1,6 bis 2,0 gibt.

Es ist auch ein Verfahren zur thermischen Metallbehandlung im Verbrennungsofen mit indirekter Heizung bekannt, bei welchem die Verbrennungsprodukte vom erwärmten Metall getrennt sind. Insbesondere wird eine Muffelbehandlung der Flamme vorgenommen, nämlich die Verbrennung des Treibstoff- und Luftgemisches im geheizten Raum innerhalb des Strahlungsrohrs (der Muffel) [Patent der USA Nr. US 4878480, Die Metallerwärmung im Arbeitsbereich außerhalb des Strahlungsrohrs wird mittels Strahlung von den Außenwänden des von innen erwärmten Strahlungsrohrs vorgenommen.

Bei der Benutzung dieses Verfahrens mit indirekter Heizung wird das behandelte Metall im Arbeitsbereich außerhalb des Strahlungsrohrs angeordnet. Das Metall befindet sich nicht in der Atmosphäre der Verbrennungsprodukte und wird keinem Abbrand und/oder keiner Wasserstoffanreicherung ausgesetzt, jedoch entsteht dadurch ein Metallabbrand an den Innenwänden des Strahlungsrohrs. Die Innenwände sind im geheizten Raum angeordnet und werden der Einwirkung der Verbrennungsprodukte ausgesetzt. Das verkürzt die Lebensdauer des Strahlungsrohrs und erhöht die Betriebskosten und die Selbstkosten für die Metallbehandlung. Das gilt als der Mangel des beschriebenen Verfahrens einer indirekten Strahlungserwärmung im Verbrennungsofen.

Es ist ein weiteres Verfahren zur thermischen Metallbehandlung im Verbrennungsofen mit indirekter Heizung bekannt. Nach diesem Verfahren wird die Verbrennung des Treibstoffund Luftgemisches im geheizten Raum außerhalb des Metalltiegels (der Muffel) vorgenommen. Im Arbeitsbereich des Metalltiegels wird das behandelte Metall angeordnet. Die Metallerwärmung im Arbeitsbereich innerhalb des Tiegels wird mittels Strahlung von den Innenwänden des Tiegels vorgenommen Der Arbeitsbereich des Tiegels kann auch mit Schutzgas gefüllt werden. Dieses Verfahren mit indirekter Heizung weist ähnliche Mängel auf. Die Lebensdauer des Tiegels wird verkürzt, da dessen Außenmetallwände der Einwirkung der Verbrennungsprodukte ausgesetzt sind.

Der der vorgeschlagenen Erfindung am nächsten kommende Stand der Technik (Prototyp) ist das Verfahren zur Beheizung der regenerativen Tieföfen [Urheberschein der UdSSR Nr. SU 1257110]. Dieses Verfahren ist in der Tat ein Verfahren zur thermischen Metallbehandlung im Verbrennungsofen mit direkter Heizung in Form von einem regenerativen Tiefofen. Das Verfahren beruht auf der Verbrennung des Gemisches von Treibstoff und der durch Regeneratoren vorgewärmten Luft. Nach diesem Verfahren wird die Verbrennung des Treibstoff- und Luftgemisches unmittelbar im Arbeitsraum des Ofens vorgenommen. Gemäß dem Ausführungsbeispiel dieses Verfahrens werden in den Brenner 3800 $m^3$/Stunde Hochofengas und 120 $m^3$/Stunde Erdgas sowie 4150 $m^3$/Stunde erwärmte Luft zugeführt.

Das stellt eine Luftüberschusszahl $\alpha$ von ca. 1,1 sicher. Die andere Abart des bekannten Verfahrens ist ein Verfahren zur thermischen Metallbehandlung im Verbrennungsofen mit indirekter Heizung, wonach die Verbrennung des Gemisches von Treibstoff und der erwärmten Luft im geheizten Raum eines Strahlungsrohrs vorgenommen wird [I.M. Distergeft, G. M. Druzhinin, V. I. Shsherbinin, Die Erfahrung von VNIIMT in der Entwicklung der regenerativen Heizsysteme für Hüttenanlagen, "Stahl", 2000, Nr. 7, S. 87 - 88, Fig. 5]. Die Metallerwärmung im Arbeitsbereich erfolgt mittels Konvektion von den Innenwänden des von innen erwärmten Strahlungsrohrs.

Bei den genannten Abarten des bekannten ersten Verfahrens wird die Vorwärmung der Luft, die Erhöhung der Temperatur der Verbrennungsprodukte und dementsprechend der Ofenbetriebstemperatur sowie der Abbau des Brennstoffverbrauchs sichergestellt.

Der Mangel des bekannten Verfahrens zur thermischen Metallbehandlung im Verbrennungsofen mit direkter Heizung besteht darin, dass der Abbrand und/oder die Wasserstoffanreicherung des Metalls, welches sich im beheizten Arbeitsbereich des Verbrennungsofens befindet, am höchsten ist. Der Abbrand entsteht besonders bei erhöhten Temperaturen und verursacht Metallverluste bei der thermischen Behandlung und Wasserstoffanreicherung der Metalle, vorwiegend bei Nichteisenmetallen (z.B., Titan und seiner Legierungen). Dies verschlechtert die Eigenschaften dieser Metalle. Wie die Praxis und die oben angeführten Forschungsergebnisse bestätigen, schließen, bedingt durch die dementsprechende bekannte Zusammensetzung der Verbrennungsprodukte, einen gewissen Gehalt an Kohlendioxid, Wasserdämpfe und Sauerstoff (Oxidationsmedium) an. Kohlendioxid, Wasserdämpfe und Sauerstoff führen bei der Einwirkung auf das während der thermischen Behandlung erwärmte Metall zu Abbrand und Wasserstoffanreicherung der Metalle.

Ein Mangel des bekannten Verfahrens zur thermischen Metallbehandlung im Verbrennungsofen mit indirekter Heizung ist der durch die oben genannten Ursachen bedingte Metallabbrand an den Wänden der Muffel. Die Muffel liegt im geheizten Raum des Ofens mit indirekter Heizung (der Innenoberflächen des Strahlungsrohrs oder der Außenoberflächen des Tiegels). Dies führt zu einer Verkürzung der Lebensdauer des Strahlungsrohrs (des Tiegels) und zur Erhöhung der Betriebskosten und der Selbstkosten der Metallbehandlung.

Wenn nach diesem Verfahren der thermischen Metallbehandlung im Verbrennungsofen die begrenzten Luftüberschusszahlen benutzt werden, können nur begrenzte Mengen des Treibstoff-Luft-Gemisches in den geheizten Raum des Ofens (und ins Strahlungsrohr) zugeführt werden. Das begrenzt die Bewegungsgeschwindigkeit der Verbrennungsprodukte im geheizten Raum oder innerhalb des Strahlungsrohrs. Das Ergebnis ist ein niedrigerer Wert der Konvektionskomponente des Wärmeaustausches und eine verlängerte Erwärmungszeit der behandelten Metall- und Nichtmetallerzeugnisse sowie eine herabgesetzte Ofenleistung. Die begrenzte Bewegungsgeschwindigkeit der Verbrennungsprodukte bedingt ebenfalls eine Ungleichmäßigkeit der Temperaturverteilung sowohl über den gesamten Arbeitsbereich des Ofens als auch über den Beschickungssatz (den thermisch zu behandelnden Erzeugnissen). Dadurch wird auch die Qualität der thermischen Behandlung der Erzeugnisse verringert.

Eine weitere Abart des bekannten Verfahrens stellt ein mehrstufiges Verfahren zur thermischen Metallbehandlung im Verbrennungsofen mit offener Flamme (direkte Heizung) dar. Dieses Verfahren beruht auf der Verbrennung des Gemisches von Treibstoff und vorgewärmter Luft bei einer Luftüberschusszahl bis 1,2 [s. oben, M. A. Kassenkov, S. 173 - 174, 162, 160]. Das Verfahren umfasst mindestens drei Erwärmungsstufen (stufenweise Erwärmung): Die Erwärmung bei niedrigen Temperaturen (bis zur Zwischentemperatur von 650 bis 850 °C) mit dem Halten bei der Zwischentemperatur und die Erwärmung bei hohen Temperaturen (das heißt, höher als 850 °C) bis zur Betriebstemperatur mit dem Halten der Betriebstemperatur.

Der Nachteil dieser Abart des bekannten Verfahrens mit mehrstufiger thermischer Metallbehandlung bei direkter Heizung ist ebenfalls ein hoher Metallabbrand, besonders bei erhöhten Temperaturen. Auch die Wasserstoffanreicherung, vor allem bei Nichteisenmetallen, verschlechtert die Metalleigenschaften.

Das genannte bekannte mehrstufige Verfahren zur thermischen Metallbehandlung kann auch bei indirekter Heizung unter Einsatz von Muffeln (z.B. Strahlungsrohr oder Tiegel) angewendet werden. Der Mangel bei diesem Verfahren zur thermischen Metallbehandlung im Verbrennungsofen mit indirekter Heizung ist der Metallabbrand der Wände der Muffel (Strahlungsrohrs, Tiegels). Die Muffel ist im geheizten Raum des Ofens mit indirekter Heizung angeordnet. Das verkürzt die Lebensdauer der Muffel und erhöht die Betriebskosten und die Selbstkosten der Metallbehandlung.

Darüber hinaus werden bei der Nutzung von begrenzten Luftüberschusszahlen im mehrstufigen Verfahren zur thermischen Metallbehandlung im Verbrennungsofen auch nur begrenzte Mengen von Treibstoff-Luft-Gemisch in den geheizten Ofenraum (oder ins Strahlungsrohr) eingeführt. Das begrenzt auch die Bewegungsgeschwindigkeit der Verbrennungsprodukte im geheizten Raum oder innerhalb des Strahlungsrohrs. Das Ergebnis ist der geringere Wert der Konvektionskomponente des Wärmeaustausches und die verlängerte Erwärmungszeit der behandelten Metall- und Nichtmetallerzeugnisse sowie die herabgesetzte Ofenleistung. Die begrenzte Bewegungsgeschwindigkeit der Verbrennungsprodukte führt ebenfalls zu einer Ungleichmäßigkeit der Temperaturverteilung sowohl über den gesamten Arbeitsbereich des Ofens als auch über den Beschickungssatz (den thermisch zu behandelnden Erzeugnissen). Dies vermindert die Qualität der thermischen Behandlung der Erzeugnisse.

Es ist das bereits oben erwähnte Verfahren zur Verbrennung von Erdgas in Hochtemperaturindustrieöfen mit direkter Heizung bekannt. Es kommen dabei vorwiegend Tunnelöfen zum Einsatz, welche zur Abröstung insbesondere von zirkonhaltigen Erzeugnissen angewendet werden [Patent der RF Nr. RU2099661]. Das Verfahren umfasst die Zuführung des Druckluftstrahls innerhalb des Kraftstoffstrahls (das primäre Kraftstoff-Luft-Gemisch) in die Brennkammer (geheizter Raum) und die Beimischung der heißen, vorgewärmten Sekundärluft in das primäre Kraftstoff-Luft-Gemisch in der genannten Brennkammer bei einer bestimmten Luftüberschusszahl.

Es ist ein Verfahren zur Verbrennung von Treibstoff im Tunnelofen mit direkter Heizung bekannt [Patent der RF Nr. Nr.RU 2166161]. Das Verfahren umfasst die Verbrennung des Treibstoff- und Luftgemisches im geheizten Raum (Brennkammer) und die Übertragung der Verbrennungsprodukte in den Arbeitsbereich des Ofens. Es beinhaltet die Zuführung des Kraftstoff-Luft-Gemisches und der Sekundärluft in die Brennkammer und ihre Verbrennung bei Luftüberschusszahlen innerhalb des Bereichs von 0,75 bis 1,5. Das betrachtete Verfahren stellt bei $\alpha$ von 0,75 bis 1,0 die Erzeugung von Verbrennungsprodukten eines oxidationsarmen Mediums und bei $\alpha$ von 1,0 bis 1,5 die Bildung des Oxidationsmediums sicher. Die Wahl der Art des Ofenmediums wird durch seine Notwendigkeit für die Behandlung des jeweiligen Produktes bestimmt. Das Verfahren wird beim Glühen der Keramik-Erzeugnisse angewendet und kann zur Heizung des Verbrennungsofens auch bei der thermischen Metallbehandlung sowie bei indirekter Heizung der behandelten Erzeugnisse unter Nutzung eines Strahlungsrohrs oder eines Tiegels verwendet werden.

Werden bei diesem Verfahren Luftüberschusszahlen von max. 1,5 benutzt, so erfolgt die Zuführung von nur begrenzten Mengen des Treibstoff-Luft-Gemisches in den geheizten Ofenraum (oder ins Strahlungsrohr). Dies begrenzt die Bewegungsgeschwindigkeit der Verbrennungsprodukte im geheizten Raum und im Strahlungsrohr. Daraus resultiert ein niedrigerer Wert der Konvektionskomponente des Wärmeaustausches und eine verlängerte Erwärmungszeit der behandelten Metall- und Nichtmetallerzeugnisse sowie die herabgesetzte Ofenleistung. Ein weiteres Ergebnis der begrenzten Bewegungsgeschwindigkeit der Verbrennungsprodukte ist eine ungleichmäßige Temperaturverteilung sowohl über den gesamten Arbeitsbereich des Ofens als auch über den Beschickungssatz (die thermisch zu behandelnden Erzeugnisse). Dies vermindert die Qualität der thermischen Behandlung der Erzeugnisse.

Die Mängel des genannten Verfahrens bei seiner Nutzung zur thermischen Metallbehandlung sind durch die Zusammensetzung der Verbrennungsprodukte (bei Verwendung des Oxidationsmediums, das heißt bei $\alpha$ = 1,0 bis 1,5) bedingt. Diese Mängel sind: Sehr hoher Metallabbrand, besonders bei erhöhten Temperaturen sowie (bei Verwendung eines oxidationsarmen Mediums) die Wasserstoffanreicherung, z.B. bei Titan und seinen Legierungen. Es entsteht ein erhöhter Kohlenmonoxid-Gehalt infolge der unvollkommenen Verbrennung des Treibstoffs. Dies macht die Abdichtung der Konstruktionen des Verbrennungsofens notwendig und erfordert beachtliche Kapitalmittel und einen Mehrverbrauch von Treibstoff.

Aufgaben eines Verfahrens zur Verbrennung von einem Gemisch des flüssigen oder gasförmigen Treibstoffes und der erwärmten Luft bei einer bestimmten Luftüberschusszahl im Verbrennungsofen - sind die Steigerung der Ofenleistung und die Qualitätserhöhung der thermischen Behandlung von Metall- und Nichtmetallerzeugnissen sowie die Minderung von Abbrand, Kohlenstoffentzug und Wasserstoffanreicherung der erwärmten Metalle.

Um die oben beschriebenen bekannten Verfahren zur thermischen Metall- und Nichtmetallbehandlung in Verbrennungsöfen mit direkter oder indirekter Heizung sowie des Verfahrens zur Verbrennung von einem Gemisch des flüssigen oder gasförmigen Treibstoffs und der erwärmten Luft im Verbrennungsofen mit direkter oder indirekter Heizung zu realisieren, werden regenerative Verbrennungsöfen angewendet, welche mit entsprechenden Vorrichtungen zur Heizung dieser Öfen versehen sind.

Es ist [aus dem Patent der RF Nr. RU2190170] eine Heizvorrichtung des Verbrennungsofens mit direkter Heizung bekannt, welche eine Feuerkammer (den beheizten Raum, auch Wärmeraum oder Arbeitsbereich genannt) enthält. Die Feuerkammer ist versehen mit:

1 Öffnungen (Kanälen) zur Abführung der heißen Verbrennungsprodukte,

2 zwei Brennern zur Verbrennung des gasförmigen Treibstoffes, gemischt mit der vorgewärmten Luft; das stöchiometrische Verhältnis des Treibstoffs und der erwärmten Luft wird dabei durch die Überschusszahl der erwärmten Luft = 1 gekennzeichnet, und

3 einem System zur Lufterwärmung und -zuführung in jeden Brenner in der erforderlichen Menge. Das System enthält zwei Regeneratoren. Sie werden abwechselnd durch die Verbrennungsprodukte erwärmt und erwärmen dann auch selbst abwechselnd die in diese Regeneratoren zugeführte Luft. Die Luft strömt danach in die Brenner (2-Zyklus-Impulsbetrieb der Heizvorrichtung des Verbrennungsofens). Um die abwechselnde Bewegung der Verbrennungsprodukte und der Luft durch die Regeneratoren sowie die Abführung der Verbrennungsprodukte ins Rauchabgassystem sicherzustellen, enthält die Vorrichtung Anschlussstutzen und Kanäle (Leitungen) mit Umlegeklappen (Absperrkippventilen). Diese werden auf entsprechende Weise an die Regeneratoren, die Brenner und das Rauchabgassystem angeschlossen. Das stöchiometrische Verhältnis zwischen den Mengen des verbrannten gasförmigen Treibstoffs und der erwärmten Luft ($\alpha$ = 1) wird in der Vorrichtung durch ihre entsprechende bauliche Ausführung sichergestellt. Dazu zählen die Verhältnisse der Parameter, welche die Querschnitte der Treibstoff- und Luftzuführungsleitungen zu den Brennern kennzeichnen. Ein weiteres Konstruktionsmerkmal der Vorrichtung stellt die Zuführung der erwärmten Luft in den Brenner in der erforderlichen Menge sicher. Dieses Merkmal umfasst die Ausführung der Regenerativgitterkammer und den Umfang ihres Innenraums. Auch die erforderliche Menge (Masse) der diesen Innenraum füllenden wärmeübertragenden Elemente und das Material dieser Elemente, z. B. Ofenstein oder Metall, sind wichtig. [V. A. Baum und andere, Hütten, M., 1951, S. 665] [s. oben: M. A. Kassenkov, Heizeinrichtungen im Schmiedebetrieb, Maschgiz, 1962, S. 296].

Die Konstruktion der Vorrichtung stellt die Verbrennung des Treibstoff- und Luftgemisches bei dem stöchiometrischen Verhältnis ($\alpha$ = 1) sicher. Der Mangel dieser Vorrichtung zur thermischen Metallbehandlung mit direkter Heizung ist der wesentliche Metallverlust durch Abbrand. Der Abbrand tritt infolge der oxidierenden Atmosphäre der Verbrennungsprodukte im beheizten Raum (Arbeitsbereich) auf. Die Wasserstoffanreicherung der Metalle ist ein weiterer Mangel.

Weiterhin ist auch eine Vorrichtung zur thermischen Metallbehandlung im Verbrennungsofen mit indirekter Heizung bekannt [Patent der USA Nr.US 4878480]. Der geheizte Raum in Form eines Strahlungsrohrs enthält zwei Brenner zur Verbrennung des Gemisches aus gasförmigem Treibstoff und Luft. Die Vorrichtung ist mit Öffnungen zur Abführung der Verbrennungsprodukte versehen.

Wird im Verbrennungsofen die genannte Vorrichtung mit indirekter Heizung benutzt, so wird das behandelte Metall im Arbeitsbereich außerhalb des Strahlungsrohrs platziert. Es befindet sich nicht in der Atmosphäre der Verbrennungsprodukte und wird keinem Abbrand und/oder keiner Wasserstoffanreicherung ausgesetzt. Jedoch ist in diesem Fall der Metallabbrand an den Innenwänden des Strahlungsrohrs vorhanden, da die Innenwände im geheizten Raum liegen und der Einwirkung der Verbrennungsprodukte ausgesetzt sind. Das verkürzt die Lebensdauer des Strahlungsrohrs und erhöht die Betriebskosten sowie die Selbstkosten der Metallbehandlung.

Es ist eine weitere Vorrichtung zur thermischen Metallbehandlung im Verbrennungsofen mit indirekter Heizung bekannt Sie enthält einen geheizten Raum mit einer Öffnung zur Abführung der Verbrennungsprodukte (Pfannenbehälter) und einige Brenner zur Verbrennung des gasförmigen und mit Luft gemischten Treibstoffs. Dabei steht der Treibstoff in einem bestimmten Verhältnis zur erwärmten Luft und dem im geheizten Raum angeordneten Tiegel mit dem aufzuschmelzenden Metallschrott.

Der Mangel dieser Vorrichtung besteht in der Verkürzung der Lebensdauer des Tiegels, dessen Außenmetallwände durch die Verbrennungsprodukte beansprucht werden. Daraus folgt eine Erhöhung der Betriebskosten und der Selbstkosten der Metallbehandlung.

Bei einer anderen bekannten Vorrichtung ist die Heizvorrichtung des Flammofens mit einer offenen Flamme (direkte Heizung) zur oxidationsfreien Erwärmung der Stahlknüppel versehen. [s. oben M.A.Kassenkov, Heizeinrichtungen im Schmiedebetrieb, Maschgiz, 1962, S. 296-297, Fig.178]. Sie enthält:

1 einen beheizten Raum (auch Arbeitsbereich genannt) mit Öffnungen (Kanälen) zur Abführung der heißen Verbrennungsprodukte,

2 zwei abwechselnd im zyklischen Impulsbetrieb laufende Brenner zur Verbrennung des Gemisches aus gasförmigem Treibstoff mit vorgewärmter Luft. Das Verhältnis zwischen dem Treibstoff und der erwärmten Luft ist dabei durch die Überschusszahl der erwärmten Luft < 1 (oxidationsarme Erwärmung) gekennzeichnet, und

3 ein System zur Erwärmung der Luft und ihrer abwechselnden Zuführung an mindestens einen der Brenner in erforderlicher Menge. Das System umfasst zwei Regeneratoren (Regenerativgitterkammern). Jede der Regenerativgitterkammern dient in einem Arbeitszyklus der Heizvorrichtung des Verbrennungsofens als Mittel zur Erwärmung der genannten wärmeübertragenden Elemente durch die heißen Verbrennungsprodukte. In einem anderen Arbeitszyklus fungiert jede der Gitterkammern als Mittel zur Erwärmung der Luft durch die beim vorigen Arbeitszyklus erwärmten wärmeübertragenden Elemente. Die Vorrichtung enthält ein Steuer- und Schaltsystem. Das Steuer- und Schaltsystem umfasst Kanäle (Leitungen) mit Ventilen, welche auf eine entsprechende Weise an die Regenerativgitterkammern, die Brenner und den Rauchabsauger angeschlossen sind. Dieses System stellt eine abwechselnde Bewegung der Verbrennungsprodukte und der Luft über die Regenerativgitterkammern und die Zuführung der erwärmten Luft mindestens in einen der zwei Brenner sowie die Abführung der Verbrennungsprodukte in den Rauchabsauger sicher. Das heißt, das Steuer- und Schaltsystem ist mit der Möglichkeit zur Realisierung der zyklisch veränderlichen Funktionen durch die Regenerativgitterkammern ausgeführt.

Die bekannte Vorrichtung stellt die Zuführung der bestimmten für die oxidationsarme Erwärmung erforderlichen Menge der erwärmten Luft in die Brenner sicher (bei vorgegebener Luftüberschusszahl < 1). Das Konstruktionsmerkmal dieser Vorrichtung ist das Vorhandensein von wärmeübertragenden Elementen im Innenraum jeder der Regenerativgitterkammern. Die wärmeübertragenden Elemente sind als Metallrohre oder - kugeln ausgeführt, deren Menge (Masse) für die Erwärmung der erforderlichen Luftmenge innerhalb einer Zeiteinheit ausreichend ist.

Die bekannte Vorrichtung stellt einen oxidationsarmen Vorgang der Metallerwärmung sicher. Sie baut den Metallabbrand ab, verhindert jedoch nicht die Wasserstoffanreicherung, z.B. bei Titan und seinen Legierungen. Der Mangel dieser Vorrichtung besteht in dem erhöhten Kohlenmonoxid-Gehalt infolge der unvollkommenen Verbrennung des Treibstoffes im geheizten Raum. Das macht die Abdichtung der Konstruktion des Verbrennungsofens erforderlich, was größere Kapitalauslagen voraussetzt. Die in der genannten Vorrichtung realisierte Nachverbrennung der Verbrennungsprodukte im unteren Teil der Regeneratoren verursacht einen Mehrverbrauch von Treibstoff.

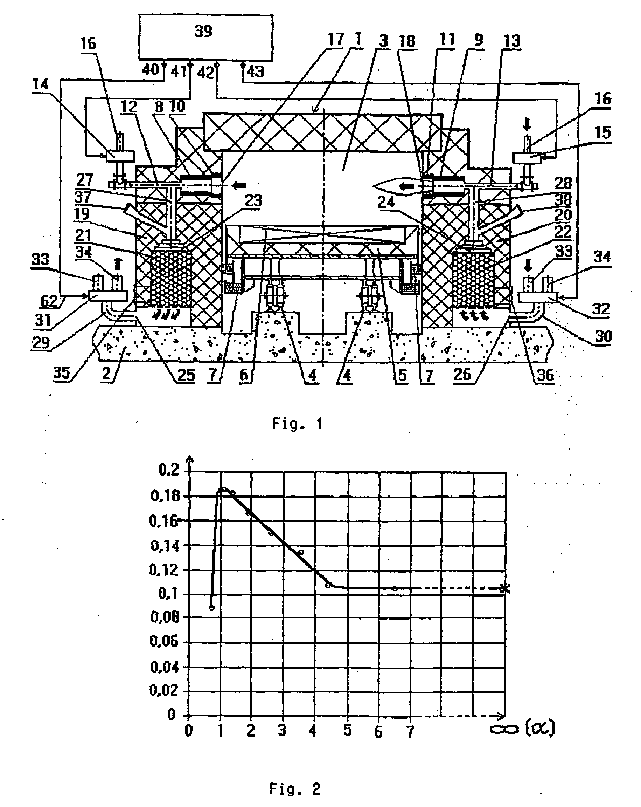

Eine weitere Abart der bekannten Vorrichtung ist eine experimentelle Heizvorrichtung des Verbrennungsofens mit direkter Heizung [I. M. Distergeft, G. M. Druzhinin, V. I. Shsherbinin, Die Erfahrung von VNIIMT in der Entwicklung der regenerativen Heizsysteme für Hüttenanlagen, "Stahl", 2000, Nr. 7, S. 86-87, Abb. 2]. Die Vorrichtung enthält einen beheizten Raum (auch Arbeitsbereich oder Feuerkammer genannt) mit einem im Zweizyklus-Impulsbetrieb laufenden Regenerativbrenner zur Verbrennung des Gemisches aus gasförmigem Treibstoff und Luft. Ein Rauchgaskanal ist zur Abführung der gekühlten Verbrennungsprodukte in einem Arbeitszyklus vorgesehen. In einem anderen Arbeitszyklus ist ein Rauchfuchs zur Abführung der heißen Verbrennungsprodukte vorgesehen. Ferner weist die Vorrichtung ein System zur Erwärmung der Luft und zur Zuführung der Luft in erforderlicher Menge in den Regenerativbrenner im Impulsbetrieb auf. Dieses System enthält eine Regenerativgitterkammer. Das Vorhandensein der wärmeübertragenden Elemente im Innenraum der Regenerativgitterkammer erfordert die Erwärmung der erforderlichen Luftmenge innerhalb einer Zeiteinheit zur Aufrechterhaltung der erforderlichen Luftüberschusszahl. Die Regenerativgitterkammer dient in dem einen Arbeitszyklus der Heizvorrichtung des Verbrennungsofens als Mittel zur Erwärmung der darin angeordneten wärmeübertragenden Elemente durch die heißen Verbrennungsprodukte. Nach der Kühlung in der Regenerativgitterkammer strömen die Verbrennungsprodukte in den Rauchgaskanal. In dem anderen Arbeitszyklus fungiert jede der Gitterkammern als Mittel zur Erwärmung der Luft durch die beim vorigen Arbeitszyklus erwärmten wärmeübertragenden Elemente. Die Vorrichtung enthält ein Steuer- und Schaltsystem, welches Kanäle (Leitungen) und Ventile (Klappen) einschließt. Das Steuer- und Schaltsystem ist mit der Möglichkeit zur Realisierung der zyklisch veränderlichen Funktionen durch die Regenerativgitterkammern ausgeführt. Das Steuer- und Schaltsystem stellt in einem Zyklus die Bewegung der Verbrennungsprodukte aus der Vorkammer-Mischvorrichtung über die Regenerativgitterkammer zur Erwärmung der wärmeübertragenden Elemente der Gitterkammer sowie die Abführung der gekühlten Verbrennungsprodukte dieses Zyklus in den Rauchgaskanal sicher. Im anderen Zyklus stellt das Steuer- und Schaltsystem die Zuführung der zu erwärmenden Luft in Gegenrichtung über die Regenerativgitterkammer dar. Dann strömt diese mit dem Treibstoff gemischte Luft in den Regenerativbrenner zur Bildung der Verbrennungsprodukte in der Brennkammer. Die Verbrennungsprodukte gelangen über den Rauchfuchs zur nutzvollen Verwertung. Das Steuer- und Schaltsystem ist mit der Möglichkeit der Realisierung der zyklisch veränderlichen Funktionen durch die Regenerativgitterkammern ausgeführt.

Der Mangel dieser Vorrichtung der ersten Ausführungsform mit direkter Heizung ist der große Metallverlust des Beschickungssatzes wegen Abbrand infolge der oxydierenden Atmosphäre der Verbrennungsprodukte sowie die Wasserstoffanreicherung der Metalle. Wird in der betroffenen Vorrichtung die indirekte Heizung angewendet, so besteht der Mangel im Vorhandensein von Metallabbrand der Muffel. Dies verursacht eine Verkürzung der Lebensdauer der Muffel (des Strahlungsrohrs, des Tiegels) und die Erhöhung der Betriebskosten sowie der Selbstkosten der Metallbehandlung. Außerdem werden infolge der Anwendung von begrenzten Luftüberschusszahlen in der Heizvorrichtung des Verbrennungsofens nur begrenzte Mengen des Treibstoff-Luft-Gemisches in den geheizten Raum des Ofens oder ins Strahlungsrohr zugeführt. Das begrenzt auch die Bewegungsgeschwindigkeit der Verbrennungsprodukte im geheizten Raum und im Strahlungsrohr. Das Ergebnis ist ein geringerer Wert der Konvektionskomponente des Wärmeaustausches und die verlängerte Erwärmungszeit der behandelten Metall- und Nichtmetallerzeugnisse sowie eine herabgesetzte Ofenleistung. Die Folge der begrenzten Bewegungsgeschwindigkeit der Verbrennungsprodukte ist ebenfalls eine Ungleichmäßigkeit der Temperaturverteilung sowohl über den gesamten Arbeitsbereich des Ofens als auch über den Beschickungssatz (die thermisch zu behandelnden Erzeugnisse). Dies vermindert die Qualität der thermischen Behandlung der Erzeugnisse.

Aufgabe der Erfindung einer Heizvorrichtung des Verbrennungsofens mit direkter oder mit indirekter Heizung nach der ersten Ausführungsform ist:

1 der Abbau des Abbrandes und des Niveaus der Wasserstoffanreicherung der Metalle während ihrer thermischen Behandlung in Verbrennungsöfen (bei direkter Heizung des Beschickungssatzes),

2 die Erhöhung der Lebensdauer der Muffel (des Strahlungsrohrs, des Tiegels),

3 die Reduzierung der Betriebskosten und der Selbstkosten der Metallbehandlung (bei indirekter Heizung des Beschickungssatzes) sowie

4 die Erhöhung der Ofenleistung und der Qualität der thermischen Behandlung der Erzeugnisse.

Der nächste Stand der Technik gegenüber der zweiten Ausführungsform der Erfindung (Vorrichtung) ist eine Heizvorrichtung des Verbrennungsofens mit direkter Heizung [G. M. Druzhinin, I. M. Distergeft, V. A. Leontyev und andere, Hauptrichtungen der Rekonstruktion des Ringofens zur Erwärmung der Blöcke, Stahl, 2005, Nr. 3, S. 65 - 67, Abb. 1]. Die genannte Vorrichtung enthält einen geheizten Raum, der gleichzeitig der Arbeitsbereich für die Anordnung des zu erwärmenden Metalls ist. Zwei Brenner dienen zur Verbrennung des gasförmigen oder des flüssigen Treibstoffs, der mit der vorgewärmten Luft gemischt ist. Dabei ist ein bestimmtes Verhältnis zwischen Treibstoff und der erwärmten Luft gewählt, wobei dieses Verhältnis durch die entsprechende Luftüberschusszahl gekennzeichnet ist.

Das System zur Lufterwärmung und der Luftzuführung in jeden Brenner, und zwar in der erforderlichen Menge, weist einen Zuführungskanal für den gasförmigen oder den flüssigen Treibstoff und einen Kanal zur Abführung der gekühlten Verbrennungsprodukte nach drau-ßen auf. Außerdem ist ein Steuer- und Schaltsystem vorhanden. Das System zur Erwärmung der Luft und der Zuführung der Luft in jeden Brenner in der erforderlichen Menge enthält einen Außenluftzuführungskanal und zwei Regenerativgitterkammern. Jede der Regenerativgitterkammern hat einen Innenraum mit zwei Eintritts- und Austrittsöffnungen. Der Innenraum ist mit einer Schicht von wärmeübertragenden Elementen mit einem bestimmten Umfang gefüllt. Jede der Regenerativgitterkammern dient in einem Arbeitszyklus der Heizvorrichtung des Verbrennungsofens als Mittel zur Erwärmung der genannten wärmeübertragenden Elemente durch die heißen Verbrennungsprodukte. In einem anderen Arbeitszyklus fungiert jede der Gitterkammern als Mittel zur Erwärmung der Luft durch die beim vorigen Arbeitszyklus erwärmten wärmeübertragenden Elemente. Jeder der Brenner fungiert in einem Arbeitszyklus der Heizvorrichtung des Verbrennungsofens als Brenner, und im anderen Arbeitszyklus der Heizvorrichtung des Verbrennungsofens sorgt er für die Abführung der heißen Verbrennungsprodukte aus dem beheizten Raum. Dabei ist das Steuer- und Schaltsystern so ausgeführt, dass die Brenner und die Regenerativgitterkammern die zyklisch abwechselnden Funktionen erfüllen können. Das Steuer- und Schaltsystem stellt in jedem Arbeitszyklus der Heizvorrichtung des Verbrennungsofens Folgendes sicher:

1 die Verbindung des Zuführungskanals des gasförmigen oder des flüssigen Treibstoffs mit einem der Brenner,

2 die Verbindung des anderen Brenners mit einer der Eintritts- und Austrittsöffnungen des Innenraums einer der Regenerativgitterkammern,

3 die Verbindung der anderen Eintritts- und Austrittsöffnung dieser Regenerativgitterkammer mit dem Kanal zur Abführung der gekühlten Verbrennungsprodukte nach draußen,

4 die Verbindung des Außenluftzuführungskanals mit einer der Eintritts- und Austrittsöffnungen des Innenraums der anderen Regenerativgitterkammer, und

5 die Verbindung der anderen Eintritts- und Austrittsöffnung dieser Gitterkammer mit jedem der Brenner, welcher mit dem Zuführungskanal des gasförmigen oder des flüssigen Treibstoffs verbunden ist.

Die wärmeübertragenden Elemente sind als Korundkugeln ausgeführt und füllen den Innenraum jeder der Regenerativgitterkammern aus. Die Menge (der Umfang) der Schicht dieser wärmeübertragenden Elemente bestimmt die Warmluftzuführungsleistung zu jedem Brenner und die Größe der Luftüberschusszahl. Die Luftüberschusszahl stellt die oxidierende Atmosphäre im geheizten Raum mit dem sich darin befindlichen thermisch zu behandelnden Metall sicher.

Der Mangel der beschriebenen Vorrichtung zur thermischen Metallbehandlung im Verbrennungsofen mit direkter Heizung - ist der wesentliche Metallverlust wegen Abbrands infolge der oxidierenden Atmosphäre der Verbrennungsprodukte ($\alpha$ = ca. 1) und die Wasserstoffanreicherung der Metalle.

Eine weitere Abart der bekannten Vorrichtung ist die Vorrichtung zur thermischen Metallbehandlung im Verbrennungsofen mit indirekter Heizung [I. M. Distergeft, G. M. Druzhinin, V. I. Shsherbinin, Die Erfahrung von VNIIMT in der Entwicklung der regenerativen Heizsysteme für Hüttenanlagen, "Stahl", 2000, Nr. 7, S. 87-88, Abb.5]. Die genannte Vorrichtung schließt ein:

1 einen geheizten Raum in Form von einem Strahlungsrohr mit zwei Brennern zur Verbrennung des mit der vorgewärmten Luft gemischten gasförmigen oder flüssigen Treibstoffs. Es wird dabei in einem bestimmten Verhältnis von Treibstoff zur erwärmten Luft gearbeitet, wobei dieses Verhältnis durch die entsprechende Luftüberschusszahl gekennzeichnet ist,

2 ein System zur Lufterwärmung und -zuführung in jeden Brenner in der erforderlichen Menge,

3 einen Zuführungskanal für den gasförmigen oder den flüssigen Treibstoff,

4 einen Kanal zur Abführung der gekühlten Verbrennungsprodukte nach draußen sowie

5 ein Steuer- und Schaltsystem.

Das System zur Erwärmung der Luft und der Zuführung der Luft in jeden Brenner in erforderlicher Menge umfasst einen Außenluftzuführungskanal und zwei Regenerativgitter. Jede der Regenerativgitter hat einen Innenraum mit zwei Eintritts- und Austrittsöffnungen. Der Innenraum ist mit einer Schicht von wärmeübertragenden Elementen in einer bestimmten Menge gefüllt. Jede der Regenerativgitterkammern dient in einem Arbeitszyklus der Heizvorrichtung des Verbrennungsofens als Mittel zur Erwärmung der genannten wärmeübertragenden Elemente durch die heißen Verbrennungsprodukte. In einem anderen Arbeitszyklus fungiert jede der Gitterkammern als Mittel zur Erwärmung der Luft durch die beim vorigen Arbeitszyklus erwärmten wärmeübertragenden Elemente. Jeder der Brenner erfüllt in einem Arbeitszyklus der Heizvorrichtung des Verbrennungsofens die Funktion des Brenners. Im anderen Arbeitszyklus der Heizvorrichtung des Verbrennungsofens sorgt er für die Abführung der heißen Verbrennungsprodukte aus dem beheizten Raum. Dabei ist das Steuer- und Schaltsystem so ausgeführt, dass die Brenner und die Regenerativgitterkammern die zyklisch abwechselnden Funktionen erfüllen können. Das Steuer- und Schaltsystem stellt in jedem Arbeitszyklus der Heizvorrichtung des Verbrennungsofens Folgendes sicher:

1 die Verbindung des Zuführungskanals des gasförmigen oder des flüssigen Treibstoffs mit einem der Brenner,

2 die Verbindung des anderen Brenners mit einer der Eintritts- und Austrittsöffnungen des Innenraums einer der Regenerativgitterkammern,

3 die Verbindung der anderen Eintritts- und Austrittsöffnung dieser Regenerativgitterkammer mit dem Kanal zur Abführung der gekühlten Verbrennungsprodukte nach draußen,

4 die Verbindung des Außenluftzuführungskanals mit einer der Eintritts- und Austrittsöffnungen des Innenraums der anderen Regenerativgitterkammer und

5 die Verbindung der anderen Eintritts- und Austrittsöffnung dieser Gitterkammer mit jedem der Brenner, welcher mit dem Zuführungskanal des gasförmigen oder des flüssigen Treibstoffs verbunden ist.

Die wärmeübertragenden Elemente sind als Korundkugein ausgeführt und füllen den Innenraum jeder der Regenerativgitterkammern aus. Die Menge (der Umfang) der Schicht dieser wärmeübertragenden Elemente bestimmt die Größe der Luftüberschusszahl. Diese stellt die oxidierende Atmosphäre im geheizten Raum innerhalb des Strahlungsrohrs sicher. Das thermisch zu behandelnde Metall ist im Arbeitsbereich außerhalb des Strahlungsrohrs angeordnet.

Der Mangel der bekannten Vorrichtung zur thermischen Metallbehandlung im Verbrennungsofen mit indirekter Heizung - ist das Vorhandensein des Metallabbrands der Wände des Strahlungsrohrs. Das Strahlungsrohr ist im geheizten Raum des Ofens mit indirekter Heizung angeordnet. Das führt zu einer Verkürzung der Lebensdauer des Strahlungsrohrs und zu einer Erhöhung der Betriebskosten sowie der Selbstkosten der Metallbehandlung. Außerdem werden infolge der Nutzung der begrenzten Luftüberschusszahlen in der Heizvorrichtung des Verbrennungsofens nur begrenzte Mengen des Treibstoff-Luft-Gemisches in den geheizten Raum des Ofens oder ins Strahlungsrohr zugeführt. Das begrenzt auch die Bewegungsgeschwindigkeit der Verbrennungsprodukte im geheizten Raum und im Strahlungsrohr. Das Ergebnis ist ein geringerer Wert der Konvektionskomponente des Wärmeaustausches und eine verlängerte Erwärmungszeit der behandelten Metall- und Nichtmetallerzeugnisse sowie eine herabgesetzte Ofenleistung. Die Folge der begrenzten Bewegungsgeschwindigkeit der Verbrennungsprodukte ist ebenfalls eine ungleichmäßige Temperaturverteilung sowohl über den gesamten Arbeitsbereich des Ofens als auch über den Beschickungssatz (die thermisch zu behandelnden Erzeugnisse). Dies vermindert die Qualität der thermischen Behandlung der Erzeugnisse.

Die Aufgabe der Erfindung ist:

1 für den Ofen mit direkter Heizung: der Abbau des Abbrandniveaus und der Höhe der Wasserstoffanreicherung des Beschickungssatzes (der behandelten Metalle), darunter auch der Legierungen von Aluminium, Titan, Eisen.

In den Regenerativverbrennungsöfen zur thermischen Metallbehandlung, welche mit dem Brenngemisch von flüssigem oder gasförmigem Treibstoff und erwärmter Luft beheizt werden, werden Regenerativgitterkammern eingesetzt. Jede der Regenerativgitterkammern enthält einen Innenraum mit zwei Eintritts- und Austrittsöffnungen. Der Innenraum wird mit einer Schicht von wärmeübertragenden Elementen [z. B., s. oben M. A. Kassenkov, S. 296 - 297, Fig. 178] gefüllt. Die Konstruktionen der Regenerativgitterkammern und ihre Funktionsprinzipien sind für die bekannten Typen der Verbrennungsöfen mit direkter und indirekter Heizung gleich. Die Regenerativgitterkammer dient zur Erfüllung der Arbeit in zwei Arbeitszyklen. In einem Zyklus dient die Gitterkammer als Mittel zur Erwärmung der wärmeübertragenden Elemente mit den Verbrennungsprodukten des verbrannten Gemisches. Im anderen Zyklus dient sie als Mittel zur Lufterwärmung durch wärmeübertragende Elemente. Wird die Regenerativgitterkammer im Verbrennungsofen eingesetzt, so sind ihre Eintritts- und Austrittsöffnungen über das entsprechende Schaltsystem (Kipp- und Absperrventile) mit dem Kanal der Zuführung der heißen Verbrennungsprodukte aus dem beheizten Raum des Verbrennungsofens, dem Kanal zur Abführung der gekühlten Verbrennungsprodukte, dem Luftzuführungskanal und dem Kanal der Warmluftzuführung in den Brenner verbunden.

Die bekannten Regenerativgitterkammern dienen dem Einsatz in Verbrennungsöfen zur Erwärmung der Metalle während der Verbrennung des Treibstoff- und Luft-Gemisches bei ihrem stöchiometrischen Verhältnis ($\alpha = 1$) und bei der oxidationsarmen Erwärmung ($\alpha < 1$). Innerhalb des üblichen Bereichs in der Praxis der Warmluftüberschusszahlen (wie bereits oben angegeben) dürfen diese Zahlen max. 2,0 betragen. Dadurch ist ein Konstruktionsmangel jeder bekannten Regenerativgitterkammer bedingt. Dieser Mangel besteht darin, dass im Innenraum solcher Gitterkammern wärmeübertragende Elemente vorhanden sind. Die bestimmte Menge der wärmeübertragenden Elemente wird durch die Sicherstellung der Lufterwärmung in der Gitterkammer vorgegeben. In der Gitterkammer wird genau eine solche Luftmenge aufgewärmt, welche für die Verbrennung des Treibstoff- und Luft-Gemisches bei vorgegebener Luftüberschusszahl im Brenner (in den Brennern) erforderlich ist. Dabei liegt die Luftüberschusszahl innerhalb des oben genannten Bereichs. Im Endeffekt bedingt die Verwendung der bekannten Regenerativgitterkammern in Verbrennungsöfen zur Metallerwärmung einen wesentlichen Metallverlust wegen Abbrands infolge der oxidierenden Atmosphäre der Verbrennungsprodukte. Auch ein Kohlenstoffentzug aus den Oberflächenschichten der Stahlknüppel und eine Wasserstoffanreicherung der Metalle tritt auf.

Ein anderer Stand der Technik ist eine Regenerativgitterkammer des Verbrennungsofens, welcher mit dem Gemisch von flüssigem oder gasförmigem Treibstoff und erwärmter Luft beheizt wird. Die Regenerativgitterkammer enthält einen Innenraum mit zwei Eintritts- und Austrittsöffnungen. Der Innenraum ist mit einer Schicht von wärmeübertragenden Elementen in Form von Metall- oder Korundkugeln gefüllt. Die Regenerativgitterkammer dient in einem Arbeitszyklus als Mittel zur Erwärmung der genannten wärmeübertragenden Elemente durch die Verbrennungsprodukte. Im anderen Zyklus dient sie als Mittel zur Erwärmung der Luft durch die im vorhergehenden Zyklus erwärmten wärmeübertragenden Elemente [I. M. Distergeft und andere, Regenerative Heizsysteme für Erwärmungsöfen der Walz- und Schmiedebetriebe (Entwicklungsgeschichte, Theorie und Praxis), gesammelte Werke Hüttenfeuerungstechnik, Band 5, Ministerium für Bildung und Wissenschaft der Ukraine/ Nationalakademie der Ukraine für Metallurgie, Dnepropetrovsk, 2002, S. 44 : 57].

Der Konstruktionsmangel der betrachteten Regenerativgitterkammer sowie der oben erwähnten Gitterkammern ist das Vorhandensein eines bestimmten Volumens der wärmeübertragenden Elemente in ihrem Innenraum. Dieses bestimmte Volumen stellt die Erwärmung genau der Luftmenge in der Gitterkammer sicher, welche zur Verbrennung des Treibstoffund Luft-Gemisches im Brenner (in den Brennern) bei vorgegebener Luftüberschusszahl erforderlich ist. Die Luftüberschusszahl liegt dabei innerhalb des bekannten oben genannten Bereichs ($\alpha$-Wert beträgt max. 2,0). Der Einsatz dieser Regenerativgitterkammer in Verbrennungsöfen mit direkter oder mit indirekter Heizung für Metalle bedingt einen Metallverlust im

Beschickungssatz oder in der Muffel wegen Abbrands sowie die Wasserstoffanreicherung der Metalle. Wenn die bekannte Regenerativgitterkammer im Verbrennungsofen benutzt wird, so stellt das Volumen der wärmeübertragenden Elemente die Zuführung von nur einer begrenzten Menge des Treibstoff-Luft-Gemisches in den geheizten Raum des Ofens oder des Strahlungsrohrs sicher. Dadurch wird auch die Bewegungsgeschwindigkeit der Verbrennungsprodukte im geheizten Raum des Ofens und im Strahlungsrohr begrenzt. Im Endeffekt verursacht diese Tatsache einen geringeren Wert der Konvektionskomponente des Wärmeaustausches und die verlängerte Erwärmungszeit der behandelten Metall- und Nichtmetallerzeugnisse sowie eine herabgesetzte Ofenleistung. Das Ergebnis der begrenzten Bewegungsgeschwindigkeit der Verbrennungsprodukte ist ebenfalls eine Ungleichmäßigkeit der Temperaturverteilung sowohl über den gesamten Arbeitsbereich des Ofens als auch über den Beschickungssatz (die thermisch zu behandelnden Erzeugnisse). Dies vermindert die Qualität der thermischen Behandlung der Erzeugnisse.

Durch DE 34 06 956 A1 ist ein Verfahren zur Herstellung von Ziegeln aus kohlenstoffhaltigem Ton bekannt. Das Verfahren sieht vor, kohlenstoffhaltige Bestandteile im Ton vor dem eigentlichen Brennvorgang durch Oxidation in einem Temperaturbereich von 600°C bis 900°C zu entfernen. Hierzu wird in einem Temperaturbereich von 600°C bis 900°C ein gegenüber Luft an Sauerstoff zumindest angereichertes Gas durch überstöchiometrisch betriebene Brenner zugeführt.

Durch KR 10 2004 002 12 43 AA ist ein Brenner für einen Heizofen bekannt. Um die Bildung von Stickoxiden einzudämmen sieht der Brenner eine zweistufige Verbrennung vor. Einem durch ein Brennstoffrohr strömenden, flüssigen oder gasförmigen Brennstoff wird Luft durch ein Luftrohr beigemengt. Das einem Brennstoffüberschuss zwischen 1,8 und 2,1 entsprechende Gemisch tritt durch eine bienenwabenförmige Düse aus. Am Austritt findet die Verbrennung statt. Durch koaxial zur Düse angeordnete Luftauslässe findet eine Zufuhr von zusätzlicher Verbrennungsluft statt.

Durch US 6,880,619 B1 ist ein Verbrennungsofen mit direkter Heizung bekannt. Der Verbrennungsofen verfügt über einen geheizten Raum, mindestens einen Brenner zur Verbrennung eines Gemisches aus flüssigem oder gasförmigem Treibstoff und Warmluft bei einer bestimmten Luftüberschusszahl, sowie über ein System zur Erwärmung und Zuführung der Luft zu mindestens einem Brenner in der erforderlichen Menge. Das System zur Erwärmung und Zuführung der Luft besteht aus einem Kanal zur Zufuhr von Außenluft, einem Kanal zur Abfuhr heißer Verbrennungsprodukte, und wenigstens zwei Regenerativgitterkammern mit jeweils einem Innenraum mit jeweils zwei Eintritts- und Austrittsöffnungen. Der Innenraum ist mit einer Schicht von wärmeübertragenden Elementen mit einem bestimmten Volumen gefüllt. Das System zur Erwärmung und Zuführung der Luft besteht ferner aus einem Steuer- und Schaltsystem für die genannten Kanäle, welches so ausgebildet ist, dass die Regenerativgitterkammern zyklisch abwechselnde Funktionen erfüllen. Während eines ersten Arbeitszyklus des Verbrennungsofens wird eine der beiden Regenerativgitterkammern unter gleichzeitiger Erwärmung der in ihrem Innenraum angeordneten wärmeübertragenden Elemente von den heißen Verbrennungsprodukten durchströmt. Gleichzeitig wird die andere der beiden Regenerativgitterkammern unter Abgabe von in den in ihrem Innenraum angeordneten wärmeübertragenden Elementen gespeicherter Wärme zur Erzeugung von dem mindestens einen Brenner zuzuführender Warmluft von der Außenluft durchströmt. Während eines zweiten Arbeitszyklus erfüllt jede der beiden Regenerativgitterkammern die Funktion, welche die jeweils andere Regenerativgitterkammer im ersten Arbeitszyklus innehatte.

Ausgehend von diesem oben angeführten Stand der Technik ist es Aufgabe der Erfindung, dass bei einem Verfahren zur thermischen Behandlung von Metallen in einem Verbrennungsofen mit direkter oder indirekter Heizung Folgendes erreicht wird:

1 bei direkter Heizung die Minderung des Abbrandes am behandelten Metall und der Abbau der Wasserstoffanreicherung der behandelten Metalle, darunter auch der Legierungen von Aluminium, Titan und Eisen

2 bei indirekter Heizung die Erhöhung der Lebensdauer der Muffel (des Strahlungsrohrs, des Tiegels), die Senkung der Betriebskosten und der Selbstkosten für die Metallbehandlung.

Des Weiteren soll die Ofenleistung gesteuert und eine Erhöhung der Qualität bei der thermischen Behandlung von Metall- und Nichtmetallerzeugnissen erreicht werden.

Die gestellten Aufgaben der Verfahren werden durch die Merkmale der Ansprüche 1, 2 gelöst.

Verbrennungsöfen zur Durchführung dieser Verfahren sind in den Ansprüchen 3 bis 5 enthalten. Diesen liegt die Aufgabe zugrunde, den Abbrand des Strahlungsrohrs und des Tiegels sowie deren Wasserstoffanreicherung zu vermindern. Die neuen Regenerationsgitterkammern dienen in erster Linie der Steigerung der Ofenleistung und der Qualitätserhöhung der thermischen Behandlung der Erzeugnisse.

Die gestellten Aufgaben wurden anhand der unten dargestellten neuen technischen Lösungen - drei Ausführungsformen des Verfahrens, Ansprüche 1 bis 2 - sowie anhand von Verbrennungsöfen zur Realisierung der Verfahren - Ansprüche 3 bis 5 gelöst.

Zur Lösung der oben genannten Aufgaben wurden die unten beschriebenen Verfahren und Vorrichtungen vorgeschlagen, welche bestimmte Unterschiede im Vergleich zu den bekannten Verfahren und Vorrichtungen aufweisen.

Das Verfahren der thermischen Metallbehandlung im Verbrennungsofen mit direkter oder indirekter Heizung (die erste Ausführungsform des Verfahrens) beruht auf der Verbrennung von einem Gemisch aus flüssigem oder gasförmigem Treibstoff und erwärmter Luft bei einer bestimmten Luftüberschusszahl. Das Verfahren ist dadurch gekennzeichnet, dass die Verbrennung des genannten Treibstoff- und Luft-Gemisches bei einer Luftüberschusszahl von mehr als 2,0 und vorwiegend im Bereich bis 6,0 vorgenommen wird.

Das Verfahren der thermischen Metallbehandlung im Verbrennungsofen mit direkter oder indirekter Heizung (die zweite Ausführungsform des Verfahrens) beruht auf der Verbrennung von einem Gemisch aus flüssigem oder gasförmigem Treibstoff und erwärmter Luft. Das Verfahren umfasst die Metallerwärmung bis zu einer Zwischentemperatur, einer nachfolgenden Metallerwärmung bis zu einer Betriebstemperatur und das Halten der Betriebstemperatur. Dabei erfolgt die Verbrennung des genannten Treibstoff- und Warmluftgemisches mindestens bei Erwärmung des Metalls bis zur Zwischentemperatur und bei einer Luftüberschusszahl unter 2,0. Das Verfahren ist dadurch gekennzeichnet, dass die Erwärmung des zu behandelnden Metalls bis zur Betriebstemperatur unter Erhöhung der Luftüberschusszahl vorgenommen wird, so dass die Luftüberschusszahl vorwiegend im Bereich von 2,0 bis 6,0 liegt. Das Halten bei der Betriebstemperatur wird bei konstanter oder variabler Luftüberschusszahl vorgenommen. Die Luftüberschusszahl beträgt mehr als 2,0 und liegt vorwiegend im Bereich bis 6,0.

Der Verbrennungsofen mit direkter oder indirekter Heizung umfasst:

1 einen geheizten Raum mit einer Austrittsöffnung für die Verbrennungsprodukte,

2 mindestens einen Brenner zur Verbrennung des gasförmigen oder des flüssigen Treibstoffs gemischt mit Warmluft bei einem bestimmten Verhältnis von Treibstoff zur erwärmten Luft, wobei dieses Verhältnis durch die entsprechende Luftüberschusszahl gekennzeichnet ist, und

3 ein System zur Lufterwärmung und -zuführung zu jedem Brenner in der erforderlichen Menge.

Der Verbrennungsofen ist dadurch gekennzeichnet, dass das System der Erwärmung der Luft und der Zuführung der Luft zu jedem Brenner in erforderlicher Menge baumäßig so ausgeführt ist, dass die Lufterwärmung und -zuführung in solcher Menge sichergestellt ist, dass eine Luftüberschusszahl von über 2,0 und vorwiegend im Bereich bis 6,0 einstellbar ist.

Der Verbrennungsofens mit direkter oder indirekter Heizung umfasst ferner:

- beispielsweise zwei Brenner zur Verbrennung des gasförmigen oder des flüssigen Treibstoffs gemischt mit Warmluft bei einem bestimmten Verhältnis von Treibstoff zur erwärmten Luft, wobei dieses Verhältnis durch die entsprechende Luftüberschusszahl gekennzeichnet ist,

- einen Zuführungskanal für den gasförmigen oder den flüssigen Treibstoff,

- einen Kanal zur Abführung der gekühlten Verbrennungsprodukte nach draußen,

- ein System zur Erwärmung der Luft und ihrer Zuführung in jeden Brenner, welcher einen Außenluftzuführungskanal und zwei Regenerativgitterkammern einschließt. Jede der Regenerativgitterkammern hat einen Innenraum mit zwei Eintritts- und Austrittsöffnungen. Der Innenraum ist mit einer Schicht von wärmeübertragenden Elementen mit einem bestimmten Volumen gefüllt; und

- ein Steuer- und Schaltsystem der genannten Kanäle, Brenner und Regenerativgitterkammern. Das Steuer- und Schaltsystem ist so ausgeführt, dass die Brenner und die Regenerativgitterkammern die zyklisch abwechselnden Funktionen erfüllen. Jede der Regenerativgitterkammern dient in einem Arbeitszyklus der Heizvorrichtung des Verbrennungsofens als Mittel zur Erwärmung der genannten wärmeübertragenden Elemente durch die heißen Verbrennungsprodukte. Im anderen Zyklus hat jede der Regenerativgitterkammern die Funktion der Lufterwärmung durch die im vorhergehenden Zyklus erwärmten wärmeübertragenden Elemente. Jeder der Brenner fungiert in einem Arbeitszyklus der Heizvorrichtung des Verbrennungsofens als Brenner. Im anderen Zyklus dient jeder der Brenner als Austrittsöffnung zur Abführung der Verbrennungsprodukte aus dem beheizten Raum. Die Vorrichtung ist dadurch gekennzeichnet, dass der Innenraum jeder der Regenerativgitterkammern mit einer solchen Schicht von wärmeübertragenden Elementen gefüllt ist, deren Volumen folgender Gleichung entspricht:

$$V = K \ \alpha \ B_1,$$

wobei:

$V$ das Volumen der Schicht der wärmeübertragenden Elemente in $m^3$ ist, welche den Innenraum der Regenerativgitterkammer füllt,

$K$ der Proportionalitätsfaktor ist; der von der Treibstoffart, von der Art und Größe der wärmeübertragenden Elemente, von der Temperatur der Luft und der Verbrennungsprodukte in den Eintritts- und Austrittsöffnungen der Regenerativgitterkammern und von der Arbeitszyklusdauer der Heizvorrichtung des Verbrennungsofens abhängig ist,

$\alpha$ die Luftüberschusszahl ist, welche je nach der erforderlichen Betriebsart der thermischen Behandlung im Verbrennungsofen gewählt ist, wobei die Luftüberschusszahl höher als 2,0 und vorwiegend im Bereich bis 6,0 einstellbar ist,

$B_1$ der Treibstoffverbrauch (gasförmiger oder flüssiger Treibstoff in $m^3$/St) je Brenner bei $\alpha = 1$ ist.

Beispielsweise kann jede der Regenerativgitterkammern einen Innenraum mit zwei Eintritts- und Austrittsöffnungen aufweisen. Der Innenraum ist mit einer Schicht von wärmeübertragenden Elementen mit einem bestimmten Volumen gefüllt. Jeder der Brenner ist über ein Ventil mit dem Zuführungskanal für den gasförmigen oder den flüssigen Treibstoff verbunden. Jeder der Brenner ist weiter mit einer der Eintritts- und Austrittsöffnungen einer der Regenerativgitterkammern verbunden. Die andere Eintritts- und Austrittsöffnung jeder Gitterkammer ist mit dem Luftzuführungskanal und mit dem Kanal zur Abführung der Verbrennungsprodukte über je ein Drei-Eingangs-Kippventil für jede Gitterkammer oder über ein für beide Gitterkammern gemeinsames Vier-Eingangs-Kippventil verbunden.

Jede der Regenerativgitterkammern kann einen Innenraum aufweisen, welcher mit wärmeübertragenden Elementen gefüllt und mit einem darunter angeordneten Untergitterkammerraum verbunden ist. Dabei weist der genannte Innenraum in seinem oberen Teil eine Eintritts- und Austrittsöffnung auf. Der genannte Untergitterkammerraum hat eine andere Eintritts- und Austrittsöffnung mit einem Absperrventil. Die Regenerativgitterkammer ist dadurch gekennzeichnet, dass der mit wärmeübertragenden Elementen gefüllte Innenraum in Form von einigen, mindestens zwei, untereinander angeordneten Abschnitten ausgeführt ist. Jeder der Abschnitte, bis auf den untersten Abschnitt, ist mit dem nächsten untenliegenden Abschnitt mittels eines zwischen diesen Abschnitten angeordneten zusätzlichen Untergitterkammerraums verbunden. Jeder der Untergitterkammerräume hat eine zusätzliche Eintritts- und Austrittsöffnung mit einem zusätzlichen Absperrventil. Jeder Abschnitt des Innenraums ist mit einer Schicht der wärmeübertragenden Elemente mit einem bestimmten Volumen gefüllt. Das Gesamtvolumen der Elemente entspricht der Gleichung:

$$V_{max} = K \ \alpha_{max} \ B_1,$$

wobei:

$V_{max}$ das Gesamtvolumen der Schichten der wärmeübertragenden Elemente aller Abschnitte des Inneren der Regenerativgitterkammer in $m^3$ ist,

K der Proportionalitätsfaktor ist, der von der Treibstoffart, von der Art und Größe der wärmeübertragenden Elemente, von der Temperatur der Luft und der Verbrennungsprodukte in den Eintritts- und Austrittsöffnungen der Regenerativgitterkammern und von der Arbeitszyklusdauer der Heizvorrichtung des Verbrennungsofens abhängig ist,

$\alpha_{max}$ die Maximal-Luftüberschusszahl der Regenerativgitterkammer ist, die je nach der erforderlichen Betriebsart der thermischen Behandlung im Verbrennungsofen gewählt ist und eine Luftüberschusszahl höher als 2,0 und vorwiegend im Bereich bis 6,0 eingestellt ist,

$B_1$ der Treibstoffverbrauch (gasförmiger oder flüssiger Treibstoff) in $m^3$/St ist, welcher bei $\alpha = 1$ auf je eine Regenerativgitterkammer zukommt.

Dabei sind die Maximal-Luftüberschusszahl der Regenerativgitterkammer und die Luftüberschusszahlen für jeden Anschnitt des Innenraums der Regenerativgitterkammer untereinander durch folgende Gleichung verbunden:

$$\alpha_{max} = \Sigma\ \alpha_i,$$

wobei $\alpha_i$ die gewählte Luftüberschusszahl des i. Abschnittes im Innenraum der Regenerativgitterkammer ist,
i ist die laufende Nummer des Abschnittes im Innenraum der Regenerativgitterkammer. Sie hat die Werte von 1 bis n, wobei n die Anzahl der Abschnitte des Inneren der Regenerativgitterkammer ist, und
wobei das Volumen der Schicht der wärmeübertragenden Elemente, welche jeden der Abschnitte des Inneren ausfüllt, mit folgender Gleichung übereinstimmt:

$$V_i = K\ \alpha_i\ B_1,$$

dabei ist: $V_i$ das Volumen der Schicht der wärmeübertragenden Elemente des i. Abschnittes im Inneren der Regenerativgitterkammer in $m^3$.
Die Veränderliche i und die Glieder K, $B_1$ sind oben festgelegt.
Die Neuheit aller vorgeschlagenen Verfahren und Vorrichtungen stellen die in Prototype eingearbeiteten neuen technischen Merkmale dar. Diese Merkmale hängen mit der Sicherstellung der Luftüberschusszahlen $\alpha$ zusammen, welche den Wert von 2,0 überschreiten und vorwiegend im Bereich bis 6,0 eingestellt werden. In Bezug auf Verfahren sind diese neuen technischen Merkmale neue Betriebsarten zur Realisierung der vorgeschlagenen Verfahren. In Bezug auf Vorrichtungen sind es die neuen baulichen Besonderheiten, welche funktionsmäßig für das System der Lufterwärmung des Verbrennungsofens nach der ersten Ausführungsform der Heizvorrichtung beschrieben sind, oder welche (bei übrigen Ausführungsformen der Vorrichtungen) die Menge (das Volumen) der wärmeübertragenden Elemente kennzeichnen, die in den Innenräumen (oder Abschnitten) der Regenerativgitterkammern der Verbrennungsöfen angeordnet werden oder sind.
Aufgrund der von den Urhebern der Erfindung durch Versuche ermittelten Angaben wird weiter unten das neue technische Ergebnis angeführt, welches aus der Sicht des Stands der Technik unerwartet und nicht vorhersagbar ist. (war?) Dieses Ergebnis ergibt sich aus der Anwendung der vorgeschlagenen technischen Lösungen, welche in den Öfen mit direkter und indirekter Heizung die Verbrennung von Treibstoff bei hohen Luftüberschusszahlen ($\alpha$ mehr als 2,0) realisieren. Das daraus resultierende interessante technische Ergebnis ermöglicht es, die Wirksamkeit der bestehenden Methoden zur Bekämpfung der Zunderbildung, des Kohlenstoffentzugs und der Wasserstoffanreicherung der Metalle auf neue Weise zu betrachten. Es weist auf das Vorhandensein von einer ganzheitlichen Betrachtungsweise der Lösung dieser Probleme hin.
Die Nutzung aller vorgeschlagenen Ausführungsformen der Verfahren und der Vorrichtungen zur thermischen Behandlung im Verbrennungsofen mit direkter oder indirekter Heizung der Metalle und der Erzeugnisse (Blöcke, Barren, Knüppel usw.) aus Stahl und Nichteisenmetallen, insbesondere der Titanlegierungen ist möglich. Das stellt einen wesentlichen Abbau des Metallabbrands im Vergleich zu bekannten Verfahren und Vorrichtungen sicher (wie es in den unten angeführten Beispielen der Realisierung des Verfahrens gezeigt wird): Für Stahl St 10 bis zu 40 %, für Titanlegierung Ti - 6 Al - 4V fast um das 2,5-fache.
Das herabgesetzte Niveau von Metallabbrand bei der Erwärmung gemäß der vorgeschlagenen Erfindung ist vergleichbar mit dem Abbrandniveau, welches bei der Erwärmung im Elektroofen in Luftatmosphäre ermittelt wurde.

Jedoch ist der spezifische Aufwandswert im Zusammenhang mit der Erwärmung von 1 Tonne der Erzeugnisse bei Erdgasheizung der Öfen mehrfach geringer als der spezifische Wert der elektrischen Erwärmung [s. oben, M. A. Kassenkov, S. 434 - 435, sowie der Artikel "Probleme der Energieeinsparung bei Erwärmung der Erzeugnisse aus Titan- und Alu-Legierungen vor Umformung", Kasjaev M.D., Markin V.P., Lissijenko V.G., Loshkar'ov N.B., Kissilev Ye.V., Saveliev V.A., Zmmerling V.Ya., Sammelwerk Thermophysik und Informatik im Metallurgiebereich: Probleme und Leistungen. Unterlagen der Internationalen Konferenz zum 300-jährigen Jubiläum der Metallurgie im Uralgebiet und 80-jährigen Jubiläum der Fakultät für Metallurgie und des Lehrstuhls "Thermophysik und Informatik im Metallurgiebereich", Ekaterinburg, 2000, S. 265 : 272].

Außerdem wird die Minderung der Wasserstoffanreicherung der Metalle und ihrer Legierungen, z.B. Titan und Titanlegierungen, Magnesium und Magnesiumlegierungen sowie Stahl sichergestellt.

Das genannte technische Ergebnis wird bei den vorgeschlagenen Verfahren und Vorrichtungen mit direkter und indirekter Heizung durch die Sicherstellung der entsprechenden Zusammensetzung der Atmosphäre (der Gasphase) der Verbrennungsprodukte bei der Verbrennung von gemischter Heißluft und flüssigem oder gasförmigem Treibstoff bei vorgeschlagenen Luftüberschusszahlen $\alpha$ von über 2,0 erreicht. Insbesondere gilt der erkannte Wasserdampf-Konzentrationsabbau (Partialdruckabbau) sogar bei einer Erhöhung der Sauerstoffkonzentration (Partialdruck) als Ursache für die Abnahme von Abbrand und die Wasserstoffanreicherung der Metalle.

Der Einsatz der vorgeschlagenen Verfahren und Vorrichtungen in Strahlungsflammöfen mit direkter Heizung zum Schmelzen von Nichteisenmetallen wird es auch ermöglichen, die Ausbeute des geeigneten Metalls dank Abbrandminderung zu erhöhen.

Der Einsatz der vorgeschlagenen Verfahren und Vorrichtungen von indirekt beheizten Flammöfen stellt die Erhöhung der Muffellebensdauer sowie eine dementsprechende Senkung der Betriebskosten und der Selbstkosten der thermischen Metallbehandlung durch die Abbrandminderung an Muffelwänden (Strahlungsrohren, Tiegel) sicher.

Bei einer thermischen Behandlung von Metall- und Nichtmetallerzeugnissen nach dem vorgeschlagenen Verfahren und den vorgeschlagenen Vorrichtungen in Verbrennungsöfen mit direkter oder indirekter Heizung bei Luftüberschusszahl über 2,0 werden größere Luftmengen in den geheizten Ofenraum oder ins Strahlungsrohr befördert. Dank der erhöhten Bewegungsgeschwindigkeit der Verbrennungsprodukte im geheizten Ofenraum und im Strahlungsrohr wird dabei die Konvektionskomponente des Wärmeaustausches erhöht. Dies bedingt eine Reduzierung der Wärmeübertragungsdauer von den Verbrennungsprodukten an die im Verbrennungsofen behandelten Erzeugnisse und die Erhöhung der Ofenleistung. Die Reduzierung der Erwärmungsdauer stellt eine zusätzliche Minderung von Abbrand, Kohlenstoffentzug und Wasserstoffanreicherung der erwärmten Metalle dar.

Durch die geringeren Kosten der thermischen Metallbehandlung bei Flammenerwärmung und die erreichte Vergleichbarkeit der Abbrandgrade wird die Erweiterung der Anwendungsgebiete des vorgeschlagenen Verfahrens und der dieses Verfahren realisierenden Vorrichtungen sichergestellt. Das vorgeschlagene Verfahren kann das bekannte Verfahren zur thermischen Behandlung der Metalle in elektrischen Öfen ersetzen.

Die zweite Ausführungsform des Verfahrens der thermischen Metallbehandlung im Verbrennungsofen mit direkter oder indirekter Heizung (dreistufige Erwärmung mit variablem $\alpha$-Wert) ist im Vergleich zu der einstufigen Ausführungsform (mit konstantem $\alpha$-Wert) wirtschaftlicher. In der ersten Realisierungsstufe der zweiten Ausführungsform des Verfahrens, nämlich bei der Erwärmung bis zur Zwischentemperatur, ist die Metalloberflächentemperatur ziemlich gering (z. B. max. 650 bis 800 °C für Stahl), und der Oxidationsvorgang verläuft nur träge. Es ist unzweckmäßig, die Luftüberschusszahl zu erhöhen und elektrische Energie für die Zu- und Abführung von vergrößerten Mengen an Luftverbrennungsprodukten zu verbrauchen. Nach der Temperaturerhöhung in der zweiten und der dritten Stufe des Verfahrens (die Erwärmung bis zur Betriebstemperatur und das Halten bei der Betriebstemperatur) nimmt der Abbrand (praktisch exponential) zu. In diesem Fall ist der Abbrand mittels Erhöhung der Luftüberschusszahl a und Zuführung von zusätzlichen Warmluftmengen zum Brenner zu bekämpfen. Dabei wird der Energieaufwand durch die Wirkung von Metalloxidationsabnahme im Ofen und dementsprechender Zunahme der geeigneten Metallausbeute überdeckt. Das Gleiche passiert bei thermischer Behandlung der wasserstoffangereicherten Metalle.

Die erste Ausführungsform des Verbrennungsofens mit direkter oder indirekter Heizung ist die allgemeine Ausführung der vorgeschlagenen Vorrichtungen. Sie stellt die Lösung der gestellten Aufgabe folgenderweise sicher. Die bauliche Ausführung des Systems zur Erwärmung der Luft und Zuführung der Luft zu jeden Brenner in erforderlicher Menge ermöglicht die Erwärmung und die Luftzuführung in einer solchen Menge, die die Luftüberschusszahl von über 2,0 und vorwiegend im Bereich bis 6,0 einstellbar sicherstellt. Diese Ausführungsform sieht den Einsatz von mindestens einem Brenner im Verbrennungsofen vor, dessen Warmluftversorgung sowohl durch die abwechselnd im Impulsbetrieb laufenden Regenerativgitterkammern als auch durch einen Rekuperator oder den elektrischen Heizer im kontinuierlichen Lufterwärmungsbetrieb sichergestellt wird.

Die zweite Ausführungsform des Verbrennungsofens mit direkter oder indirekter Heizung entspricht der optimalen Konstruktion des Verbrennungsofens. Sie umfasst zwei verschiedene Treibstoff-Brenner, zwei Regenerativgitterkammern und ein Steuer- und Schaltsystem. Das Steuer- und Schaltsystem bewirkt die abwechselnde Funktion jeder der Regenerativgitterkammern, welche die zu den Brennern zugeführte Luft erwärmt (zyklischer Impulsbetrieb). Jede der Gitterkammern stellt die Realisierung der vorgeschlagenen Heizverfahren des Verbrennungsofens bei Luftüberschusszahl α von über 2,0 (vorwiegend bis 6,0) sicher.

Die Heizvorrichtung des Verbrennungsofens mit direkter oder indirekter Heizung weist folgende Konstruktion auf. Sie umfasst zwei abwechselnde Treibstoff-Brenner, zwei Regenerativgitterkammern und Kippventile (zwei Drei-Eingangsventile oder ein Vier-Eingangsventil). Die Ventile gehören zu einer der Ausführungen des Schaltsystems. Das Schaltsystem bewirkt die abwechselnde Funktion jeder der Regenerativgitterkammern, welche die zu den Brennern zugeführte Luft im zyklischen Impulsbetrieb erwärmt. Jede der Gitterkammern stellt die Realisierung der vorgeschlagenen Heizverfahren des Verbrennungsofens bei einer Luftüberschusszahl α von über 2,0 (vorwiegend bis 6,0) sicher.

Die vorgeschlagenen Ausführungen der Regenerativgitterkammer des Verbrennungsofens mit direkter oder indirekter Heizung sind Elemente (Teile) des vorgeschlagenen Verbrennungsofens zur Metallerwärmung, welche die Lösung der gestellten Aufgabe gewährleisten.

Die erste Ausführungsform der Regenerativgitterkammer entspricht der allgemeinen Konstruktion solcher Gitterkammern. Sie stellt die Realisierung der vorgeschlagenen Heizverfahren des Verbrennungsofens mit direkter oder indirekter Heizung bei Luftüberschusszahl a von über 2,0 (vorwiegend bis 6,0) und bei in den Patentansprüchen angegebenem Volumen der wärmeübertragenden Elemente im Innenraum der Gitterkammer sicher.

Die zweite Ausführungsform der Regenerativgitterkammer stellt die Konstruktion der Regenerativgitterkammer dar, wonach einige mit wärmeübertragenden Elementen ausgefüllte Abschnitte des Inneren der Regenerativgitterkammer untereinander angeordnet werden. Die Abschnitte sind untereinander mit zusätzlichen Untergitterkammerräumen verbunden, so dass die genannten Abschnitte folgerichtig zueinander sowie zur Bewegungsrichtung der Warmluft oder der abkühlenden Verbrennungsprodukte des verbrannten Treibstoff- und Luft-Gemisches durch die Gitterkammer angeordnet sind. Dabei wird das genannte Volumen der wärmeübertragenden Elemente in jedem Abschnitt des Innenraums der Gitterkammer eingehalten. Jeder zusätzliche Untergitterkammerraum jedes Abschnitts weist eine Eintritts- und Austrittsöffnung mit Absperrventil auf. Dadurch kann jene oder eine andere Reihenfolge der Abschnitte in Betrieb gehen. Somit kann die Regenerativgitterkammer nach der zweiten Ausführungsform des vorgeschlagenen Verfahrens bei unterschiedlichen Luftüberschusszahlen α, einschließlich Luftüberschusszahlen von über 2,0 (vorwiegend bis 6,0), angewendet werden.

Die dritte Ausführungsform der Regenerativgitterkammer ist die Konstruktion der Regenerativgitterkammer, in der einige mit wärmeübertragenden Elementen gefüllte Innenräume der Regenerativgitterkammer parallel zueinander sowie zu Gasströmungen angeordnet werden. Jeder der Innenräume weist seinen eigenen Untergitterkammerraum und eine Eintritts- und Austrittsöffnung mit Absperrventil auf. Das Absperrventil ermöglicht das Ein- und Ausschalten von beliebigen Innenräumen der Gitterkammer beim Lufterwärmungsvorgang. Das heißt, diese Gitterkammer kann bei unterschiedlichen, im Laufe der Realisierung der zweiten Ausführungsform des vorgeschlagenen Verfahrens veränderlichen Luftüberschusszahlen α, darunter bei α über 2,0 (vorwiegend bis 6,0), eingesetzt werden.

Somit können die zweite und die dritte Ausführungsform der Regenerativgitterkammer bei Realisierung der zweiten Ausführungsform des Verfahrens der thermischen Metallbehandlung im Verbrennungsofen mit direkter oder indirekter Heizung mit dreistufiger Erwärmung und mit variablem α-Wert benutzt werden. Der Einsatz von solchen Regenerativgitterkammern bei der Erwärmung mit variabler Luftüberschusszahl α mindert das Wärmebeharrungsvermögen der Gitterkammer bei einer Veränderung von α. Das liegt daran, dass die Konstruktion solcher Gitterkammern die Änderung des α-Wertes mittels der physikalischen Veränderung des Volumens der wärmeübertragenden Arbeitselemente der Gitterkammer voraussetzt. Das verringert den Einfluss der Warmluft in der Gitterkammer auf die Ofentemperatur. Außerdem stellt die Erhöhung der Stabilität bei Aufrechterhaltung der vorgegebenen Temperaturverhältnisse die thermische Metallbehandlung sicher.

Die Erfindung wird anhand von in den Zeichnungen dargestellten Ausführungsbeispielen näher erläutert. Es zeigen:

Fig. 1    ein Übersichtsschema der Heizvorrichtung des Verbrennungsofens mit direkter Heizung zur Realisierung der ersten und der zweiten Ausführungsform der Erfindung, nämlich der Vorrichtung mit Regenerativgitterkammern nach der ersten Ausführungsform;

Fig. 2    die Kennlinie der Abhängigkeit des Metallabbrands (Ordinatenachse, $g/cm^2$) von der Luftüberschusszahl α (Abszissenachse, dimensionslose Größe) bei Erwärmung der Probestücke aus Stahl St 10;

Fig. 3    die Kennlinie der Abhängigkeit der Konzentration des Sauerstoffs $O_2$, des Kohlendioxids $CO_2$ und der Wasserdämpfe $H_2O$ (Ordinatenachse, %) von der Luftüberschusszahl α (Abszissenachse, dimensionslose Größe);

Fig. 4    die Kennlinie der Abhängigkeit des Metallabbrands (Ordinatenachse, $g/cm2$) von der Luftüberschusszahl α (Abszissenachse, dimensionslose Größe) bei Erwärmung der Probestücke aus Titanlegierung Ti - 6 Al - 4V;

Fig. 5    die Kennlinie der Abhängigkeit des Volumens der wärmeübertragenden Elemente der Regenerativgitterkammer (Ordinatenachse, m$^3$) vom Brennstoffverbrauch (Abszissenachse, m$^3$/St). Die wärmeübertragenden Elemente der Regenerativgitterkammer sind als Korundkugeln mit einem Durchmesser von 20 mm ausgeführt. Als Brennstoff wird in diesem Fall Erdgas gebraucht. Die Luftüberschusszahl $\alpha$ beträgt 2,0 bis 7,0;

Fig. 6    ein vereinfachtes Übersichtsschema der Heizvorrichtung des Verbrennungsofens mit direkter Heizung nach der dritten Ausführungsform mit zwei Brennern, zwei Regenerativgitterkammern und der 4-Eingangs-Umlegeklappe im Schaltsystem; jedes Regenerativgitter ist nach der ersten Ausführungsform der Regenerativgitterkammer ausgeführt;

Fig. 7    einen Schaltplan der Regenerativgitterkammer nach der zweiten Ausführungsform. Die Abschnitte des Inneren der Regenerativgitterkammer werden nacheinander angeordnet und untereinander verbunden. Das ist zum Betrieb bei verschiedenen im Laufe des Betriebs variablen Luftüberschusszahlen $\alpha$ erforderlich;

Fig. 8    ein Schema der Regenerativgitterkammer nach der dritten Ausführungsform. Die inneren Räume der Regenerativgitterkammer werden parallel zueinander angeordnet. Das ist zum Betrieb bei verschiedenen im Laufe des Betriebs variablen Luftüberschusszahlen $\alpha$ erforderlich;

Fig. 9    eine Heizvorrichtung des Verbrennungsofens mit indirekter Heizung mit einem Strahlungsrohr;

Fig. 10    eine Heizvorrichtung des Verbrennungsofens mit indirekter Heizung mit einem Tiegel;

Fig. 11    den linken Teil des Schaltplans der Versuchsanlage zur Realisierung des vorgeschlagenen Verfahrens und

Fig. 12    den rechten Teil des Schaltplans der Versuchsanlage zur Realisierung des vorgeschlagenen Verfahrens.

In Fig. 1 ist ein Ofen 1 zur Wärmebehandlung (thermischen Behandlung) von Metall abgebildet. Der Ofen 1 wird mit einer konstanten Luftüberschusszahl betrieben, die während der Wärmebehandlung unveränderlich bleibt. Der Ofen 1 in Fig. 1 entspricht der ersten und der zweiten Ausführungsform der Heizvorrichtung des Verbrennungsofens mit direkter Heizung. Die Heizvorrichtung enthält zwei Brenner, zwei Regenerativgitterkammern und zwei 3-Eingangs-Umlegeklappen im Steuer- und Schaltsystem. Jede der Regenerativgitterkammern ist nach der ersten Ausführungsform der Regenerativgitterkammer ausgeführt. Dabei wird die erste Ausführungsform des vorgeschlagenen Verfahrens der thermischen Metallbehandlung bei konstanter, im Laufe der Wärmebehandlung unveränderlicher Luftüberschusszahl $\alpha$, optimal realisiert.

Der Ofen 1 ist auf einem Fundament 2 aufgestellt und enthält eine Heizvorrichtung. Die Heizvorrichtung umfasst den beheizten Raum (ebenfalls Arbeitsraum) 3. Darin wird eine Bühne (Herd) 5 mit dem thermisch behandelten Metall 6 auf Rädern (Schienen) oder Rollen 4 angeordnet. Der Ofen 1 kann mit Erzeugnissen aus Eisen oder Nichteisenmetallen und ihren Legierungen zur thermischen Behandlung beschickt werden. Um die Abdichtung des beheizten Raums 3 zwischen der Bühne 5 und der Wand des beheizten Raums 3 sicherzustellen, sind Sandverschlüsse 7 vorgesehen. Die Heizvorrichtung enthält die im Mauerwerk des Ofens 1 angeordneten Brenner: Der erste Brenner 8 ist links und der zweite Brenner 9 rechts angeordnet. Jeder Brenner (8, 9) enthält je einen Brennerstein (jeweils 10, 11), einen Zündbrenner (in der Zeichnung nicht abgebildet) und je einen Kanal (Gaslanzen) 12, 13 für die Zuführung des gasförmigen Treibstoffs. Der Kanal 12, 13 ist mit dem Kanal (gemeinsame Rohrleitung) 16 über je ein steuerbares Zweieingangs-Absperrventil 14, 15 verbunden, um den gasförmigen Treibstoff in den Ofen 1 zuzuführen.

In der beschriebenen Konstruktion des Verbrennungsofens 1 fungiert die Austrittsöffnung (Brennerstein) 17, 18 jedes Brenners 8, 9 beim eingeschalteten Brenner als Flammquelle des Brenners. Beim ausgeschalteten Brenner fungiert die Austrittsöffnung als eine Öffnung zur Ableitung der heißen Verbrennungsprodukte aus dem Arbeitsraum (beheizten Raum) 3 des Ofens 1.

Im Mauerwerk des Ofens 1 sind zwei Regenerativgitterkammern angeordnet. Die Gitterkammer 19 ist links und die Gitterkammer 20 ist rechts von der vertikalen Symmetrieachse des Ofens 1 angeordnet. Jede der Gitterkammern 19, 20 ist als eine ausgefütterte Kammer mit Innenraum 21, 22 ausgeführt. Der Innenraum 21, 22 wird mit wärmeübertragenden Elementen, z. B. in Form von einer Schicht Korund- oder Metallkugeln, gefüllt. Der Innenraum 21, 22 jeder Gitterkammer 19, 20 weist eine obere Eintritts- und Austrittsöffnung 23, 24 und eine untere Eintritts- und Austrittsöffnung 25, 26 auf. Die wärmeübertragenden Elemente im Innenraum 21 (22) jeder Gitterkammer 19 (20) sind auf ein Gitter gelegt. Unter dem Gitter befindet sich der Untergitterkammerraum mit der unteren Eintritts- und Austrittsöffnung 25 (26).

Jede der in Fig. 1 abgebildeten Regenerativgitterkammern 19 (20) gehört zur ersten Ausführungsform der Gitterkammer der Erfindung. Baumäßig ist sie folgenderweise ausgeführt. Der Innenraum 21 (22) der Gitterkammer enthält eine Menge (ein Volumen) der wärmeübertragenden Elemente gemäß der Erfindung. Diese Menge stellt die erforderliche Luftüberschusszahl sicher, das heißt, die Luftüberschusszahl liegt im Bereich von über 2,0 und vorzugsweise bis 6,0. Diese Gitterkammern (19, 20) sind während der thermischen Metallbehandlung mit keinen Mitteln zur Änderung der genannten Menge der wärmeübertragenden Elemente unmittelbar versehen.

Jede der Gitterkammern 19, 20 fungiert in einem Arbeitszyklus der Heizvorrichtung des Verbrennungsofens mit den heißen Verbrennungsprodukten als Mittel zur Erwärmung der wärmeübertragenden Elemente, insbesondere der Korundkugeln. In einem anderen Arbeitszyklus fungiert jede der Gitterkammern 19, 20 als Mittel zur Erwärmung der Luft durch die beim vorigen Arbeitszyklus erwärmten wärmeübertragenden Elemente. Um solche Funktionsweise der Gitterkammern zu ermöglichen, ist die obere Eintritts- und Austrittsöffnung 23 (24) der Gitterkammer 19 (20) mittels des Kanals 27 (28) mit dem Kanal 12 (13) des Brenners 8 (9) und über diesen Kanal mit der Austrittsöffnung 17 (18) des Brenners 8 (9) verbunden. Die untere Eintritts- und Austrittsöffnung 25 (26) der Gitterkammer 19 (20) ist mittels eines Rohrstutzens 29 (30) und über ein steuerbares Dreieingangs-Kippventil 31 (32) mit dem Kanal 33 für die Zuführung der "kühlen", nicht erwärmten Luft von draußen verbunden (die Luftquelle und der Lüfter sind nicht abgebildet). Die untere Eintrittsund Austrittsöffnung 25 (26) ist auch mit dem Kanal 34 zur Ableitung der abgekühlten Verbrennungsprodukte verbunden und dieser Kanal mit einem Rauchabsauger und einem Rauchschlot (in der Zeichnung nicht abgebildet).

Das Absperrventil 14 (15) weist zwei Zustände auf; offen und geschlossen. Im offenen Zustand stellt das Ventil 14 (15) die Zuführung des gasförmigen Treibstoffs aus dem Kanal 16 zum Brenner 8 (9) sicher. Im geschlossenen Zustand stoppt das Ventil 14 (15) die Zuführung des Treibstoffs zum Brenner und verhindert gleichzeitig die Abführung der in die Öffnung 17 (18) des Brenners 8 (9) einströmenden Verbrennungsprodukte aus dem beheizten Raum 3 des Ofens 1, Über diese Öffnung 17 (18) werden die Verbrennungsprodukte über den Kanal 27 (28) und die obere Eintritts- und Austrittsöffnung 23 (24) in den Innenraum 21 (22) der Gitterkammer 19 (20) weitergeleitet.

Das Dreieingangs-Kippventil 31 (32) weist ebenfalls zwei Zustände auf. Beim ersten Zustand stellt das Ventil 31 (32) die Verbindung der unteren Eintritts- und Austrittsöffnung 25 (26) der Gitterkammer 19 (20) über den Rohrstutzen 29 (30) mit dem Kanal 34 sicher. Darüber erfolgt die Ableitung der abgekühlten Verbrennungsprodukte aus der Gitterkammer 19 (20). Im zweiten Zustand stellt das Ventil 31 (32) die Verbindung der unteren Eintritts- und Austrittsöffnung 25 (26) der Gitterkammer 19 (20) über den Rohrstutzen 29 (30) mit dem Kanal 33 für die Zuführung der Kühlluft in die Gitterkammern 19, 20 sicher.

Der Kanal 27 (28) der Gitterkammer 19 (20) dient beim eingeschalteten Brenner 8 (9) jeweils für die Zuführung der erwärmten Luft aus der Gitterkammer 19 (20) in den Brenner 8 (9). Beim ausgeschalteten Brenner 8 (9) werden die Verbrennungsprodukte aus dem Arbeitsraum 3 des Ofens 1 über den Kanal 27 (28) in die Gitterkammern 19 (20) weitergeleitet. Somit strömt die im Innenraum 21, 22 der Gitterkammer 19, 20 erwärmte Luft in jeder Gitterkammer von unten nach oben (gemäß Fig. 1). Die heißen Verbrennungsprodukte bewegen sich im Innenraum 21, 22 der Gitterkammer 19, 20 von oben nach unten.

Die Öffnung 35 (36) im unteren Teil jeder Gitterkammer ist zur Reinigung der wärmeübertragenden Elemente (nämlich zur Entzunderung) und zur Entfernung der Elemente aus der Gitterkammer 8 (9) vorgesehen. Im oberen Teil jeder Gitterkammer gibt es eine Ladelücke 37 (38) zur Beschickung mit neuen wärmeübertragenden Elementen. Die Entfernung oder die Beschickung von wärmeübertragenden Elemente mittels Lücken 37 (38) und Öffnungen 35 (36) nehmen ca. 20 - 30 Minuten in Anspruch. Dies erfolgt in der Praxis normalerweise bei der Bedienung des Ofens 1 während der Pause zwischen den einzelnen Abläufen der thermischen Metallbehandlung.

Die Steuerung des Betriebs der Heizvorrichtung des Ofens 1 erfolgt über die Steuereinheit 39. Die Ausgänge 40, 41, 42 und 43 der Steuereinheit 39 sind mit den Steuereingängen der jeweiligen Ventile 31, 14, 15 und 32 verbunden. Um die simultane Trelbstoffzuführung zu den Brennern 8, 9 und die Zündung des Gemisches aus Treibstoff und der erwärmten Luft sicherzustellen, ist die Steuereinheit 39 mit entsprechenden Verbindungen mit Zündbrennern der Brenner 8, 9 (in der Zeichnung nicht abgebildet) versehen. Die Steuereinheit 39 gibt die Zyklusarbeit der Brenner 8, 9 und der Regenerativgitterkammern 19,20 vor.

Das System zur Erwärmung der Luft und zur Zuführung der Luft in erforderlicher Menge zum Brenner 8 (9) umfasst in diesem Fall:

1 einen Kanal 33 für die Zuführung der Außenluft,

2 einen Kanal 34 für die Abführung der gekühlten Verbrennungsprodukte nach draußen und

3 zwei Regenerativgitterkammern 19, 20.

Jede der Regenerativgitterkammern weist einen Innenraum 21, 22 mit zwei Eintritts- und Austrittsöffnungen 23, 25 und 24, 26 auf. Der Innenraum ist mit einer Schicht von Korundkugeln gefüllt, welche als wärmeübertragende Elemente dienen. Diese Schicht weist ein bestimmtes Volumen auf. Die Eintritts- und Austrittsöffnungen 23:26 der Regenerativgitterkammern 19, 20 sind auf die oben genannte Weise mit dem Kanal 33 für die Zuführung der Außenluft, mit der Austrittsöffnung 17, 18 des beheizten Raums des Ofens 1, mit den Brennern 8, 9 und mit dem Kanal 34 zur Ableitung der abgekühlten Verbrennungsprodukte verbunden. Die Einzelheiten zur Ausführung der besten Ausbildung der Erfindung, zur Befüllung der Regenerativgitterkammern mit wärmeübertragenden Elementen, die Dimensionierung der Regenerativgitterkammern und die Beschreibung der Funktion der Vorrichtung werden weiter unten dargelegt.

Das Steuer- und Schaltsystem der Heizvorrichtung des Verbrennungsofens nach der zweiten Ausführungsform (Fig. 1) umfasst eine Steuereinheit 39 und Ventile 14, 15, 31, 32. Es dient der Realisierung der erforderlichen Verbindungen der oben genannten Kanäle 33, 34 mit den erwähnten Öffnungen der Gitterkammern 19, 20 und zur Aufrechterhaltung des Impulsbetriebes der Regenerativgitterkammern 19, 20 und der Brenner 8, 9. Dank einer solchen Ausführung des Steuer- und Schaltsystems können die Brenner 8 (9) und die Regenerativgitterkammern 19 (20) die zyklisch abwechselnden Funktionen erfüllen. Jede der genannten Regenerativgitterkammern dient in einem Arbeitszyklus der Heizvorrichtung des Verbrennungsofens 1 als Mittel zur Erwärmung der wärmeübertragenden Elemente durch die heißen Verbrennungsprodukte. Im anderen Zyklus dient sie als Mittel zur Lufterwärmung durch die im vorhergehenden Zyklus erwärmten wärmeübertragenden Elemente. Jeder der Brenner wirkt in einem Arbeitszyklus der Heizvorrichtung des Verbrennungsofens 1 als ein Brenner und im anderen Zyklus als eine Öffnung zur Abführung der Verbrennungsprodukte aus dem beheizten Raum.

Die wärmeübertragenden Elemente werden in den Innenraum 21, 22 der Gitterkammern 19, 20 eingebracht. Als wärmeübertragende Elemente werden In einem konkreten Ausführungsbeispiel der Vorrichtung Korundkugeln mit einem Durchmesser von 20 mm eingesetzt. Sie bestehen aus einem klassifizierten hochtonerdehattigen feuerfesten Erzeugnis ($Al_2O_3$ bis zu 96:98 %). Die Kugelform und der Durchmesser der wärmeübertragenden Elemente innerhalb von 18 bis 23 mm stellen die höchstmögliche Wärmeübertragung bei minimalem Strömungswiderstand der Gitterkammer und minimalem Energieaufwand für die Luft- und Verbrennungsproduktenförderung dar. [I. M. Distergeft, G. M. Druzhinin, P. V. Maslov. Über die Auswahl des Optimalkugeldurchmessers für Gitterkammern des Regenerativ-Heizsystems der Anwärmeöfen. Automatische Ofeneinheiten und energieeinsparende Technologien im Metallurgiebereich. Unterlagen der 2. wissenschaftlichpraktischen Konferenz für Metallurgie, 2. - 5. Dezember 2002, M., S. 142-144]. Laut Angaben vieler Forscher aus Russland und anderen Ländern sind Korundkugeln am besten geeignet, die höchste Lufterwärmungstemperatur bei kleinstem einzunehmendem Umfang der Gitterkammer zu erreichen.

Das erforderliche Volumen der Schicht der Korundkugeln, welche den Innenraum 21, 22 jeder Gitterkammer 19, 20 ausfüllen, entspricht der Gleichung:

$$V = K \; \alpha \; B_1, \qquad\qquad\qquad (1)$$

wobei:

V das Volumen der Schicht der wärmeübertragenden Elemente in $m^3$ ist, welche den Innenraum der Regenerativgitterkammer füllen,

K der Proportionalitätsfaktor ist, der von der Treibstoffart, von der Art und der Größe der wärmeübertragenden Elemente, von der Temperatur der Luft und der Verbrennungsprodukte in den Eintritts- und Austrittsöffnungen der Regenerativgitterkammern und von der Arbeitszyklusdauer der Heizvorrichtung des Verbrennungsofens abhängig ist; St.,

$\alpha$ die Luftüberschusszahl ist, welche je nach der erforderlichen Betriebsart der thermischen Behandlung im Verbrennungsofen gewählt wird. Die Luftüberschusszahl ist höher als 2,0 und wird vorwiegend im Bereich bis 6,0 eingestellt. Sie ist eine dimensionslose Größe,

$B_1$ der Treibstoffverbrauch (gasförmiger oder flüssiger Treibstoff) je Brenner bei $\alpha$ =1, $m^3$/St. ist.

Proportionalitätsfaktor K = 0,00097$\pm$, St. bei folgenden Bedingungen: 20

1 Treibstoff - Erdgas;

2 wärmeübertragende Elemente - Korundkugeln mit einem Durchmesser von 20 mm;

3 Lufterwärmung in der Gitterkammer 20 (19) von 20°C in der unteren Eintritts- und Austrittsöffnung 26 (25) und von 700 bis 1250 °C in der oberen Eintritts- und Austrittsöffnung 24 (23) der Gitterkammer 20 (19);

4 die Temperatur der in der Gitterkammer 19 (20) gekühlten Verbrennungsprodukte beträgt 900 bis 1450 °C in der oberen Eintritts- und Austrittsöffnung 23 (24) und 200 °C in der unteren Eintritts- und Austrittsöffnung 25 (26) dieser Gitterkammer 19 (20);

5 die Betriebszyklusdauer der Heizvorrichtung des Verbrennungsofens beträgt 30 bis 45 Sek.

Die Betriebszyklusdauer der Heizvorrichtung des Verbrennungsofens stimmt mit der Zeit überein, während der der in einen der Brenner (dementsprechend 9) gerichtete Warmluftstrom eine der Regenerativgitterkammern (z. B. 20) passiert. In diesem Brenner wird die mit dem Treibstoff gemischte Luft verbrannt. Während der gleichen Zykluszeit werden die Verbrennungsprodukte über den anderen Brenner 8 aus dem beheizten Raum 3 des Verbrennungsofens 1 abgeführt. Sie passieren die andere Regenerativgitterkammer 19 und erwärmen die darin befindlichen wärmeübertragenden Elemente. Danach werden die gekühlten Verbrennungsprodukte ins Rauchabgassystem (Kanal 33) befördert.

Wenn der Verbrennungsofen 1 nach Fig. 1 benutzt wird, fällt die Temperatur im geheizten Raum 3 mit der Temperatur der Verbrennungsprodukte in der oberen Eintritts- und Austrittsöffnung 23 (24) der Gitterkammer 19 (20) praktisch zusammen. Der Grund dafür ist die direkte Übertragung der Verbrennungsprodukte aus dem beheizten Raum 3 in die Gitterkammer 19 (20) über den Brenner 8 (9) und den Kurzkanal 27 (28). Bei einer anderen Konstruktion des Verbrennungsofens und einem verlängerten Kanal (27, 28) kann die Verbrennungsproduktentemperatur am Eingang in die Regenerativgitterkammer dementsprechend tiefer als die Temperatur im geheizten Ofenraum sein (in den Zeichnungen nicht abgebildet).

Die wärmeübertragenden Elemente können auch als Ziegelmauerwerk ausgeführt werden. Alles andere gleichgesetzt, wird der Proportionalitätsfaktor um das 15- bis 20-fache größer sein, als der für Korundkugeln (0,01455:0,0194$\pm$ St.) [Yu.Ya. 20 Abramenkov, T.S.Sysoeva, Theoretische Analyse der Anwendung der regenerativen Zentralwärmeausnutzung für Erwärmungsöfen, Ministerium für Bildung und Wissenschaft der Ukraine/Nationalakademie der Ukraine für Metallurgie, Dnepropetrovsk, 2002, S. 186-195]. Das heißt, dass der Regenerativgitterkammerumfang um das gleiche Vielfache vergrößert wird.

Die Ermittlung des Proportionalitätsfaktors K je nach Luft- und Verbrennungsproduktentemperatur in den Eintritts- und Austrittsöffnungen der Regenerativgitterkammer und der Betriebszyklusdauer der Heizvorrichtung des Verbrennungsofens erfolgt unter Berücksichtigung bereits vorhandener Angaben [z.B., I. M. Distergeft, G. M. Druzhinin, V. I. Shsherbinin, Die Erfahrung von VNIIMT in der Entwicklung der regenerativen Heizsysteme für Hüttenanlagen, "Stahl", 2000, Nr. 7, S. 86].

Nachfolgend wird in der Beschreibung ein Proportionalitätsfaktor K = 0,00097 St. benutzt, der den oben genannten Bedingungen entspricht.

Der oben genannte Wert K, der Vorgabewert $B_1$ und der erforderliche Wert $\alpha$ werden in die Gleichung eingesetzt. Somit kann die gesuchte Größe V für das Schichtvolumen der wärmeübertragenden Elemente im Innenraum 21 (22) der Gitterkammern 19 (20) ermittelt werden. Das Diagramm in Fig. 5 enthält die Umfangswerte der wärmeübertragenden Elemente für verschiedene $B_1$- und $\alpha$-Werte. Insbesondere beträgt das Volumen der Schicht der wärmeübertragenden Elemente V =0,232 $m^3$ bei einem Erdgasverbrauch von 80 $m^3$/St. zur Sicherstellung von $\alpha$ = 3,0. Und bei $\alpha$= 6,0 ist V = 0,46 $m^3$. Das Volumen V der Schicht der wärmeübertragenden Elemente ist der Arbeitsumfang (Nutzraum) der Regenerativgitterkammer 19 (20) und schließt in diesem Fall sowohl das Volumen der wärmeübertragenden Elemente als auch die dazwischen liegenden Räume ein.

Beim Verbrauch (Verbrennung) von Erdgas 20 $m^3$/St. am Brenner beträgt der Umfang der wärmeübertragenden Elemente für unterschiedliche Faktoren $\alpha$:

a) $\alpha$ =1,0, V = 9,7 x $10^{-5}$ x 1,0 x 20 = 0,0194 $m^3$;
b) a =3,0, V = 9,7 x $10^{-5}$ x 3,0 x 20= 0,0582 $m^3$;
c) $\alpha$ =4,2, V = 9,7 x $10^{-5}$ x 4,2 x 20 = 0,082 $m^3$;
d) $\alpha$=6,0, V=9,7x$10^{-6}$ x 6,020 = 0,120 $m^3$.

Beim Erdgasverbrauch pro Brenner von z.B. 40 $m^3$/St. und bei $\alpha$ = 3,0 beträgt das gesuchte Volumen der wärmeübertragenden Elemente 0,116 $m^3$.

Das Volumen V der Schicht der wärmeübertragenden Elemente ist gleich dem Produkt aus der Querschnittsfläche des Innenraums der Regenerativgitterkammer und der Schichthöhe der wärmeübertragenden Elemente:

$$V = SH \qquad\qquad (2)$$

wobei:

S die Querschnittsfläche des Innenraums der Regenerativgitterkammer in m$^2$ ist und

H die Schichthöhe der wärmeübertragenden Elemente im Innenraum der Regenerativgitterkammer in m.

Zur Realisierung dieser Erfindung im Ofen 1 mit einer konkreten Regenerativgitterkammer (19, 20) mit bekanntem festem Querschnitt S wird die erforderliche Schichthöhe H der wärmeübertragenden Elemente im folgenden Verhältnis festgelegt:

$$H = K \; \alpha \; B_1 / S , \qquad\qquad (3)$$

wobei K, $\alpha$, $B_1$ und S die oben definierten Größen sind.

Der Strömungswiderstand gegenüber der Luftbewegung in der Regenerativgitterkammer 19, 20 muss auf 300 bis 400 mm Ws herabgesetzt werden. Die Aufnahmeleistung des Zug- und Winderzeugers zur Luftzuführung muss reduziert werden. Dafür wird die Kugelschichthöhe H bei erforderlichen hohen Luftüberschusszahlen (das heißt, bei hohem Luftverbrauch) durch einen Wert von 0,6 bis 0,7 m begrenzt. Dabei wird die ausgefütterte Kammer der Gitterkammer mit vergrößertem Querschnitt S ausgeführt, welcher folgender Gleichung entspricht:

$$S = K \; \alpha \; B_1 / H , \qquad\qquad (4)$$

wobei alle Größen oben festgelegt sind.

Die Gleichungen (3), (4) sind mit der Gleichung (1) identisch und werden ggf. statt der Gleichung (1) bei der Berechnung von Schichtvolumen der wärmeübertragenden Elemente in den Gitterkammern 19 (20) anhand der Umfangparameter (Fläche, Höhe) benutzt.

Die Ermittlung der erforderlichen Querschnittsfläche S der Regenerativgitterkammer und der Höhe H der Schicht der wärmeübertragenden Elemente erfolgt unter Berücksichtigung ihres Einflusses auf die Kennwerte der Regenerativgitterkammer [I. M. Distergeft und andere, Regenerative Heizsysteme für Erwärmungsöfen der Walz- und Schmiedebetriebe (Entwicklungsgeschichte, Theorie und Praxis), gesammelte Werke Hüttenfeuerungstechnik, Band 5, Ministerium für Bildung und Wissenschaft der Ukraine/Nationalakademie der Ukraine für Metallurgie, Dnepropetrovsk, 2002, S. 47: 48].

Die Berechnung des erforderlichen Volumens der wärmeübertragenden Elemente gemäß Gleichung (1) erfolgt je nach Brennstoffverbrauch $B_1$, das heißt, je nach Treibstoffmenge, welche in den Brenner 8 (9) innerhalb einer Zeiteinheit zugeführt wird. Dabei hängt der Verbrauch der in die Regenerativgitterkammer 19 (20) zugeführten Luft von der Art und Menge des im Brenner innerhalb von einer Zeiteinheit verbrannten Treibstoffs ab. Dieser Verbrauch wird nach dem bekannten Verfahren ermittelt. Wird z.B. Hochofen- und Erdgasgemisch (Brennwert 2000 kkal/m$^3$) als Treibstoff benutzt, so wird bei $\alpha$ =1,05 bis 1,15 um das 2,25-fache mehr (Vol.) Luft als Treibstoff in den Brenner gefördert. Wird Erdgas als Treibstoff verwendet, so ist der Luftverbrauch, welcher einen ähnlichen $\alpha$-Wert sicherstellt, um das 10-fache größer als der Erdgasverbrauch (z. B. bei einem Erdgasverbrauch von 80 m$^3$/St. pro Brenner beträgt die Menge der in die Gitterkammer zugeführten Luft 80 x 10 = 800 m$^3$/St.).

Wenn der Ofen 1 mit unterschiedlichen während des Betriebs abwechselnden Luftüberschusszahlen arbeiten soll (Realisierung der zweiten Ausführungsform des vorgeschlagenen Verfahrens), z. B. im Bereich von 2,5 bis 4,5, wird das Volumen V der in der Regenerativgitterkammer 19 (20) angeordneten Schicht der wärmeübertragenden Elemente nach der Gleichung (1) bestimmt, um den erforderlichen max. $\alpha$-Wert, diesmal gleich 4,5, zu erhalten. Die erforderlichen Luftüberschusszahländerungen während des Betriebs des Ofens 1 mit Regenerativgitterkammern 19, 20 (Fig. 1) können z. B. durch die Änderung der innerhalb einer Zeiteinheit in die Regenerativgitterkammer (19, 20) zugeführten Luftmenge sichergestellt werden. Die wärmeübertragenden Elemente in der Regenerativkammer weisen dabei einen festen Umfang auf. Die Luft wird über den Kanal 33 anhand des entsprechenden Reglers oder Lüfters mit einem Thyristorwandler (in den Zeichnungen nicht abgebildet) zugeführt.

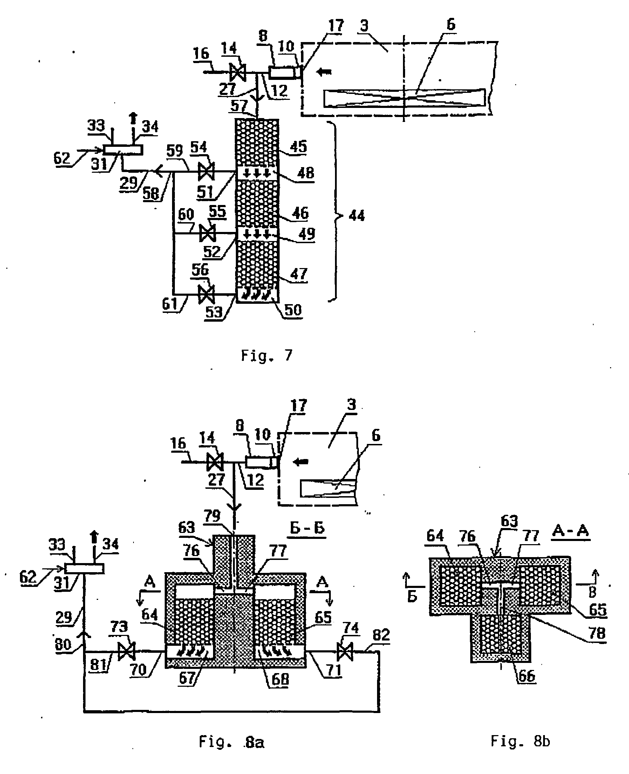

In Fig. 7 ist die Ausführung einer Regenerativgitterkammer 44 und ihre Einbindung in die Heizvorrichtung des Verbrennungsofens nach Fig. 1 abgebildet. Die Regenerativgitterkammer 44 ist nach der zweiten Ausführungsform der Gitterkammer ausgeführt. Sie stellt die Möglichkeit der Einstellung der Luftüberschusszahl unmittelbar während der thermischen Metallbehandlung (die zweite Ausführungsform des vorgeschlagenen Verfahrens der thermischen Metallbehandlung) sicher. Die Regenerativgitterkammer 44 nach Fig. 7 ist in die Heizvorrichtung ähnlich wie die Gitterkammer 19 (Fig. 1) eingeschlossen.

Die Regenerativgitterkammer 44 (Fig. 7) enthält drei untereinander angeordnete und mit wärmeübertragenden Elementen ausgefüllte Abschnitte 45, 46 und 47 des Innenraums dieser Gitterkammer. Somit bilden alle drei Abschnitte den vollen (Maximal-) Innenraum der Gitterkammer 44. Der obere Abschnitt 45 und der mittlere Abschnitt 46 sind untereinander durch den zusätzlichen Untergitterkammerraum 48 verbunden. Der mittlere Abschnitt 46 und der untere Abschnitt 47 sind untereinander durch den zusätzlichen Untergitterkammerraum 49 verbunden. Der untere Abschnitt 47 weist seinen eigenen Untergitterraum 50 auf. Jeder Untergitterkammerraum 48, 49 und 50 ist mit einer eigenen Eintritts- und Austrittsöffnung, jeweils 51, 52 und 53 versehen. Jede der Eintritts- und Austrittsöffnungen 51, 52 und 53 weist ihrerseits ein entsprechendes Absperrventil 54, 55 und 56 auf.

Die obere Eintritts- und Austrittsöffnung des oberen Abschnitts 45 ist die obere Eintritts- und Austrittsöffnung 57 der Gitterkammer 44. Die Eintritts- und Austrittsöffnungen 51 bis 53 der Untergitterräume 48 bis 50 mit ihren Absperrventile 54 bis 56 sind Eintritts- und Austrittsöffnungen der Gitterkammer 44. Die Verbindungsstelle von drei Rohrleitungen 59, 60 und 61 dient als allgemeine untere Eintritts- und Austrittsöffnung 58 der Gitterkammer 44. Die Rohrleitungen 59, 60 und 61 gehen von den jeweiligen Absperrventilen 54, 55 und 56 ab. Diese Verbindungsstelle ist über einen Rohrstutzen 29 mit dem Drei-Eingangs-Kippventil 31 verbunden. Das Kippventil 31 stellt im ersten Schaltzustand die Verbindung der unteren Eintritts- und Austrittsöffnung 58 der Gitterkammer 44 mit dem Kanal 34 zur Ableitung der abgekühlten Verbrennungsprodukte aus der Gitterkammer 44 sicher. Im zweiten Schaltzustand stellt das Kippventil 31 die Verbindung zwischen der Öffnung 58 der Gitterkammer 44 mit dem Kanal 33 für die Kühlluftzuführung in die Gitterkammer 44 sicher. Der Eingang 62 des Drei-Eingangs-Kippventils 31 ist laut Fig. 1 an den Eingang 40 der Steuereinheit 39 angeschlossen.

Die obere Eintritts- und Austrittsöffnung 57 der Gitterkammer 44 (Fig. 7) ist mittels des Kanals 27 mit dem Kanal 12 des Brenners 8 verbunden. Über diesen Kanal ist die obere Eintritts- und Austrittsöffnung 57 mit der Austrittsöffnung 17 des Brenners 8 verbunden. Die Austrittsöffnung 17 führt in den geheizten Raum 3 des Ofens 1 mit dem thermisch behandelten Metall 6.

Jeder der Abschnitte 45, 46, 47 des Innenraums der Gitterkammer 44 ist mit einer Schicht von wärmeübertragenden Elementen von bestimmtem Volumen ausgefüllt. Ihr Gesamtvolumen entspricht folgender Gleichung:

$$V_{max} = K \; \alpha_{max} \; B_1, \tag{5}$$

dabei ist:

$V_{max}$ das Gesamtvolumen der Schicht der wärmeübertragenden Elemente aller Abschnitte im Inneren der Regenerativgitterkammer 44 in $m^3$;

K der Proportionalitätsfaktor; er ist von der Treibstoffart, von der Art und Größe der wärmeübertragenden Elemente, von der Temperatur der Luft und der Verbrennungsprodukte in den Eintritts- und Austrittsöffnungen der Regenerativgitterkammern und von der Arbeitszyklusdauer der Heizvorrichtung des Verbrennungsofens abhängig, St.;

$\alpha_{max}$ die Maximal-Luftüberschusszahl der Regenerativgitterkammer 44. Sie wird je nach der erforderlichen Betriebsart der thermischen Behandlung im Verbrennungsofen gewählt. Die Luftüberschusszahl ist höher als 2,0 und wird vorwiegend im Bereich bis 6,0 eingestellt. Sie ist eine dimensionslose Größe;

$B_1$ der Treibstoffverbrauch (gasförmiger oder flüssiger Treibstoff), welcher auf die Regenerativgitterkammer 44 zukommt, bei $\alpha = 1$, $m^3$/St.

Die Maximalluftüberschusszahl der Regenerativgitterkammer 44 und die Luftüberschusszahlen für jeden der Abschnitte 45, 46, 47 des Innenraums dieser Gitterkammer stehen in folgendem Verhältnis:

$$\alpha_{max} = \Sigma \, \alpha \, , \tag{6}$$

hier ist $\alpha_i$ die gewählte Luftüberschusszahl des i. Abschnittes des Innenraums der Regenerativgitterkammer 44 (dimensionslose Größe).

i ist die laufende Nummer des Abschnitts des Innenraums der Regenerativgitterkammer 44. i hat Werte von 1 bis n, dabei ist n die Anzahl der Abschnitte im Inneren der Regenerativgitterkammer (n = 3 konkret für die Gitterkammer 44).

Das Volumen der Schicht der wärmeübertragenden Elemente, die jeden der Abschnitte 45, 46, 47 des Innenraums der Gitterkammer 44 ausfüllen, entspricht folgender Gleichung:

$$V_i = K \; \alpha_i \; B_1, \qquad\qquad\qquad (7)$$

hier ist $V_1$ das Volumen der Schicht der wärmeübertragenden Elemente des i. Abschnitts des Innenraums der Regenerativgitterkammer 44 in $m^3$;

die Veränderliche i und die Glieder K, B1 sind oben in den Erläuterungen zu den Gleichungen (6) und (5) festgelegt.

Die Einschaltung von jener oder anderer Kombinationen der Abschnitte 45 bis 47 der Gitterkammer 44 in den Ofenbetrieb wird durch die Ein- bzw. Ausschaltung der jeweiligen Absperrventile 54 bis 56 sichergestellt. Die genannten Ventile können manuell umgeschaltet bzw. ins Steuersystem (in den Zeichnungen nicht abgebildet) eingeschlossen sein.

Die Volumen der wärmeübertragenden Elemente in den Abschnitten 45 bis 47 der Regenerativgitterkammer 44 sind abhängig von den erforderlichen Verlaufparametem der thermischen Metallbehandlung und der Anzahl der Gitterkammerabschnitte (im vorliegenden Fall n = 3), die für die Realisierung der Metallbehandlung erforderlich ist. Außerdem sind sie abhängig von der Maximal-Luftüberschusszahl $\alpha_{max}$ für den gesamten Innenraum der Gitterkammer und den Luftüberschusszahlen $\alpha_i$ für jeden der Abschnitte der Gitterkammer. Die Werte von Proportionalitätsfaktor K und Brennstoffverbrauch (Erdgas), welcher auf die Regenerativgitterkammer 44 bei $\alpha= 1$ zukommt, werden für das obere Beispiel der Anwendung der Regenerativgitterkammer 19 (20) wie folgt angenommen: K = 0.00097 St., B1 = 40 $m^3$/St.

Bei der dreistufigen zweiten Ausführungsform des Verfahrens der thermischen Metallbehandlung wird zuerst eine Metallerwärmung bis 400 °C bei einer Luftüberschusszahl $\alpha$ = 1,35 (die 1. Stufe) vorgenommen. Danach folgt die Erwärmung bis zu 1200 °C bei $\alpha$ = 3,3 (2. Stufe). In der dritten Stufe erfolgt die Glühbehandlung bei $\alpha$, das bis zu 6,5 erhöht wird. Um dieses dreistufige Verfahren zu realisieren, kann eine Dreiabschnitt-Regenerativgitterkammer 44 mit den genannten Parametern eingesetzt werden.

Bei der Ausführung der ersten Stufe der zweiten Ausführungsform des Verfahrens in der Gitterkammer 44 (Fig. 7) wird nur der erste (obere) Abschnitt 45 mit einer Kennzahl $\alpha1$ = 1,35 eingesetzt (Ventil 54 eingeschaltet, Ventile 55, 56 ausgeschaltet). In der zweiten Stufe wird der Abschnitt 45 durch den zweiten Abschnitt 46 mit der Kennzahl $\alpha2$ = 1,95 ergänzt (Ventil 55 eingeschaltet, Ventile 54, 56 ausgeschaltet). In der dritten Stufe wird auch der dritte Abschnitt 47 mit der Kennzahl $\alpha3$ = 3,2 dem Ofenbetrieb zugeschaltet (Ventil 56 eingeschaltet, Ventile 54, 55 ausgeschalten). Im letzten Fall beträgt der Maximalwert des Faktors $\alpha_{max}$ 6,5 für die Gitterkammer 44 unter Berücksichtigung der Gleichung (6). In diesem Fall betragen die Volumen der wärmeübertragenden Elemente jedes der drei Abschnitte 45 bis 47 und des gesamten Innenraums der Gitterkammer 44 im Allgemeinen in Übereinstimmung mit den Gleichungen (7) und (5):

a) der erste Abschnitt 45, $\alpha_1$ =1,35, $V_1$ = 9,7 x $10^{-5}$ x 1,35 x 40 = 0,0524 $m^3$;

b) der zweite Abschnitt 46, $\alpha_2$ =1,95, $V_2$= 9,7 x $10^{-5}$ x 1,95 x 40 = 0,0757 $m^3$;

c) der dritte Abschnitt 47, $\alpha_3$=3,2, $V_3$=9,7 x $10^{-5}$ x 3,2 x 40 = 0,124 $m^3$;

d) ganze Regenerativgitterkammer 44, $\alpha_{max}$= 6,5, $V_{max}$ = 9,7 x $10^{-5}$ x 6,5 x 40 = 0,252 $m^3$.

Die Regenerativgitterkammer 63 (Fig. 8) ist nach der dritten Ausführungsform der Gitterkammer ausgeführt. Diese Ausführungsform stellt die Regelbarkeit der Luftüberschusszahl unmittelbar während der thermischen Metallbehandlung bei Verwirklichung der zweiten Ausführungsform des vorgeschlagenen Verfahrens der thermischen Metallbehandlung dar. Die Regenerativgitterkammer 63 ist in die Heizvorrichtung ähnlich wie die Gitterkammer 19 eingeschlossen (Fig. 1).

Die Regenerativgitterkammer 63 nach Fig. 8 enthält drei nebeneinander angeordnete, mit wärmeübertragenden Elementen ausgefüllte Innenräume 64, 65 und 66. Jeder der Innenräume 64, 65, 66 hat sein eigenes gasdichtes, mit Feuerfeststein ausgekleidetes Gehäuse und seinen Untergitterkammerraum jeweils 67, 68 und 69 (Untergitterkammerraum 69 des Innenraums 66 ist in Fig. 8 nicht abgebildet). Jeder Untergitterkammerraum 67, 68 und 69 hat je eine Eintritts- und Austrittsöffnung jeweils 70, 71 und 72. Jede der Öffnungen ist ihrerseits mit je einem Absperrventil 73, 74 und 75 versehen (Öffnung 72 und Ventil 75 sind in Fig. 8 nicht abgebildet). Der volle (Maximal-)Innenraum der Gitterkammer 63 setzt sich aus allen drei oben genannten Innenräumen 64 bis 66 zusammen.

Die oberen Eintritts- und Austrittsöffnungen 76, 77 und 78 der jeweiligen Innenräume 64, 65 und 66 sind mit der oberen Eintritts- und Austrittsöffnung 79 der Gitterkammer 63 verbunden. Die Eintritts- und Austrittsöffnungen 70 bis 72 der Untergitterräume 67 bis 69 mit ihren Absperrventilen 73 bis 75 sind Eintritts- und Austrittsöffnungen der Gitterkammer 63. Die Verbindungsstelle der drei Rohrleitungen 81, 82 und 83 (die letztere ist in Fig. 8 nicht abgebildet) dient als allgemeine untere Eintritts- und Austrittsöffnung 80 der Gitterkammer 63. Die Rohrleitungen 81, 82 und 83 wurden von den jeweiligen Absperrventilen 73, 74 und 75 aus verlegt. Diese Verbindungsstelle ist über einen Rohrstutzen 29 mit dem Kippventil 31 verbunden. Das Kippventil 31 stellt im ersten Schaltzustand die Verbindung der unteren Eintritts- und Austrittsöffnung 80 der Gitterkammer 63 mit dem Kanal 34 zur Ableitung der abgekühlten Verbrennungsprodukte aus der Gitterkammer 44 sicher. Im zweiten Schaltzustand stellt das Kippventil 31 die Verbindung der Öffnung 80 der Gitterkammer 63 mit dem Kanal 33 für die Kühlluftzuführung in die Gitterkammer 63 sicher. Der Eingang 62 des Kippventils 31 ist laut Fig. 1 an den Eingang 40 der Steuereinheit 39 angeschlossen.

Die obere Eintritts- und Austrittsöffnung 79 der Gitterkammer 63 ist durch den Kanal 27 mit dem Kanal 12 des Brenners 8 verbunden. Über diesen Kanal ist die obere Eintritts- und Austrittsöffnung 79 mit der Austrittsöffnung 17 des Brenners 8 verbunden. Die Austrittsöffnung 17 führt zu dem geheizten Raum 3 des Ofens 1 mit dem thermisch zu behandelnden Metall 6.

Die Einschaltung von jener oder anderer Kombinationen der Innenräume 64 bis 66 der Gitterkammer 63 wird durch die Einschaltung (Ausschaltung) der jeweiligen Absperrventile 73 bis 75 bewirkt. Die Ventile können manuell umgeschaltet bzw. ins Steuersystem (in den Zeichnungen nicht abgebildet) eingeschlossen sein.

Jeder der Innenräume 64, 65, 66 der Gitterkammer 63 ist mit einer Schicht von wärmeübertragenden Elementen von bestimmtem Volumen ausgefüllt. Ihr Gesamtvolumen entspricht folgender Gleichung:

$$V_{max} = K \; \alpha_{max} \; B_1, \qquad\qquad (8)$$

wobei: $V_{max}$ das Gesamtvolumen der Schicht der wärmeübertragenden Elemente aller Innenräume der Regenerativgitterkammer 63 in $m^3$ ist;
K der Proportionalitätsfaktor ist, St.; er ist von der Treibstoffart, von der Art und Größe der wärmeübertragenden Elemente und von der Temperatur der Luft und der Verbrennungsprodukte in den Eintritts- und Austrittsöffnungen der Regenerativgitterkammern sowie von der Arbeitszyklusdauer der Heizvorrichtung des Verbrennungsofens abhängig;
$\alpha_{max}$ die Maximal-Luftüberschusszahl der Regenerativgitterkammer 63 ist. Sie wird je nach der erforderlichen Betriebsart der thermischen Behandlung im Verbrennungsofen gewählt. Die Luftüberschusszahl ist höher als 2,0 und wird vorwiegend im Bereich bis 6,0 eingestellt. Sie ist eine dimensionslose Größe;
$B_1$ der Treibstoffverbrauch (gasförmiger oder flüssiger Treibstoff) ist, welcher auf die Regenerativgitterkammer 63 zukommt, bei $\alpha$ =1, $m^3$/St.

Die Maximalluftüberschusszahl der Regenerativgitterkammer 63 und die Luftüberschusszahlen für jeden der Innenräume (64, 65, 66) dieser Gitterkammer sind in folgender Gleichung festgehalten:

$$\alpha_{max} = \Sigma \; \alpha \, , \qquad\qquad (9)$$

hier ist $\alpha_i$ die gewählte Luftüberschussahl des i. Innenraums der Regenerativgitterkammer 63 (dimensionslose Größe);
i die laufende Nummer des Innenraums der Regenerativgitterkammer 63. i beträgt 1 bis n, dabei ist n die Anzahl der Abschnitte des Inneren der Regenerativgitterkammer (n = 3 für die konkrete Gitterkammer 63).

Das Volumen der Schicht der wärmeübertragenden Elemente, welche jeden der Innenräume 64, 65, 66 der Gitterkammer 63 ausfüllen, entspricht folgender Gleichung:

$$V_l = K \; \alpha_i \; B_1, \qquad\qquad (10)$$

hier ist $V_i$ das Volumen der Schicht der wärmeübertragenden Elemente des i. Innenraums der Regenerativgitterkammer 63 in $m^3$;

Die Veränderliche i und die Glieder K, $B_1$ sind oben in den Erläuterungen zu den Gleichungen (9) und (8) festgelegt.

Bei der Berechnung ggf. der Kennwerte (Fläche, Höhe) des Schichtvolumens der wärmeübertragenden Elemente in den Gitterkammern 44, 63 können die Gleichungen (3) und (4) angewendet werden. Diese Gleichungen sind den Gleichungen (5), (7), (8), (10) ähnlich und werden an ihrer Stelle eingesetzt.

Das Volumen der wärmeübertragenden Elemente der Regenerativgitterkammer 63 ist abhängig von den erforderlichen Verlaufparametern der thermischen Metallbehandlung und der Anzahl der Innenräume 64 bis 66 der Gitterkammer (im vorliegenden Fall n = 3). Die Anzahl der für die Realisierung der Metallbehandlung erforderlichen Innenräume und die Maximal-Luftüberschusszahl $\alpha_{max}$ sowie die Luftüberschusszahlen $\alpha_i$ für jeden der Innenräume der Gitterkammer bestimmen zudem das Volumen. Es werden K = 0,00097 St. und B1= 40 $m^3$/St. angenommen, wie es oben für das Beispiel mit der Regenerativgitterkammer 44 gezeigt ist, Bei der dreistufigen zweiten Ausführungsform des Verfahrens der thermischen Metallbehandlung wird zuerst die Metallerwärmung bis 400° C bei einer Luftüberschusszahl $\alpha$ = 1,35 (die 1. Stufe) vorgenommen. Danach folgt die Erwärmung bis zu 1200° C bei $\alpha$ = 3,3 (2. Stufe). In der dritten Stufe erfolgt die Glühbehandlung bei $\alpha$, das bis zu 6,5 erhöht wird. Um dieses dreistufiges Verfahren zu realisieren, kann eine Dreiabschnitt-Regenerativgitterkammer 63 bei den unten genannten Parametern eingesetzt werden.

Bei der Verwirklichung der ersten Stufe des Verfahrens in der Gitterkammer 63 wird der erste Innenraum 64 mit einer Kennzahl $\alpha_1$ =1,35 eingesetzt. In der zweiten Stufe wird der erste Innenraum 64 durch den zweiten Innenraum 65 mit einer Kennzahl = 1,95 ergänzt. In der dritten Stufe wird auch der dritte Innenraum 66 mit einer Kennzahl $\alpha_3$ = 3,2 dem Ofenbetrieb zugeschaltet. Dabei ist im Allgemeinen der Maximalwert des Faktors $\alpha_{max}$= 6,5 für die Gitterkammer 63 (die 3. Stufe des Verfahrens) unter Berücksichtigung der Gleichung (9). In der zweiten Stufe des Verfahrens wird die größte (innerhalb dieser Stufe) Luftüberschusszahl $\alpha$ = 3,3 benutzt. Sie setzt sich aus der Summe der Kennzahlen für den ersten und den zweiten Innenraum der Gitterkammer 63 zusammen. Die Volumen der wärmeübertragenden Elemente jedes der drei Innenräume 64 bis 66 und des gesamten Innenraums der Gitterkammer 63 weisen im Allgemeinen in Übereinstimmung mit den Gleichungen (10) und (8) folgende Werte auf: $V_1$ = 0,0524 $m^3$; $V_2$ = 0,0757 $m^3$; $V_3$=0,124 $m^3$; $V_{max}$ =0,252 $m^3$.

Die Abschnitte der Regenerativgitterkammer 44 und der Innenräume der Gitterkammer 63 können in einem gemeinsamen Gehäuse oder in verschiedenen Gehäusen ausgeführt werden. Die Gehäuse werden mittels Rohrleitungen (in den Zeichnungen nicht abgebildet) miteinander verbunden.

Jede der Regenerativgitterkammern 44, 63 (Fig. 7, 8) kann in der Heizvorrichtung des Ofens 1 (Fig. 1) anstelle der in Fig. 1 angeführten Gitterkammer 19 (20), die mit Brennern 8 (9) verbunden ist, verwendet werden.

Die Regenerativgitterkammern 19, 20, 44, 63 können ins Gehäuse des Ofens 1 eingebaut werden, wie es in Fig. 1 abgebildet ist. Sie können auch getrennt vom Gehäuse des Ofens 1 (in den Zeichnungen nicht abgebildet) angeordnet werden.

Die Regenerativgitterkammern 19, 20 können durch eine rotierende Regenerativgitterkammer ersetzt werden [Öfen für Metallerwärmung, herausgegeben von N. N. Dobrokhotov, M. L., Staatlicher wissenschaftlicher und technischer Verlag 1941, S. 247, Fig. 276; und http://www.jaspergmbh.de/deutschlecoreg_funktion.htm].

Die rotierende Regenerativgitterkammer ist getrennt vom Gehäuse des Ofens 1 ausgeführt. Sie weist mindestens zwei Abschnitte auf. Jeder der Abschnitte hat die Funktion einer der Gitterkammern 19, 20. In einem Abschnitt der Gitterkammer werden die wärmeübertragenden Elemente durch die Verbrennungsprodukte erwärmt. Im anderen Abschnitt wird die Luft erwärmt. Bei der Umdrehung der rotierenden Gitterkammer wechseln am Ende jedes Arbeitszyklus der Heizvorrichtung die Funktionen der Abschnitte. Dabei wird die Schaltsystemfunktion durch die rotierende geteilte Regenerativgitterkammer selbst (in den Zeichnungen nicht abgebildet) erfüllt.

Fig. 6 zeigt das vereinfachte Übersichtsschema der Heizvorrichtung des Verbrennungsofens mit direkter Heizung nach der dritten Ausführungsform mit zwei Brennern, zwei Regenerativgitterkammern und einem 4-Eingangs-Kippventil 136 im Steuer- und Schaltsystem. Das Ventil 136 enthält vier Ein- und Ausgänge 137, 138, 139 und 140 sowie eine Klappe, die zwei Arbeitsstellungen einnimmt. In der Stellung 141 verbindet die Klappe paarweise die Ein- und Ausgänge 137 - 138 und 139 - 140 des 4-Eingangs-Kippventils 136 miteinander. In der Stellung 142 (gestrichelt) verbindet die Klappe paarweise die Ein- und Ausgänge 140 - 137 und 138 - 139 des Ventils 136 miteinander. Der Ein- und Ausgang 137 des Ventils 136 ist über den Rohrstutzen 29 mit der unteren Eintritts- und Austrittsöffnung 25 der Gitterkammer 19 verbunden. Der Ein- und Ausgang 138 des Ventils 136 ist mit dem Kanal 34 zur Ableitung der abgekühlten Verbrennungsprodukte aus den Gitterkammern 19 (20) verbunden. Der Ein- und Ausgang 139 des Ventils 136 ist über den Rohrstutzen 30 mit der unteren Eintritts- und Austrittsöffnung 26 der Gitterkammer 20 verbunden. Der Ein- und Ausgang 140 des Ventils 136 ist mit dem Kanal 33 der Kühlluftzuführung in die Gitterkammer 19, 20 verbunden. Die Steuereinheit 39 ist in Fig. 6 nicht abgebildet. Bei der betrachteten Ausführung der Heizvorrichtung des Verbrennungsofens sind die Ausgänge 41 und 42 jeweils mit den Steuereingängen der Ventile 14 und 15 gekoppelt. Der Ausgang 43 wird nicht benutzt. Der Ausgang 40 ist mit dem Steuereingang des Ventils 136 (in der Zeichnung nicht abgebildet) verbunden. Eine solche Konstruktion der Vorrichtung ist gegenüber der aus Fig. 1 einfacher in der Ausführung. Sie hat sich im Laufe einiger Betriebsjahre gut bewährt. Es ist auch ein Schema der Heizvorrichtung der Fa. "JASPER G.m.b.H." mit einem 4-Eingangs-Kippventil(136)bekannt.[http://www.jaspergmbh.de/deutsch/pulsreg_funktion.htm].

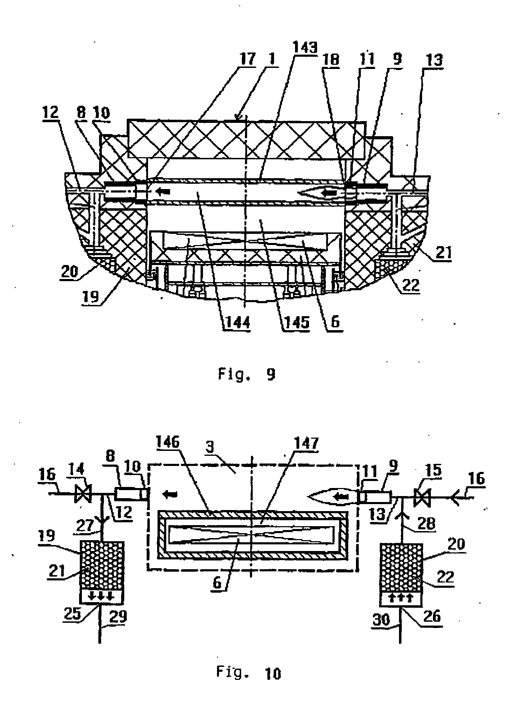

Jede der Ausführungsformen der vorgeschlagenen Heizvorrichtung kann eine Helzvorrichtung des Verbrennungsofens mit indirekter Heizung darstellen. So ist in Fig. 9 die Ausführung des Ofens 1 (Fig. 1) mit indirekter Heizung abgebildet. In diesem Ofen mit indirekter Heizung (Fig. 9) sind die Austrittsöffnungen 17 (18) der Brenner 8, 9 mit dem Strahlungsrohr 143 verbunden. Dessen Innenraum ist der beheizte Raum 144 des Ofens 1. Dabei ist das Strahlungsrohr 143 im Arbeitsbereich 145 des Ofens 1 angeordnet. Hier befindet sich auch das zu behandelnde Metall 6. Zur Sicherstellung der Abdeckung des erforderlichen Umfangs des Arbeitsraums 144 kann das Strahlungsrohr 143 ein oder mehrere U-förmige Krümmungen (in den Zeichnungen nicht abgebildet) enthalten. In Fig. 10 ist das Ausführungsschema des Ofens 1 aus Fig. 6 abgebildet, jedoch mit indirekter Heizung. Dabei befindet sich der Tiegel 146 in dem durch die Brenner 8, 9 geheizten Raum 3. Im Arbeitsbereich 147 befindet sich das zu behandelnde Metall 6. Der Tiegel 146 mit abnehmbarer Abdeckung ist in Fig. 10 schematisch abgebildet. Ansonsten ist die Konstruktion der Öfen mit indirekter Heizung der Bauweise der Öfen mit direkter Heizung ähnlich.

Die oben beschriebene Heizvorrichtung des Verbrennungsofens (Fig. 1, 6, 7, 8, 9, 10) stellt eine der Brennereinheiten (oder das Modul der Heizvorrichtung) des Verbrennungsofens 1 mit direkter oder indirekter Heizung dar. Diese Brennereinheit hat zwei Brenner 8, 9 und zwei Regenerativgitterkammern 19, 20 (oder 44, 63), die symmetrisch zur Vertikalachse des Ofens liegen. Dabei stellt jede der Regenerativgitterkammern 19 oder 20 (44, 63) die Warmluftzuführung in einen der Brenner 8 oder 9 sicher. Der Ofen 1 kann mehrere solche Brennereinheiten enthalten, die entlang dem Ofen nacheinander angeordnet werden können. Ggf. kann jede der Gitterkammern 19, 20 (44, 63) für die Warmluftzuführung gleichzeitig in einigen Brennern vorgesehen werden, die neben dieser Gitterkammer an einer Seite des Ofens 1 (in der Zeichnung nicht abgebildet) angeordnet sind. Die Anzahl solcher Brenner hängt von der Wärmeleistung des einzelnen Brenners des gewählten Typs ab. Die erforderlichen Kennwerte des projektierten Ofens zur thermischen Metallbehandlung bestimmen die Anzahl der Brenner.

Die Brennereinheit (Modul der Heizvorrichtung) kann auch anders ausgeführt werden, z. B. mit der Anordnung beider Brenner und beider Regenerativgitterkammern an einer Seite des Ofens. Dabei liegt die gleiche Brennereinheit (in der Zeichnung nicht abgebildet) an der anderen Seite des Ofens.

Die Brennereinheit nach der ersten Ausführungsform der Erfindung kann nur einen Brenner und eine Regenerativgitterkammer (nach jeder der vorgeschlagenen Ausführungsformen) mit entsprechender Steuer- und Schaltsystem enthalten. Die Bauweise einer solchen Einheit ist oben im Abschnitt Stand der Technik beschrieben [s. auch 1. M. Distergeft, G. M. Druzhinin, V. I. Shsherbinin, Die Erfahrung von VNIIMT in der Entwicklung der regenerativen Heizsysteme für Hüttenanlagen, "Stahl", 2000, Nr. 7, S. 86 - 87, Abb.2].

Die Brennereinheit nach der ersten Ausführungsform der Erfindung enthält nur einen Brenner. In dieser Brennereinheit kann das System für die Lufterwärmung und die Zuführung der Luft in erforderlicher Menge ohne Einsatz von Regenerativgitterkammern ausgeführt werden. Zur Lufterwärmung können Elektroöfen oder Gasrekuperatoren in ununterbrochenem Betrieb (in den Zeichnungen nicht abgebildet) eingesetzt werden.

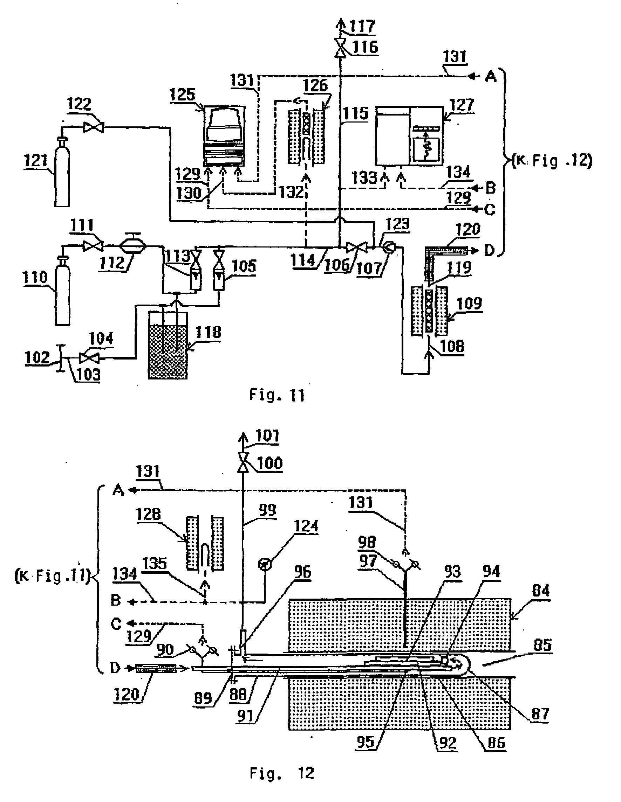

Die unten beschriebene Versuchsanlage nach Fig. 11, 12 dient auch als Beispiel der Ausführung der Heizvorrichtung (der Brennereinheit) nach der ersten Ausführungsform der Erfindung mit einem Brenner und ohne Einsatz von Regenerativgitterkammern.

Der Ofen 1 kann einige oben beschriebene Brennereinheiten (in den Zeichnungen nicht abgebildet) enthalten.

Folgende Ausführungsformen des Ofens (in den Zeichnungen nicht abgebildet) sind möglich:

2 wenn der Ofen eng ist, können alle Brennereinheiten an einer Ofenseite angeordnet werden;

3 wenn der Ofen breit ist, können die Brennereinheiten an beiden Ofenseiten angeordnet werden (schachbrettartig oder strikt gegeneinander);

4 in einem sehr breiten Ofen können die Brenner an der flachen Ofendecke angeordnet werden oder, wenn die Decke nicht flach ist, in den Deckenbrücken (die so genannte Stirnheizung);

5 wenn eine zweiseitige Erwärmung von z. B. einem an den Rollen verlagerten Metallblech erforderlich ist, können die Brenner über und unter dem genannten zu behandelnden Metall angeordnet werden (eine Regenerativgitterkammer bedient zwei Brenner an einer Ofenseite, die über und unter dem behandelten Metall angeordnet sind);

6 der Brennerstein kann normal oder geneigt zur Ofenwand angeordnet werden;

7 der Brennerstein kann parallel oder geneigt zum behandelnden Metall angeordnet werden;

8 von der Regenerativgitterkammer aus kann ein Kanal zu einem Brenner oder zu mehreren Brennern gehen. Es können auch mehrere Kanäle jeder zu seinem zugeordneten Brenner gehen und

9 regenerative Einheiten können teilweise oder vollständig in die Wandmauerung (wie in Fig. 1) eingebaut oder vollständig abgesetzt ausgeführt werden.

Die oben beschriebenen Ausführungen der Brennereinheit, der Regenerativgitterkammem und des Schaltsystems können bei Verwirklichung der ersten, der zweiten und der dritten Ausführungsform der Heizvorrichtung des Verbrennungsofens eingesetzt werden.

Die Anzahl, die Anordnung und der Ein- und Ausschaltablauf der Brenner des Ofens 1 durch die Steuereinheit 39 werden bei einem Einsatz der oben genannten Arten der Brennereinheiten durch die Notwendigkeit der Sicherstellung der erforderlichen Temperaturverteilung am Umfang des beheizten Raums 3 des Ofens 1 festgelegt. Als Ventile 14, 15, 31, 32, 44, 136 werden elektromagnetische Ventile benutzt.

Ggf. wird eine Vorrichtung zur Vorerwärmung des Treibstoffs benutzt, was seinen Verbrauch (in der Zeichnung nicht abgebildet) herabsetzt.

In den beschriebenen Vorrichtungen kann flüssiger Brennstoff, z. B. Heizöl (Masut) oder Heizöl-Wasser-Treibstoff (Dispersionssystem, welches nach dem mechanischen Verfahren auf Heizöl- und Wasserbasis zubereitet wird) sowie synthetischer Kompositionsbrennstoff eingesetzt werden. Der Kompositionsbrennstoff stellt ebenfalls ein disperses Brennstoffsystem nach dem Kolloid-Typ dar. Dieses System wird auf der Basis von Kohle beliebiger Marken, von Wasser und Zugaben gebildet. Die Zugaben verleihen dem Treibstoff die vorgegebenen Eigenschaften [Patent der RF Nr. 2144058 vom 10.01.2400].

In Fig. 1 ist der Ofen mit Ausrollherd zur Metallerwärmung zwecks Verformung abgebildet und beschrieben. Die vorgeschlagenen Ausführungsformen der Erfindung können auch in Kammer- und Durchlauföfen im Walzbetrieb, in Schmelz-, Röst-, Siemens-Martin- und Glasschmelzöfen benutzt werden. Auf dem Herd 5 des Ofens 1 können die der thermischen Behandlung ausgesetzten Nichtmetallerzeugnisse angeordnet werden.

In Fig. 11 und 12 ist das Schema einer Versuchsanlage abgebildet. Es handelt sich um den kombinierten (Gas-Elektro-)Ofen zur thermischen Behandlung von Metall, seinen Legierungen sowie von Nichtmetallerzeugnissen. Dieser Ofen umfasst einen Arbeitsbereich zur Anordnung der zu behandelnden Erzeugnisse mit Öffnungen zur Ein- und Ausführung der Verbrennungsprodukte des Treibstoffs in diesem Arbeitsbereich. Dabei ist die Eintrittsöffnung der Verbrennungsprodukte mit dem Ausgang der Hochtemperaturverbrennungskammer verbunden. Der Eingang ist mit dem Ausgang des Systems zur Zuführung der Luft und des Treibstoffgemisches bei einer bestimmten Luftüberschusszahl verbunden. Dabei ist das System zur Zuführung der Luft und des Treibstoffgemisches baumäßig so ausgeführt, dass die Luft mit einer Luftüberschusszahl von über 2,0 und im Bereich bis 6,0 einstellbar zugeführt werden kann.

Die Versuchsanlage nach Fig. 11, 12 enthält einen Elektroofen 84 (Fig. 12) mit Karbid-Siliziumerhitzern und mit einer Maximalbetrlebstemperatur von 1400° C; mit einer Hochtemperaturverbrennungskammer 109, mit einem Gasaufbereitungssystem und mit einem Steuer- und Regelsystem (Fig. 11, 12). Der Ofen 84 hat eine kontaktlose Steuereinheit (in den Zeichnungen nicht abgebildet). Das Gasaufbereitungssystem und das Steuer- und Regelsystem stellen eine Ausführungsform des Systems zur Zuführung der Luft und des Treibstoffgemisches in die Hochtemperaturverbrennungskammer 109 dar. Dieses System ist so ausgeführt, dass die Luft und der Treibstoff in solchen Mengen zugeführt werden können, die die Luftüberschusszahl von über 2,0 und im Bereich vorwiegend bis 6,0 einstellbar sicherstellen.

Im Innenraum 85 des elektrischen Ofens 84 ist eine Muffel 86 angeordnet. Sie ist aus Quarzglas ausgebildet. Sein Innenraum bildet den beheizten Arbeitsbereich zur Anordnung des zu behandelnden Metalls. Das hintere Ende 87 der Muffel 86 ist zugelötet. Das Vorderende 88 ist mit einem Blindflansch (Verschlussstopfen) 89 mit Ausgängen 90 der Kontaktthermozelle 95 und des gasführendes Rohrs 91 ausgerüstet. Das gasführende Rohr 91 zur Einführung der Verbrennungsprodukte in die Muffel 86 ist ebenfalls aus Quarzglas ausgebildet und dient gleichzeitig als Halter. Am Halter sind oben ein Schiffchen 92 für die Probe 93 des zu behandelnden Metalls und ein Wirbelerzeuger 94 aus Schamotte befestigt. Der Wirbelerzeuger 94 ist zur Sicherstellung von konstanten Bedingungen für einen externen Wärmeaustausch entlang der Probe 93 vorgesehen. Unten ist das Kontrollthermoelement 95 am Halter-Rohr 91 befestigt. Die Lötstelle des Kontrollthermoelements 95 befindet sich unmittelbar an der Probe 93.

Das gasführende Rohr 91 dient zur Zuführung von Verbrennungsprodukten der Luft- und Erdgasmischung ans hintere Ende 87 der Muffel 86. Hier werden die Verbrennungsprodukte im Rückstrom umgelenkt, verlaufen über den Wirbelerzeuger 94 und umströmen die Metallprobe 93. Danach laufen sie aus der Muffel 86 über das gasführende Rohr 96 hinaus, das am Vorderende 88 der Muffel 86 liegt.

Das gasführende Rohr 96 ist mit der Gasleitung 99 verbunden, welche mit dem Absperrventil 100 und der ersten Kerze 101 zur Gasausblasung versehen ist. Der Elektroofen 84 ist auch mit einer Regelthermozelle 97 der Graduierung PR30/6(C) und mit Ausgängen 98 ausgerüstet.

Das Gasaufbereitungssystem (Fig. 11) ist zur Aufbereitung und Zuführung der Verbrennungsprodukte der Luft- und Erdgasmischung in die Muffel 86 des Ofens 84 zur Erwärmung der Probe 93 vorgesehen. Es dient auch zur Zuführung von Argon, um die Muffel 86 vor und nach der Probe 93 zu erwärmen. Das Gasaufbereitungssystem umfasst eine Leitung 102 für Niederdruckerdgas. An diese Leitung sind über den Rohrstutzen 103 das Absperrventil 104, der Erdgas-Durchflussmosser 105 (Rotamesser), das Absperrventil 106 und der Durchflussmesser für die Luft- und Erdgasmischung 107 nacheinander angeschaltet. Der Auslauf des Durchflussmessers 107 ist mit dem Eingang 108 der Hochtemperaturverbrennungskammer 109 mit Platinkatalysator und elektrischem Erhitzer verbunden.

Die Luftversorgungsleitung umfasst (Fig. 11) die Druckluftflasche 110, das nacheinander geschaltete Absperrventil 111, den Druckregler für die Druckluft 112 und den Luftdurchflussmesser 113 (Rotamesser). Der Luftdurchflussmesser 113 ist an den Eingang 114 des Absperrventils 106 angeschlossen. Vom Eingang 114 des Ventils 106 verläuft die Gasleitung 115. Sie ist über das Absperrventil 116 mit der zweiten Kerze 117 zur Gasausblasung verbunden. Außerdem sind die Erdgas- und Luftversorgungsleitungen vor den Durchflussmessern 105, 113 mit einem Druckregler 118 für Luft und Erdgas verbunden. Der Eingang 119 der Hochtemperaturverbrennungskammer 109 ist über die beheizbare Gasleitung 120 mit dem gasführenden Rohr 91 verbunden. Das gasführende Rohr 91 ist teilweise in der Muffel 86 angeordnet.

Die Argonversorgungsleitung (Fig. 11) enthält eine Argonflasche 121, die über das Absperrventil 122 mit dem Eingang 123 des Durchflussmessers 107 verbunden ist. Der Durchflussmesser 107 ist am Eingang der Hochtemperaturverbrennungskammer 109 angeschlossen.

Das Steuer- und Regelsystem umfasst einen Ofentemperaturgeber (Thermoelement 97), einen Probetemperaturgeber (Thermoelement 95), einen Durchflussgeber für Luft, Erdgas und die Verbrennungsprodukte (113, 105, 107) sowie einen Druckgeber 124 in der Muffel 86. Der Druckgeber 124 ist in die Gasleitung 99 eingebaut, welche mit dem gasführenden Rohr 96 der Muffel 86 verbunden ist. Außerdem enthält das Steuer- und Regelsystem eine Mikrosteuereinheit 125 (ein PC), eine Anzeige 126 "Alfa" für die Luftverbrauchkennwerte, einen Gaschromatograph 127 Typ LHM-80 und einen Thermostat 128 mit elektrochemischem Geber für den Sauerstoffgehalt (ECG) in den Verbrennungsprodukten. Die Anzeige 126 "Alfa" ist ein Thermostat mit einer Arbeitstemperatur von 800 bis 810 °C. In diesem Thermostat sind ein Platinkatalysator und ein elektrochemischer Geber mit Sauerstoff-Ionen-Leitfähigkeit eingebaut. Dieser Geber ist aus Zirkoniumdioxid ausgeführt. Im Thermostat der Anzeige 126 kommt die Luft-Gasmischung der Reihe nach zuerst zum Katalysator. Hier findet die Reaktion bis zum Gleichgewichtzustand statt. Danach kommt die Luft-Gasmischung zum elektrochemischen Geber, dessen Signal von der Sauerstoffkonzentration in den Verbrennungsprodukten abhängt.

Die Mikrosteuereinheit 125 ist mittels der Verbindungsleitung 129 mit den Ausgängen 90 des Thermoelementes 95, der Verbindungsleitung 130 mit dem Ausgang der Anzeige 126 für den Luftverbrauchskennwert und der Verbindungsleitung 131 mit den Ausgängen 98 des Thermoelementes 97 verbunden. In den genannten Verbindungsleitungen sind Analog-Digitalumsetzer (in der Zeichnung nicht abgebildet) eingesetzt.

Der Eingang der Anzeige 126 für den Luftverbrauchskennwert ist über die Gasleitung 132 mit dem Eingang 114 des Absperrventils 106 verbunden. Der Eingang des Gaschromatographen 127 ist mittels der Gasleitungen 133 und 115 auch mit dem Eingang 114 des Ventils 106 und mittels der Gasleitungen 134 und 99 mit dem gasführenden Rohr 96 der Muffel 86 verbunden. Dieses Rohr 96 koppelt den Thermostat 128 mittels der Gasleitung 135 an den elektrochemischen Sauerstoffgeber.

Zur Kontrolle der Zusammensetzung der Verbrennungsprodukte sind drei Geräte vorgesehen: Am Eingang in die Muffel 86 sind die Anzeige 126 für den Luftverbrauchskennwert und am Ausgang aus der Muffel der Gaschromatograph 127 (Gehalt an $O_2$, $N_2$, $CO_2$) und der Thermostat 128 (Sauerstoffgehalt) angeordnet. Zur Druckmessung in der Muffel 86 ist das U-förmige Manometer (Druckgeber 124) und zur Aufrechterhaltung des Überdrucks ist das Ventil 100 in der zweiten Kerze 101 vorgesehen.

Die baumäßige Ausführung des Luft- und Treibstoffversorgungssystems gewährleistet die Möglichkeit der Luft- und Treibstoffversorgung in solchen Mengen, welche die Luftüberschusszahl von über 2,0 und einstellbar vorwiegend im Bereich bis 6,0 sicherstellt. Das System dieser Ausführung enthält insbesondere folgende Mess- und Regelgeräte für Gas- und Luftströme, welche auf die oben genannte Weise verbunden sind: Die Durchflussmesser für Erdgas 105, für Luft 113, für Luft- und Erdgasmischung 107, die Anzeige 126 für den Luftverbrauchskennwert, das Ventil 116 und die zweite Kerze 117 für die Gasausblasung. Andere oben beschriebene Elemente des Luft- und Treibstoffversorgungssystems dienen zur Sicherstellung der erforderlichen Stabilität bei Aufrechterhaltung der vorgegebenen Luftüberschusszahl,

Eine kurze Übersicht für die Prüfmessgeräte ist in dieser Tabelle aufgeführt.

| Lauf. Nr. | Meßwert | Typ und Bezeichnung von Meßgerät (laufende Nummer) | Meßbereich | Genauigkeit |
|---|---|---|---|---|
| 1 | 2 | 3 | 4 | 5 |
| 1 | Temperatur | Thermoelement (97) PR30/6 (V) | 300÷1600°C | ± 4°C |
| 2 | Verbrauch | Rotamesser (113, 105, 107) RM-0,063 GUZ RM-0,1 GUZ | 0,063 m³/St. 0,1 m³/St. für Luft | Kl.4 |
| 3 | Zusammensetzung ($H_2$, $O_2$, $N_2$, $CH_4$, CO, $CO_2$) | Chromatograph (127) LKhM-80 | 0÷100 % | ± 1% ges. |
| 4 | Analog-Digitalumsetzer | Serie ADAM-5000 (Taiwan) | 0+100 mV | max. 0,1 % rel. |
| 5 | $O_2$-Konzentration in Verbrennungsprodukten | Thermostat (128) (EKhD) | 0+20% | Kl. 5 |
| 6 | Gewicht | Waage WLA-200-M (in Versuchen mit Titan) Waage WLKT-500 (in Versuchen mit Stahl) | 0÷200 g 0÷500 g | 0,0001 g ±0,005 g |

Die Heizvorrichtung des Verbrennungsofens und das Verfahren zur thermischen Metallbehandlung im Verbrennungsofen mit direkter oder indirekter Heizung (bzw. Verfahren zur Verbrennung von Treibstoff- und Warmluftgemisch im Verbrennungsofen mit direkter oder indirekter Heizung) wird auf folgende Weise realisiert:

Beispiel 1

Auf dem Herd 5 des Ofens 1 (Fig. 1) sind Erzeugnisse aus Titanlegierung Ti - 6 Al - 4V angeordnet. Es wird angenommen, dass der Ofen 1 im Betriebszustand ist. Der geheizte Raum 3 ist bis zur Betriebstemperatur von 1270 °C erwärmt. Die wärmeübertragenden Elemente im Innenraum 22 der Regenerativgitterkammer 20 sind durch die Verbrennungsprodukte erwärmt, welche diese Gitterkammer im vorhergehenden Arbeitszyklus durchströmt haben. Im betrachteten Arbeitszyklus ist das Zweieingangs-Absperrventil 14 geschlossen und das Zweieingangs-Absperrventil 15 offen. Das Kippventil 31 ist im ersten und das Kippventil 32 im zweiten Schaltzustand. Über den Kanal 16 und das offene Ventil 15 kommt gasförmiger Brennstoff zu dem Brenner 9. Über den Kanal 28 kommt auch Warmluft aus der Gitterkammer 20 in diesen Brenner 9. Die Warmluft kommt in diese Gitterkammer 20 aus dem Außenkühlluftversorgungskanal 33, nämlich über das Ventil 32, den Rohrstutzen 30 und die untere Öffnung 26 dieser Gitterkammer. In der Austrittsöffnung 18 des Brenners 9 wirkt die Flamme infolge der Treibstoff- und Warmluftgemischverbrennung. Die heißen Verbrennungsprodukte bewegen sich innerhalb des beheizten Raums 3 in Richtung der Austrittsöffnung 17 des Brenners 8 und erwärmen das Metall 6. Die Austrittsöffnung 17 dient hier als eine Öffnung zur Abführung der Verbrennungsprodukte aus dem Raum 3. Über den Kanal 27 kommen heiße Verbrennungsprodukte in den Innenraum 21 der Gitterkammer 19 und erwärmen die darin enthaltenen wärmeübertragenden Elemente. Somit geben diese Verbrennungsprodukte ihre Hochtemperaturwärme ab und strömen über den Untergitterkammerraum des Brenners 8, die untere Öffnung 25, den Rohrstutzen 29 und das Ventil 31 in den Kanal 34 zur Ableitung der abgekühlten Verbrennungsprodukte. Die Bewegungsrichtungen für Treibstoff, Luft und Verbrennungsprodukte in diesem Zyklus sind in Fig. 1 mittels Pfeilen angegeben.
Beim Einsatz des Ofens 1 in der Ausführungsform mit einem Vier-Eingangs-Ventil (Fig. 6) verläuft der Ofenbetrieb wie oben beschrieben, mit der Ausnahme, dass anstelle der ZweiEingangs-Ventile 31 und 32 ein Vier-Eingangs-Kippventil 136 angewendet wird. In diesem Arbeitszyklus der Heizvorrichtung des Verbrennungsofens ist das Ventil 14 geschlossen und das Ventil 15 offen. Die Klappe des Ventils 136 ist in der Stellung 141. Die Bewegungsrichtungen für Treibstoff, Luft und Verbrennungsprodukte in diesem Zyklus sind in Fig. 6 mittels entsprechender Pfeile angegeben.
Beim Einsatz des Ofens 1 in der Ausführungsform nach Fig. 7 (mit Dreiabschnitt-Regenerativgitterkammer 44 anstelle der Gitterkammer 19) verläuft der Ofenbetrieb wie oben beschrieben, jedoch unter Berücksichtigung der vorhandenen Absperrventile 54, 55, 56. Bei ausgeschalteten Ventilen 54, 55 und eingeschaltetem Ventil 56 sind die Bewegungsrichtungen für Treibstoff, Luft und Verbrennungsprodukte in diesem Zyklus mit jeweiligen Pfeilen in Fig. 7 angegeben. Beim Einsatz des Ofens 1 mit einer Regenerativgitterkammer 63 mit drei Innenräumen 64, 65, 66 (Fig. 8) und bei eingeschalteten Ventilen 73, 74, 75 sind die Bewegungsrichtungen für Treibstoff, Luft und Verbrennungsprodukte in diesem Zyklus mit jeweiligen Pfeilen in Fig. 8 angegeben. In den genannten Fällen durchströmen die Luft- und Verbrennungsprodukte alle drei aktivierten Abschnitte 45, 46, 47 der Gitterkammer 44 oder alle drei Innenräume 64, 65, 66 der Gitterkammer 63 bei Maximal-Luftüberschusszahlen für diese Gitterkammern.
Beim Einsatz des Ofens 1 mit indirekter Heizung in den Ausführungen nach Fig. 9 und 10 erfolgt der Betrieb des Steuer- und Schaltsystems und der Regenerativgitterkammern wie oben beschrieben. Der Unterschied ist wie folgt: Im Ofen mit indirekter Heizung mit dem Strahlungsrohr 143 (Fig. 9) passieren die Verbrennungsprodukte nur den geheizten Raum 144 des Strahlungsrohrs 143, ohne in den Arbeitsbereich 145 des Ofens 1 zu kommen. In diesem Arbeitsbereich 145 befindet sich das zu behandelnde Metall 6. Im Ofen mit indirekter Heizung mit einem Tiegel 147 (Fg. 10) befinden sich dagegen die Verbrennungsprodukte, wie auch im Ofen mit direkter Heizung, im geheizten Raum 3 des Ofens 1, ohne in den Tiegel 147 mit zu behandelndem Metall 6 zu gelangen.
Nach einer bestimmter Zeit, z.B. 30 - 45 Sek., bringt die Steuereinheit 39 das Ventil 14 in die offene und das Ventil 15 in die geschlossene Stellung. Das Ventil 31 gelangt in den zweiten und das Ventil 32 in den ersten Schaltzustand. Dabei schaltet sich der Brenner 9 aus und der Brenner 8 ein. Im nächsten Arbeitszyklus wird der Brenner 8 über den Kanal 16 mit gasförmigem Brennstoff und über den Kanal 27 mit der Warmluft aus der Gitterkammer 19 versorgt. Die Warmluft kommt in die Gitterkammer 19 aus dem Kanal 33 für die Außenkühlluftzuführung, nämlich über das Ventil 31, den Rohrstutzen 29 und die untere Öffnung 25 dieser Gitterkammer. In der Austrittsöffnung 17 des Brenners 8 wirkt die Flamme infolge der Treibstoff- und Warmluftgemischverbrennung. Die heißen Verbrennungsprodukte bewegen sich innerhalb des beheizten Raums 3 in Richtung der Austrittsöffnung 18 des Brenners 9 und erwärmen das Metall 6. Die Austrittsöffnung 18 dient hier als eine Öffnung zur Abführung der Verbrennungsprodukte aus dem Raum 3. Über den Kanal 28 gelangen die heißen Verbrennungsprodukte in den Innenraum 22 der Gitterkammer 20 und erwärmen die darin enthaltenen wärmeübertragenden Elemente. Somit geben diese Verbrennungsprodukte ihre Hochtemperaturwärme ab und strömen über den Untergitterkammerraum des Brenners 9, die untere Öffnung 26, den Rohrstutzen 30 und das Ventil 32 in den Kanal 34 zur Ableitung der abgekühlten Verbrennungsprodukte. Die Bewegungsrichtungen für Treibstoff, Luft und Verbrennungsprodukte in diesem Arbeitszyklus der Heizvorrichtung sind den Pfeilen aus Fig. 1 entgegengesetzt.

Beim Einsatz des Ofens 1 in der Ausführungsform nach Fig. 7 (mit Dreiabschnitt-Regenerativgitterkammer 44) verläuft der Ofenbetrieb in diesem Zyklus wie oben beschrieben, jedoch unter Berücksichtigung der vorhandenen Absperrventile 54, 55, 56. Bei ausgeschalteten Ventilen 54, 55 und eingeschaltetem Ventil 56 sind die Bewegungsrichtungen für Treibstoff, Luft und Verbrennungsprodukte in diesem Zyklus den Pfeilen nach Fig. 7 entgegengesetzt. Beim Einsatz des Ofens 1 mit der Regenerativgitterkammer 63 mit drei Innenräumen 64, 65, 66 (Fig. 8) und bei eingeschalteten Ventilen 73, 74, 75 sind die Bewegungsrichtungen für Treibstoff, Luft und Verbrennungsprodukte in diesem Zyklus den Pfeilen aus Fig. 8 entgegengesetzt. In diesen Fällen durchströmen die Luft- und Verbrennungsprodukte alle drei aktivierten Abschnitte 45, 46, 47 der Gitterkammer 44 oder alle drei Innenräume 64, 65, 66 der Gitterkammer 63 bei Maximal-Luftüberschusszahlen für diese Gitterkammern 44 und 63.

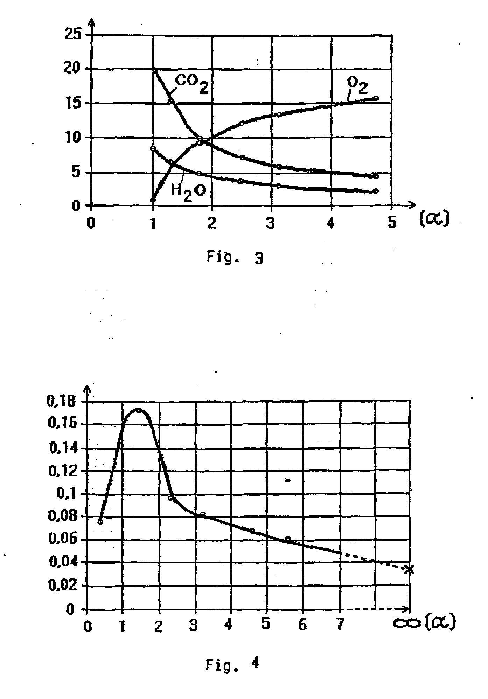

Die Verbrennung von Treibstoff- und Warmluftgemisch in beiden betrachteten Betriebszyklen der Heizvorrichtung erfolgt bei eingestellter Luftüberschusszahl, die in diesem Beispiel 3,0 beträgt (für Gitterkammern 19, 20, Fig. 1). Dies ist durch das vorgegebene Verhältnis der Treibstoff- und Warmluftmengen festgelegt, welche in den Brenner 8 oder 9 gelangen. Die Warmluftmenge, welche für die Sicherstellung der vorgegebenen Luftüberschusszahl erforderlich ist und in den Brenner 8 (9) gelangt, wird durch das Volumen der im Innenraum 21 (22) der Regenerativgitterkammer 19 (20) enthaltenen wärmeübertragenden Elemente bestimmt. Das Volumen der wärmeübertragenden Elemente in jeder Gitterkammer entspricht der oben genannten Gleichung (1). Der Erdgasverbrauch betrug 80 $m_3$/St, und das Volumen der wärmeübertragenden Elemente 0,464 $m^3$. Als wärmeübertragende Elemente sind Korundkugeln mit einem Durchmesser von 20 mm eingesetzt. Bei einer Ofenbetriebstemperatur von 1270° C beträgt die Temperatur der in der Regenerativgitterkammer abgekühlten Verbrennungsprodukte 200° C. Die Temperatur der in die Regenerativgitterkammern 19, 20 zugeführten Kühlluft beträgt 20 bis 25° C. Die Warmlufttemperatur ist 1050° C. In diesem Beispiel für den Betrieb der Heizvorrichtung des Verbrennungsofens, den Betrieb der Regenerativgitterkammer (19, 20) und der Realisierung des Verfahrens zur thermischen Metallbehandlung (bei Luftüberschusszahl = 3,2) beträgt der Abbrand der Titanlegierung Ti - 6 A) - 4V 0,082 $g/cm^2$ (Fig. 4).

Der genannte Verbrennungsofen kann auch bei einer höheren Luftüberschusszahl, nämlich 6,0 bis 6,5, und bei Ofentemperaturen von 800 bis 1600° C betrieben werden. In den momentan benutzten Regenerativgitterkammern, welche aus Korundkugeln bestehen, ist das Volumen der wärmeübertragenden Elemente um das Drei- bis Sechsfache geringer, und der Metallabbrand im Ofen mit solchen Gitterkammern fast um das Zweifache größer als im betrachteten Beispiel 1.

Nachfolgend sind weitere Beispiele für die Realisierung des Verfahrens zur thermischen Metallbehandlung angeführt.

Beispiel 2

In der Versuchsanlage (Fig. 11, 12) wurde die Erwärmung von Stahiprobestücken (St 10) mit einem Durchmesser von 8 mm und einer Länge von 60 mm vorgenommen. Die Erwärmung erfolgte in Erdgas-Verbrennungsprodukten bei unterschiedlichen Luftüberschusszahlen, nämlich α = 0,71; 1,08; 1,4; 1,96; 2,67; 3,6; 4,4; 6,5, sowie in Luft, was einer Luftüberschusszahl = (α) entspricht (s. Fig. 2).

Vor dem Beginn der Erwärmung wurde ein Probestück 93 auf einer elektronischen Waage abgewogen und ins Schamotte-Schiffchen 92 der Quarzmuffel 86 gesetzt. Die Muffel 86 wurde mit einem Verschlussstopfen 89 (mit gaseinführendem Rohr 91 und gasabführendem Rohr 96 sowie mit einem Thermoelement 97) dicht verschlossen und mit Argon aus der Flasche 121 durchgeblasen. Im durch die Muffel 86 durchgeblasenen Gas wurde mittels Analyse der Sauerstoffgehalt im Argon festgestellt. Der Sauerstoffgehalt wurde nach der Anzeige am Thermostat 128 mit einem elektrochemischem Sauerstoffgeber ermittelt. Gleichzeitig wurde das vorgegebene Luft- und Erdgas-Verhältnis (Luftüberschusszahl) mittels der Durchflussgeber (Rotamesser) 113 und 105, der Anzeige 126 für den Luftverbrauchskennwert und dem Gaschromatographen 127 eingestellt. Dies wurde unter Ausblasung des Gasluftgemisches durch die Kerze 117 vorgenommen. Der Ofen 84 wurde bis 300° C erwärmt. Danach wurde die Muffel 86 in den Ofen 84 gesetzt. Infolge des vorläufigen Temperaturmessverfahrens des Ofens 84 wurde die isothermische Zone bei der Temperatur 1250° C festgestellt. Ihre Länge betrug 250 mm. In Laufe der Versuche wurde die Muffel 86 so in den Ofen 84 gesetzt, dass das Probestück 93 immer in dieser isothermischen Zone des Ofens 84 war.

Sobald die Temperatur des Kontroll-Thermoelements 95 mehr als 250° C erreichte, wurde die Argonzuführung in die Muffel 86 beendet. Das Absperrventil 116 sperrte die Kerze 117 ab. Die Verbrennungsprodukte gelangten über die verkleidete Gasleitung 120 aus der Verbrennungskammer 109 in die Muffel 86. Das Luft-Erdgas-Verhältnis wurde anhand des Chromatographen 127 nach dem Sauerstoffgehalt im Ausgangsgemisch sowie nach der Anzeige 126 für den Luftverbrauchskennwert überwacht. Die Gaszusammensetzung (in den Verbrennungsprodukten) in der Muffel 86 wurde anhand der Anzeige des Chromatographen 127 und des Thermostats 128 überwacht. Der Druck in der Muffel 86 wurde mit dem Druckgeber 124 gemessen. Es wurde ein ständiger Überdruck am Ventil 100 an der Kerze 101 aufrechterhalten. Der Gasverbrauch in der Muffel 86 wurde konstant und = 1,37 L/Min aufrechterhalten. Dieser Verbrauch wurde aufgrund von Vorversuchen aus folgenden Bedingungen gewählt:

1 Gleichheit der Gaszusammensetzung am Eingang und am Ausgang des Ofens 84 (keine Änderungen der Gaszusammensetzungen infolge der Aufnahme der Sauerstoffmenge im Metall) und

2 Leistung der Verbrennungskammer 109.

Das Temperaturverhalten bei der thermischen Behandlung des Probestücks 93 im Elektroofen 84 umfasste die Erwärmung des Probestücks 93 in der Muffel 86. Die Erwärmung umfasste die Erwärmung der Atmosphäre der Erdgasverbrennungsprodukte von 300° C bis zu 1200° C mit einer Geschwindigkeit von 6 Grad/Min sowie das isothermische Halten bei 1200° C für die Dauer von 2 Stunden. Nach dem Halten wurde die Muffel 86 aus dem Ofen 1 zur Luftabkühlung herausgenommen, ohne die Verbrennungsproduktezuführung zu beenden. Als das Thermoelement 95 eine Temperatur unter 900° C anzeigte, wurde die Verbrennungsproduktezuführung in die Muffel 86 beendet. Die Muffel 86 wurde dann mit Argon durchgeblasen. Das Probestück 93 wurde bis zu 300° C abgekühlt (Temperaturanzeige am Thermoelement 95). Danach wurde die Argonzuführung eingestellt, und die geschlossene Muffel 86 kühlte sich bis zur Raumtemperatur ab. Das der Muffel 86 entnommene oxidierte Probestück 93 wurde wiederholt gewogen. Das Abwägen des Probestücks im Ausgangs- und im oxydierten Zustand erfolgte in Polyäthylenverpackung, um den teilweisen Verlust von Abbrand beim Abwiegen zu vermeiden.

Der Metallabbrand wurde nach dem mehrmaligen Abwiegen des Probestücks 93 vor und nach Erwärmung festgestellt.

Die Ergebnisse sind aus den Fig. 2 und 3 zu ersehen. Aus den Angaben in Fig. 2 folgt, dass, wenn die Luftüberschusszahl auf 2,0 bis 6,0 und mehr erhöht wird, der Metallabbrand von 0,165 g/cm$^2$ bis 0,105 g/cm$^2$ oder um 36 % abnimmt. Es wird also praktisch ein solches Abbrandniveau erreicht, wie es bei der Metallerwärmung in der Luftatmosphäre vorliegt. Punkt "X" in Fig. 2 entspricht der Luftüberschusszahl gleich der infinität. Dabei kommt eine Änderung der Zusammensetzung der Verbrennungsprodukte (Fig. 3) zustande. Die Konzentration von Kohlendioxid $CO_2$ und Wasserdampf $H_2O$ nimmt um 50 % ab, und die Konzentration von Sauerstoff $O_2$ erhöht sich um 70 %. Es ist offensichtlich, dass die Abnahme des Metallabbrandes nicht durch die Erhöhung der Konzentration von Sauerstoff sondern durch die Abnahme der Konzentration von Wasserdämpfen bedingt ist.

Beispiel 3

Das in Beispiel 2 beschriebene Verfahren wurde zur Erwärmung der Probestücke 93 aus Titanlegierung Ti - 6 Al - 4V mit gleichen Abmessungen eingesetzt. Die Erwärmung erfolgte in Erdgas-Verbrennungsprodukten bei unterschiedlichen Luftüberschusszahlen, nämlich $\alpha$ = 0,71; 1,09; 2,3; 3,2; 4,6, sowie in der Luft (a = $\infty$, Punkt "X" an der Kurve in Fig. 4). Die in Fig. 4 dargestellten Versuchsergebnisse zeugen von der Abbrandabnahme bei Probestücken aus genannter Titanlegierung von 0,1 g/cm$^2$ bis 0,033 g/cm$^2$ oder um 67 % bei einer Erhöhung der Luftüberschusszahl von 2,0 bis 6,0.

Beispiel 4

Es wurde der Feuerversuchsstand [I. M. Distergeft, G. M. Druzhinin, V. I. Shsherbinin, Die Erfahrung von VNIIMT in der Entwicklung der regenerativen Heizsysteme für Hüttenanlagen, "Stahl", 2002, Nr. 7, S. 84 - 90] benutzt. Er war mit einer Brennereinheit ausgerüstet, deren Ausführung ähnlich der in Fig. 1 war. Diese Brennereinheit umfasst zwei Regenerativgitterkammern (19, 20). Jede der Regenerativgüterkammern (19, 20) ist mit einem Brenner (8, 9) verbunden und mit wärmeübertragenden Elementen aus Korundkugeln mit einem Durchmesser von 20 mm ausgefüllt. Auf dem genannten Stand wurden die Probestücke mit den Abmessungen 6 x 50 x 100 mm erwärmt. Die Probestücke bestanden aus Titanlegierungen WT-5-1 und WT-20. Die Luftüberschusszahlen $\alpha$ betrugen 1,17 bis 1,20 und 2,20. Die Erwärmungstemperatur betrug 1200° C, die Warmlufttemperatur 900° C und die Haltezeit 2 Stunden. Als Treibstoff diente Erdgas. Die Zyklusdauer des Impulsbetriebes betrug 45 bis 60 Sek. Die Versuchsergebnisse haben gezeigt, dass bei der Erwärmung der genannten Probestücke eine Luftüberschusszahlerhöhung über 2,0 die Verminderung der gasgesättigten Schicht (des Metallabbrandes) an den Probestücken aus der Legierung WT-20 von 164 $\mu$m bis auf 137 $\mu$m (d.h. um 16,5%) verursacht. Sie verursacht auch die Verminderung des Wasserstoffgehalts in der Oberschicht des Probestückes von 0,023 % bis auf 0,021 %, d. h. um 8 %. Bei den Probestücken aus der Legierung WT-5-1 reduziert sich die Dicke der gasgesättigten Schicht von 89 $\mu$m bis auf 45 $\mu$m (um 49,5 %), und der Wasserstoffgehalt in der Oberschicht des Probestückes nimmt von 0,073 % auf 0,06 % ab (Abnahme um 18 %).

Beispiel 5

Es wurden zwei Versuche im Kammerofen - ähnlich dem Ofen nach Fig. 1 -durchgeführt. Der Ofen war mit einem Regenerativheizsystem ausgerüstet. Die Versuche umfassten die Erwärmung von zwei Blöcken aus Titanlegierung WT-1-0 mit einem Durchmesser von 800 mm und einer Länge von 4000 mm bei Luftüberschusszahlen $\alpha$ von 1,5 und 2,8 bis 3,5. Als Treibstoff diente Erdgas. Die Temperatur bei der Metallausgabe betrug 1200° C. Die Warmlufttemperatur betrug 1050° C. Wenn die Luftüberschusszahl von 1,5 bis zu einem Wert im Bereich von 2,8 bis 3,5 erhöht wurde, reduzierte sich die Blockerwärmungszeit von 9,5 St. bis auf 7,5 St. (um 21 %). Die Erwärmung wurde gleichmäßiger, denn die Temperaturdifferenz über die gesamte Länge und den Durchmesser des Blocks wurde geringer und überschritt nicht ±10° C. Der Metallabbrand nahm dabei fast um das 1,5-fache ab.

Beispiel 6

Die Wärmebehandlung von Metall in einem Kammerverbrennungsofen 1 (Fig. 1) mit Regenerativgitterkammern 44 oder 63 (Fig. 7, 8) beruhte auf der Erdgas- und Warmluftverbrennung. Die Behandlung erfolgte in drei Stufen. Die 1. Stufe der Erwärmung von zwei Blöcken aus Titanlegierung WT-1-0 mit Durchmesser von 800 mm und einer Länge 4000 mm erfolgte im Laufe von 120 Minuten bis zu einer Zwischentemperatur von 400° C bei einer Luftüberschusszahl z. B. 1,35 (nicht höher als 2,0). Die nachfolgende Erwärmung im Laufe von 240 Minuten bis zur Betriebstemperatur von 1200° C erfolgte bei langsamer stufenloser oder stufenweiser Erhöhung der Luftüberschusszahl bis 3,3. Danach erfolgte ein zweistundenlanges Halten bei angegebener Betriebstemperatur und konstanter Aufrechterhaltung der vorgegebenen Luftüberschusszahl von 3,3. Die Gesamtdauer der Erwärmung betrug 8 Stunden. Der Metallabbrand nahm gegenüber dem Beispiel 5 um 15 % ab.

Der Temperatur-Wärmeverlauf im Kammerofen nach Fig. 1 ändert sich mit der Zeit und die behandelten Erzeugnisse sind ortsgebunden (sie bewegen sich nicht). Bei der Realisierung des dreistufigen Verfahrens der thermischen Behandlung in diesem Ofen wird die Luftdurchflusszahl in jeder Regenerativgitterkammer variiert.

In einem Durchschiebeofen bewegen sich die behandelten Erzeugnisse und gehen durch solche Zonen, in denen eine konstante Temperatur aufrechterhalten wird. Das dreistufige Verfahren der thermischen Behandlung erfolgt etwas anders.

In der ersten Zone (gemäß dem Bewegungssinn der behandelten Erzeugnisse) muss die Temperatur bei der Metallbehandlung relativ tief liegen (um beachtliche thermische Spannungen im Metall und eine Rissbildung zu vermeiden). Hier wird eine Regenerativgitterkammer (Gitterkammer) mit Luftüberschusszahl fast gleich Eins eingesetzt. In der Schweißzone wird die höchste Ofentemperatur erreicht. In dieser zweiten sowie in der Ausgleichskammer - Haltezone - werden Regenerativgitterkammern mit einer Luftüberschusszahl über 2 benutzt. Im Vergleich zu den bekannten Verfahren nehmen der Metallabbrand und die Wasserstoffanreicherung von Nichteisenlegierungen ab. Der Stromverbrauch im Zusammenhang mit der Beförderung von Luft und Verbrennungsprodukten durch die Ofenzonen wird auch reduziert. Das wird bei der Bearbeitung sowohl von Metallen als auch von Nichtmetallerzeugnissen sichergestellt.

Beispiel 7

Es unterscheidet sich von Beispiel 6 dadurch, dass das Metall bei Betriebstemperatur bei variabler Luftüberschusszahl gehalten wird. Die Luftüberschusszahl beträgt über 2,0 und wird vorwiegend im Bereich bis 6,0 eingestellt. Insbesondere erfolgt das Halten bei einer Veränderung der Luftüberschusszahl von 3,3 bis 6,0 innerhalb von 2,5 Stunden. Die Qualität der Metalle entspricht der aus Beispiel 6.

Beispiel 8

Das Verfahren der thermischen Behandlung von Stahl und Nichteisenmetallen im Verbrennungsofen beruht auf der Verbrennung eines Gemisches aus flüssigem oder gasförmigem Treibstoff und aus erwärmter Luft bei einer bestimmten Luftüberschusszahl. Das Verfahren wird ähnlich wie im Beispiel 4 realisiert. Dabei wurden Probestücke aus Titanlegierung WT-5-1 mit Abmessungen von 6 x 50 x 100 mm bis zu einer Temperatur von 1250° C erwärmt. Die Erwärmung erfolgte bei einer Luftüberschusszahl von über 6,0, insbesondere bei $\alpha$ = 6,5 bis 7,0. Ergebnis: Der Metallabbrand und die Wasserstoffanreicherung des Metalls weisen das mindestmögliche Niveau für Gaserwärmung auf. Dieser erreichbare Effekt deckt bei hohen Metallqualitätsanforderungen die Kosten im Zusammenhang mit dem erhöhtem Warmluftverbrauch und dem Mehrstromverbrauch ab, welche für die Arbeiten bei solchen Luftüberschusszahlen notwendig werden.

Beispiel 9

Bei der Verbrennung eines Gemisches aus flüssigem oder gasförmigem Treibstoff und aus Warmluft im Verbrennungsofen 1 mit direkter Heizung (Fig. 1, 6, 7, 8) werden Metall- und Nichtmetallerzeugnisse behandelt. Es geht insbesondere um das Ausglühen von Keramik-Erzeugnissen mit einer Luftüberschusszahl von über 2,0. Hier werden erhöhte Luftmengen aus dem Brenner 8 (9) in den Innenraum 3 des Ofens 1 befördert. Dabei wird dank der Erhöhung der Bewegungsgeschwindigkeit der Verbrennungsprodukte im Innenraum 3 des Ofens 1 die Konvektionskomponente des Wärmeaustausches vergrößert. Dies bedingt eine Kürzung der Wärmeübertragungsdauer von den Verbrennungsprodukten an die im Verbrennungsofen zu behandelnden Erzeugnisse sowie eine Leistungserhöhung bei der thermischen Behandlung. Die Verkürzung der Erwärmungszeit erreicht 20 %. Dies bringt zusätzlich eine Abbrandabnahme für die erwärmten Metalle und verursacht auch einen Kohlenstoffentzug und eine Wasserstoffanreicherung dank der reduzierten Wärmebehandlungszeit.

Die vorgeschlagenen technischen Lösungen ermöglichen es, bei erhöhten Luftüberschusszahlen hohe Temperaturen der Verbrennungsprodukte (bis 1200° C und mehr) zu erreichen. Beim Einsatz solcher Lösungen wird eine wesentliche Einsparung von Treibstoff erreicht. Die Vorwärmung der Brennluft um 100° C ermöglicht es, bis zu 5 % Treibstoff einzusparen. So beträgt die Einsparung 50 % bei einer Temperatur im Ofenarbeitsraum von 1250 ° C und bei einer Luftvorwärmungstemperatur in der Regenerativgitterkammer von 1050° C im Vergleich zum Einsatz der Luft ohne Vorwärmung.

Die Benutzung dieser Erfindungen stellt auch eine Minderung des Kohlenstoffentzugs aus Stahl ohne die oben genannten negativen Auswirkungen der oxidationsarmen Erwärmung sicher, welche bei $\alpha < 1$ vorgenommen wird.

Die Verringerung der Wasserstoffanreicherung beim Einsatz des vorgeschlagenen Verfahrens und der Vorrichtungen kommt bei Erwärmung (Schmelzen) von nicht nur Titan sondern auch anderer Metalle und Legierungen, z.B. Magnesium und Aluminium, vor. Stahl ist auch anfällig für eine Wasserstoffanreicherung. Deshalb kommt der Verminderung der Wasserstoffanreicherung im Stahl beim Einsatz der Erfindung eine große positive Rolle für besonders kritische Stahlerzeugnisse zu.

## Patentansprüche

1. Verfahren zur thermischen Behandlung von Metallen (6) in einem Verbrennungsofen mit direkter (1) oder mit indirekter Heizung, wobei die Verbrennung eines Gemisches aus flüssigem oder gasförmigem Treibstoff und Warmluft bei einer bestimmten Luftüberschusszahl ($\alpha$) erfolgt,
   **dadurch gekennzeichnet,**
   **dass** zumindest während eines bestimmten Zeitraums der thermischen Behandlung die Verbrennung des genannten Treibstoff- und Luftgemisches bei einer Luftüberschusszahl ($\alpha$) vorgenommen wird, welche in einem Bereich von über 2,0 bis 6,0 ($2,0 \leq \alpha \leq 6,0$) eingestellt wird.

2. Verfahren nach Anspruch 1,
   **gekennzeichnet durch** die Verfahrensschritte:

   - Erwärmung bis zu einer Zwischentemperatur mit einer Luftüberschusszahl bis maximal 2,0, welche Zwischentemperatur sich **durch** eine Oberflächentemperatur der thermisch zu behandelnden Metalle auszeichnet, bei welcher Oberflächentemperatur der Oxidationsvorgang nur träge verläuft,
   - Erwärmung von der Zwischentemperatur bis zu einer Betriebstemperatur unter gleichzeitiger Erhöhung der Luftüberschusszahl bis zu einem Wert, welcher der Luftüberschusszahl bei Betriebstemperatur entspricht,
   - Halten der Betriebstemperatur mit einer Luflüberschusszahl in einem Bereich von über 2,0 bis 6,0.

3. Vorrichtung zum Heizen eines Verbrennungsofens mit direkter (1) oder mit indirekter Heizung zur Durchführung eines Verfahrens nach einem der Ansprüche 1 oder 2, umfassend:

   - einen geheizten Raum (3) mit einer Austrittsöffnung (17) für die Verbrennungsprodukte,
   - mindestens einen Brenner (8, 9) zur Verbrennung eines Gemisches aus flüssigem oder gasförmigem Treibstoff und Warmluft bei einer bestimmten Luftüberschusszahl ($\alpha$),
   - ein System zur Erwärmung und Zuführung der Luft zu jedem Brenner in der erforderlichen Menge (33, 20),

   **dadurch gekennzeichnet,**
   **dass** das System zur Erwärmung und Zuführung der Luft zu jedem Brenner in der erforderlicher Menge (33, 20) baumäßig so ausgebildet ist, dass die Erwärmung und Zuführung der Luft in solcher Menge erfolgt, welche die Luftüberschusszahl ($\alpha$) in einem einstellbaren Bereich von über 2,0 bis 6,0 sicherstellt.

4. Vorrichtung nach Anspruch 3,
   **gekennzeichnet durch**
   zwei Brenner (8, 9), welche **durch** das Steuer- und Schaltsystem in aufeinander folgenden Arbeitszyklen des Verbrennungsofens zyklisch abwechselnd betrieben sind, wobei die Warmluft dem jeweils aktiven Brenner (8, 9) zur Verbrennung mit dem flüssigen oder gasförmigen Treibstoff zugeführt wird.

5. Vorrichtung nach Anspruch 3 oder 4,
**dadurch gekennzeichnet,**
**dass** der Innenraum wenigstens einer Regenerativgitterkammer (44) in mindestens zwei Abschnitte (45, 46, 47) unterteilt ist, wobei zwischen benachbarten Abschnitten (45, 46, 47) jeweils ein Untergitterraum (48, 49) angeordnet ist, wobei jeder der Untergitterräume (48, 49) jeweils eine zusätzliche Eintritts- und Austrittsöffnung (51, 52) zu dem Innenraum der Regenerativkammer (44) mit einem zusätzlichen Absperrventil (54, 55) aufweist und jeder Abschnitt (45, 46, 47) des Innenraums mit einer Schicht wärmeübertragender Elemente gefüllt ist, für deren Gesamtvolumen

$$V_{max} = K\, \alpha_{max}\, B_1$$

gilt, mit dem Gesamtvolumen $V_{max}$ im $m^3$ der Schichten wärmeübertragender Elemente aller Abschnitte (45, 46, 47) und der maximalen Luftüberschusszahl

$$\alpha_{max} = \Sigma\, \alpha_I$$

wobei jedem i-ten Abschnitt (45, 46, 47) des Innenraums eine Luftüberschusszahl $\alpha_i$ zugeordnet ist, so dass durch Ein- bzw. Ausschaltung der jeweiligen Absperrventile (54, 55, 56) für beliebige Luftüberschusszahlen $\alpha$ im Bereich von $\alpha_i \le \alpha \le \alpha_{max}$ geeignete Kombinationen der Abschnitte (45, 46, 47) zur Erzeugung einer vorgegebenen Luftüberschusszahl a entsprechenden Menge Warmluft während eines mehrstufigen Verfahrens zur thermischen Behandlung von Metallen mit veränderlichen Luftüberschusszahlen $\alpha$ erhalten wird.

**Claims**

1. A method for heat treatment of metals (6) in a combustion furnace with direct (1) or indirect heating, in which the combustion of a mixture of liquid or gaseous fuel and warm air takes place at a defined air excess number ($\alpha$),
**characterized in that**
at least during a defined period of time of the heat treatment, the combustion of said fuel and air mixture is done at an air excess number ($\alpha$) which is adjusted within a range of from over 2.0 to 6.0 ($2.0 \le \alpha \le 6.0$).

2. The method according to claim 1,
**characterized by** the method steps of:

- heating up to an intermediate temperature with an air excess number up to a maximum of 2.0, which intermediate temperature is distinguished by a surface temperature of the metals to be heat-treated at which surface temperature the process of oxidation proceeds only sluggishly,
- heating from the intermediate temperature up to an operating temperature with a simultaneous increase in the air excess number up to a value which corresponds to the air excess number at the operating temperature,
- keeping the operating temperature at an air excess number in a range from over 2.0 to 6.0

3. An apparatus for heating a combustion furnace with direct (1) or indirect heating for performing a method according to one of claims 1 or 2, including:

- a heated chamber (3) with an outlet opening (17) for the products of combustion,
- at least one burner (8, 9) for combusting a mixture of liquid or gaseous fuel and warm air at a defined air excess number $\alpha$, and
- a system for heating and supplying the air to each burner in the requisite quantity (33, 20),

**characterized in that**
the system for heating and supplying the air to each burner in the requisite quantity (33, 20) is embodied structurally such that the heating and supplying of the air is done in a quantity such that the air excess number $\alpha$ in an adjustable range from over 2.0 to 6.0 is ensured.

4. The apparatus according to claim 3,

**characterized by**
two burners (8, 9) which are operated cyclically in alternation by the control and switching system in successive work cycles of the combustion furnace, the warm air for combustion with the liquid or gaseous fuel being supplied to whichever burner (8, 9) is active at the time.

5. The apparatus according to claim 3 or 4,
   **characterized in that**
   the interior of at least one regenerative chamber (44) is divided into at least two portions (45, 46, 47), and one under-grate chamber (48, 49) is disposed between each two adjacent portions (45, 46, 47), and each of the under-grate chambers (48, 49) has an additional inlet and outlet opening (51, 52) to the interior of the regenerative chamber (44) with an additional shutoff valve (54, 55), and each portion (45, 46, 47) of the interior is filled with a layer of heat-transmitting elements, for whose total volume the equation

$$V_{max} = K\, \alpha_{max}\, B_1$$

applies, the total volume $V_{max}$ bein in $m^3$ of the layers of heat-transmitting elements of all the portions (45, 46, 57), and the maximum air excess number being

and an air excess number $\alpha_i$ is assigned to each $i^{th}$ portion (45, 46, 47) of the interior, so that by switching the various shutoff valves (54, 55, 56) on and off for arbitrary air excess numbers $\alpha$ in the range of $\alpha_i \leq \alpha \leq \alpha_{max}$, suitable combinations of the portions (45, 46, 57) for generating a quantity of warm air corresponding to a predetermined air excess number a during a multi-stage method for heat treatment of metals with variable air excess numbers a are obtained.

## Revendications

1. Procédé de traitement thermique de métaux (6) dans un four à combustion à chauffage direct (1) ou indirect, la combustion d'un mélange d'un combustible liquide ou gazeux et d'air chaud ayant lieu avec un coefficient d'excès d'air ($\alpha$) défini,
   **caractérisé en ce**
   **qu'**au moins pendant une durée définie du traitement thermique, la combustion dudit mélange de combustible et d'air est effectuée avec un coefficient d'excès d'air ($\alpha$) qui est réglé dans la plage comprise entre 2,0 et 6,0 (2,0 $\leq$ $\alpha \leq$ 6,0).

2. Procédé selon la revendication 1,
   **caractérisé par** les étapes de procédé suivantes :

   - réchauffement jusqu'à une température intermédiaire avec un coefficient d'excès d'air de 2,0 au maximum, laquelle température intermédiaire se **caractérise par** une température de surface des métaux à traiter thermiquement, à laquelle température de surface le processus d'oxydation se déroule seulement lentement,
   - réchauffement de la température intermédiaire à une température de service avec élévation simultanée du coefficient d'excès d'air jusqu'à une valeur qui correspond au coefficient d'excès d'air à la température de service,
   - maintien de la température de service avec un coefficient d'excès d'air dans une plage comprise entre 2,0 et 6,0.

3. Dispositif pour chauffer un four à combustion à chauffage direct (1) ou indirect pour réaliser un procédé selon une des revendications 1 ou 2, comprenant :

   - une chambre chauffée (3) ayant une ouverture de sortie (17) pour les produits de combustion,
   - au moins un brûleur (8, 9) pour brûler un mélange d'un combustible liquide ou gazeux et d'air chaud avec un coefficient d'excès d'air ($\alpha$) défini,
   - un système pour réchauffer et amener l'air à chaque brûleur dans la quantité nécessaire (33, 20),

   **caractérisé en ce**

**que** le système pour réchauffer et amener l'air à chaque brûleur dans la quantité nécessaire (33, 20) est conçu et construit de façon que l'air soit réchauffé et amené dans une quantité telle que le coefficient d'excès d'air (α) soit assuré de se trouver dans une plage réglable comprise entre 2,0 et 6,0.

4. Dispositif selon la revendication 3,
**caractérisé par**
deux brûleurs (8, 9) qui sont actionnés tour à tour cycliquement dans des cycles de travail successifs du four à combustion par le système de commande et de commutation, l'air chaud étant amené au brûleur actif (8, 9) respectif pour la combustion avec le combustible liquide ou gazeux.

5. Dispositif selon la revendication 3 ou 4,
**caractérisé en ce**
**que** l'intérieur d'au moins une chambre à grille de régénération (44) est divisé en au moins deux sections (45, 46, 47), une sous-chambre à grille (48, 49) étant chaque fois disposée entre des sections (45, 46, 47) voisines, chacune des sous-chambres à grille (48, 49) présentant une ouverture d'entrée et de sortie supplémentaire (51, 52) vers l'intérieur de la chambre de régénération (44) avec une vanne d'arrêt supplémentaire (54, 55) et chaque section (45, 46, 47) de l'intérieur étant remplie d'une couche d'éléments caloporteurs, dont le volume total est donné par

$$V_{max} = K \, \alpha_{max} \, B_1,$$

avec le volume total $V_{max}$ en m$^3$ des couches d'éléments caloporteurs de toutes les sections (45, 46, 47) et le coefficient d'excès d'air maximum $\alpha_{max} = \sum \alpha_i$,
un coefficient d'excès d'air $\alpha_i$ étant associé à chaque i$^{ème}$ section (45, 46, 47) de l'intérieur, de sorte que par activation et désactivation des vannes d'arrêt (54, 55, 56) respectives, on obtient des combinaisons appropriées des sections (45, 46, 47) pour des coefficients d'excès d'air $\alpha$ quelconques dans la plage $\alpha_i \leq \alpha \leq \alpha_{max}$ afin de générer une quantité d'air chaud correspondant à un coefficient d'excès d'air $\alpha$ prédéfini pendant un procédé à plusieurs étages pour le traitement thermique de métaux avec des coefficients d'excès d'air $\alpha$ variables.

EP 1 995 333 B1

Fig. 1

Fig. 2

38

Fig. 3

Fig. 4

Fig. 5

Fig. 6

Fig. 7

Fig. 8a

Fig. 8b

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2139944
- RU 2099661
- RU 2166161
- US 4878480 A
- SU 1257110

- RU 2190170
- DE 3406956 A1
- KR 1020040021243 AA
- US 6880619 B1

**In der Beschreibung aufgeführte Nicht-Patentliteratur**

- **V.F. KOPYTOV.** *Stahlerwärmung in Öfen, Metallurgizdat, M.,* 1955, 152-153
- **K.M.PAKHALUEV ; V.I.MEDVEDEVA.** Untersuchung der Oxidation und des Kohlenstoffentzugs der Stahle in den Erdgasverbrennungsprodukten, Sammelwerk Metallerwärmung und Funktion der Anwärmeöfen, gesammelte Werke Nr. 6, Metallurgizdat. *Sverdlovsker Abteilung,* 1960, 87
- **S.N.KHOMOV ; M.A.GRIGORIEV ; S.M.SCHULKIN.** Wasserstoffanreicherung der Titanlegierungen bei Erwärmung in Verbrennungsöfen. *Verfahrenstechnik der Leichtlegierungen,* 1980, 57-62
- **K.M.PAKHALUEV ; V.I.MEDVEDEVA.** Untersuchung der Oxidation und des Kohlenstoffentzugs der Stahle in den Erdgasverbrennungsprodukten, Sammelwerk Metallerwärmung und Funktion der Anwärmeöfen, gesammelte Werke Nr. 6, Metallurgizdat. *Sverdlovsker Abteilung,* 1980, 91
- **K.M.PAKHALUEV ; V.I.MEDVEDEVA.** Untersuchung der Oxidation und des Kohlenstoffentzugs der Stahle in den Erdgasverbrennungsprodukten, Sammelwerk Metallerwärmung und Funktion der Anwärmeöfen, gesammelte Werke Nr. 6, Metallurgizdat. *Sverdlovsker Abteilung,* 1960, 80-91
- **M. A. KASSENKOV.** Heizeinrichtungen im Schmiedebetrieb. *Maschgiz,* 1962, 159-160
- **I.M. DISTERGEFT ; G. M. DRUZHININ ; V. I. SHSHERBININ.** Die Erfahrung von VNIIMT in der Entwicklung der regenerativen Heizsysteme für Hüttenanlagen. *Stahl,* 2000, 87-88
- **I. M. DISTERGEFT ; G. M. DRUZHININ ; V. I. SHSHERBININ.** Die Erfahrung von VNIIMT in der Entwicklung der regenerativen Heizsysteme für Hüttenanlagen. *Stahl,* 2000, 86-87

- **G. M. DRUZHININ ; I. M. DISTERGEFT ; V. A. LEONTYEV ; ANDERE.** Hauptrichtungen der Rekonstruktion des Ringofens zur Erwärmung der Blöcke. *Stahl,* 2005, 65-67
- **I. M. DISTERGEFT ; G. M. DRUZHININ ; V. I. SHSHERBININ.** Die Erfahrung von VNIIMT in der Entwicklung der regenerativen Heizsysteme für Hüttenanlagen. *Stahl,* 2000, 87-88
- **I. M. DISTERGEFT ; ANDERE.** Regenerative Heizsysteme für Erwärmungsöfen der Walz- und Schmiedebetriebe (Entwicklungsgeschichte, Theorie und Praxis), gesammelte Werke Hüttenfeuerungstechnik, Band 5, Ministerium für Bildung und Wissenschaft der Ukraine/ Nationalakademie der Ukraine für Metallurgie. *Dnepropetrovsk,* 2002, 44-57
- **KASJAEV M.D. ; MARKIN V.P. ; LISSIJENKO V.G. ; LOSHKAR'OV N.B ; KISSILEV YE.V. ; SAVELIEV V.A. ; ZMMERLING V.YA.** *Ekaterinburg,* 2000, 265-272
- **I. M. DISTERGEFT ; G. M. DRUZHININ ; P. V. MASLOV.** Über die Auswahl des Optimalkugeldurchmessers für Gitterkammern des Regenerativ-Heizsystems der Anwärmeöfen. Automatische Ofeneinheiten und energieeinsparende Technologien im Metallurgiebereich. *Unterlagen der 2. wissenschaftlichpraktischen Konferenz für Metallurgie,* 02. Dezember 2002, 142-144
- **YU.YA ; 20 ABRAMENKOV ; T.S.SYSOEVA.** Theoretische Analyse der Anwendung der regenerativen Zentralwärmeausnutzung für Erwärmungsöfen, Ministerium für Bildung und Wissenschaft der Ukraine/Nationalakademie der Ukraine für Metallurgie. *Dnepropetrovsk,* 2002, 186-195
- **I. M. DISTERGEFT ; G. M. DRUZHININ ; V. I. SHSHERBININ.** Die Erfahrung von VNIIMT in der Entwicklung der regenerativen Heizsysteme für Hüttenanlagen. *Stahl,* 2000, 86

- **I. M. DISTERGEFT ; ANDERE.** Regenerative Heizsysteme für Erwärmungsöfen der Walz- und Schmiedebetriebe (Entwicklungsgeschichte, Theorie und Praxis), gesammelte Werke Hüttenfeuerungstechnik, Band 5, Ministerium für Bildung und Wissenschaft der Ukraine/Nationalakademie der Ukraine für Metallurgie. *Dnepropetrovsk,* 2002, vol. 5, 47-48

- **M. DISTERGEFT ; G. M. DRUZHININ ; V. I. SHSHERBININ.** Die Erfahrung von VNIIMT in der Entwicklung der regenerativen Heizsysteme für Hüttenanlagen. *Stahl,* 2000, vol. 7, 86-87
- **I. M. DISTERGEFT ; G. M. DRUZHININ ; V. I. SHSHERBININ.** Die Erfahrung von VNIIMT in der Entwicklung der regenerativen Heizsysteme für Hüttenanlagen. *Stahl,* 2002, 84-90